# EUROPEAN PATENT SPECIFICATION

(11) **EP 4 123 369 B1**
(45) Date of publication and mention of the grant of the patent: **22.10.2025**
(21) Application number: 21772482.2
(22) Date of filing: 19.03.2021
(51) Int. Cl.: H04N 23/52, H04N 23/55, H04N 23/57, G02B 7/08, G02B 27/64, G03B 3/10, G03B 5/00, G03B 30/00, H02K 41/035, H04N 23/54, H04N 23/68

(54) **LENS DRIVING DEVICE, AND CAMERA MODULE AND OPTICAL DEVICE INCLUDING SAME**
LINSENANSTEUERUNGSVORRICHTUNG UND KAMERAMODUL SOWIE OPTISCHE VORRICHTUNG DAMIT
DISPOSITIF D'ENTRAÎNEMENT DE LENTILLE, AINSI QUE MODULE DE CAMÉRA ET DISPOSITIF OPTIQUE LE COMPRENANT

(30) Priority: 19.03.2020 KR 20200033748; 19.03.2020 KR 20200033791; 31.03.2020 KR 20200039080
(43) Date of publication of application: 25.01.2023
(60) Divisional application: 25202529.1
(73) Proprietor: LG Innotek Co., Ltd., Seoul 07796 (KR)
(72) Inventor: LEE, Jun Taek, Seoul 07796 (KR); MUN, Chung Min, Seoul 07796 (KR); SHIN, Min Jung, Seoul 07796 (KR)
(74) Representative: DREISS Patentanwälte PartG mbB
(86) International application number: PCT/KR2021/003426
(87) International publication number: WO 2021/187943

(56) References cited:
- WO-A1-2018/016790
- KR-A- 20140 078 256
- KR-A- 20140 119 360
- KR-A- 20190 136 269
- KR-A- 20190 136 269
- US-A1- 2014 362 284
- US-A1- 2015 296 143
- US-A1- 2016 277 684

## Description

### [Technical Field]

Embodiments relate to a lens moving apparatus, and a camera module and optical instrument including the same.

### [Background Art]

KR 2019 0136269 A discloses a lens driving device, which comprises a housing, a bobbin arranged in the housing, a coil arranged in the bobbin, a magnet arranged in the housing, and an elastic member coupled to the bobbin. The elastic member includes a body and an extension part extending from the body. The bobbin includes a first surface and a second surface forming a step with the first surface. The body is arranged on the first surface of the bobbin. The extension part includes a first region coupled to the coil and bent in a direction toward the second surface of the bobbin in the body. These measures are intended to reduce a size in an optical axis direction and to improve a solderability between the coil and an elastic part. US 2016/277684 A1 discloses a lens moving apparatus including a bobbin having a lens barrel, a housing configured to accommodate the bobbin, an upper elastic member coupled to the bobbin and the housing, a lower elastic member coupled to the bobbin and the housing, a first coil disposed on the bobbin, a first magnet disposed on the housing, a circuit board disposed below the housing, a second coil disposed on the circuit board, a first sensor to output a first output signal based on a sensed result of a magnetic field strength of the first magnet, a first capacitor connected in parallel to the first sensor. US 2015/296143 A1 discloses a camera module including a lens unit configured to move in a direction of an optical axis and a direction perpendicular with respect to the optical axis. A housing unit accommodates the lens unit. A shock absorbing member is disposed between the housing unit and the lens unit to reduce impacts and noise generated when the housing unit and the lens unit collide. It is difficult to apply technology of a voice coil motor (VCM) used in existing general camera modules to a subminiature, low-power camera module, and therefore research related thereto has been actively conducted.

Demand for and production of electronic products, such as smartphones and mobile phones equipped with cameras, have increased. A camera for mobile phones is on a trend of increased resolution and miniaturization. As a result, an actuator has also been miniaturized, increased in diameter, and increased in functionality. In order to realize a high-resolution camera for mobile phones, improvement in performance of the camera for mobile phones and additional functions thereof, such as autofocus, handshake compensation, and zooming, are required.

### [Disclosure]

### [Technical Problem]

Embodiments provide a lens moving apparatus capable of preventing damage to a bobbin, a cover member, and a base due to shock and inhibiting fluctuation in stroke range of the bobbin in an optical-axis direction, and a camera module and an optical instrument including the same.

In addition, embodiments provide a camera module and an optical instrument capable of improving the degree of freedom in lens selection and improving reliability in AF driving.

In addition, embodiments provide a camera module and an optical instrument capable of reducing a defect rate of an image sensor due to stain caused by foreign matter, improving the degree of freedom in design of a holder, and preventing a decrease in force of coupling between the holder and a base.

### [Technical Solution]

The invention is as defined in claim 1.

The upper surface of the bobbin may include a first surface and a second surface having a stair formed together with the first surface in the optical-axis direction, the second surface being located lower than the first surface, and the first buffer may be disposed on the second surface.

The bobbin may be provided in the upper surface thereof with a recess, at least a part of the boss may be disposed in the recess, and the distance between a bottom of the recess and the at least a part of the boss in the optical-axis direction may be equal to or less than a distance between the first buffer and the inner surface of the upper plate of the cover member in the optical-axis direction.

The first surface may be provided with a recess, at least a part of the boss may be disposed in the recess, and the distance between a bottom of the recess and the at least a part of the boss in the optical-axis direction may be equal to or less than the distance between the first buffer and the inner surface of the upper plate of the cover member in the optical-axis direction.

Stiffness of the first buffer may be less than stiffness of the cover member and stiffness of the bobbin.

The lens moving apparatus may include a second buffer disposed on an upper surface of the base, a first stopper provided on a lower surface of the bobbin, and a second stopper provided on the upper surface of the base so as to correspond to or to be opposite to the first stopper in the optical-axis direction, wherein the distance between the first stopper and the second stopper in the optical-axis direction may be equal to or less than the distance between the second buffer and the lower surface of the bobbin in the optical-axis direction.

The upper surface of the base may include a 1-1 surface and a 1-2 surface having a stair formed together with the 1-1 surface in the optical-axis direction, the 1-2 surface being located lower than the 1-1 surface, and the second stopper and the second buffer may be disposed on the 1-2 surface.

Stiffness of the second buffer may be less than stiffness of the base and stiffness of the bobbin.

The cover member may include a boss extending in a direction from the upper plate to the bobbin, and the distance between the boss and the upper surface of the bobbin in the optical-axis direction may be equal to or less than the distance between the buffer and the first surface in the optical-axis direction. Stiffness of the buffer may be less than stiffness of the cover member and stiffness of the bobbin.

A camera module according to an embodiment includes a lens module configured to be moved in an optical-axis direction, a holder disposed under the lens module, the holder including an opening and an inner surface formed by the opening, a filter disposed in the opening of the holder, an adhesive member disposed between an outer surface of the filter and the inner surface of the holder, and an image sensor disposed under the filter, wherein the inner surface of the holder includes a first surface and a second surface, the interior angle between the first surface and the second surface is an obtuse angle, and the adhesive member is disposed on the first surface and the second surface.

The filter may not overlap the holder in the optical-axis direction.

The first surface may abut or may be adjacent to an upper surface of the holder, the second surface may be located between the first surface and a lower surface of the holder, and the upper surface of the holder may be a surface opposite to the lens module.

The adhesive member may include a first portion disposed between the first surface and a first region of the outer surface of the filter and a second portion disposed between the second surface and a second region of the outer surface of the filter.

The length of the first portion of the adhesive member in a horizontal direction may be increased in a direction from the lower surface of the holder to the upper surface of the holder.

The lower surface of the filter may be located at the same height as or higher than the lower surface of the holder based on an upper surface of the image sensor, and may be located lower than a corner at which the first surface and the second surface join each other.

The upper surface of the filter may be located at the same height as or lower than the upper surface of the holder based on the upper surface of the image sensor, and may be located higher than the corner at which the first surface and the second surface join each other.

The outer surface of the filter may overlap the first surface and the second surface in a direction perpendicular to the optical axis.

The interior angle between the upper surface of the holder and the first surface may be an obtuse angle, and the second surface may be perpendicular to the upper surface of the holder.

The first surface may abut or may be adjacent to the lower surface of the holder, the second surface may be located between the first surface and the upper surface of the holder, the upper surface of the holder may be a surface opposite to the lens module, the lower surface of the holder may be an opposite surface of the upper surface of the holder, and the filter may not overlap the holder in the optical-axis direction.

The seating portion may include a bottom surface, a side surface connected to the bottom surface, and an opening formed in the bottom surface, the filter may be disposed on the bottom surface of the seating portion, and the foreign matter adsorption portion may overlap the bottom surface of the seating portion in the optical-axis direction.

The foreign matter adsorption portion may be formed so as to have a predetermined width at each side of the upper surface of the filter.

The foreign matter adsorption portion may be disposed in an edge region of the upper surface of the filter, and may be configured as a light blocking member.

The foreign matter adsorption portion may include a plurality of adsorption portions disposed on the upper surface of the filter so as to be spaced apart from each other.

A light blocking member disposed between the foreign matter adsorption portion and the upper surface of the filter may be included.

The foreign matter adsorption portion may include a plurality of adsorption portions disposed on an upper surface of the light blocking member so as to be spaced apart from each other.

The foreign matter adsorption portion may include a first portion configured to overlap the light blocking member in the optical-axis direction and a second portion configured not to overlap the light blocking member in the optical-axis direction.

The foreign matter adsorption portion and the light blocking member may not overlap an active region of the image sensor in the optical-axis direction.

The camera module is as defined in claim 15.

### [Advantageous Effects]

According to embodiments, a buffer is provided at an auxiliary shock point, whereby it is possible to prevent damage to a bobbin, a cover member, and a base due to shock and to inhibit fluctuation in stroke range of the bobbin in an optical-axis direction.

According to embodiments, a holder is not provided with a supporting portion that overlaps a filter in the optical-axis direction, whereby it is possible to increase the height margin of a camera module in the optical-axis direction and to prevent a decrease in distance between an image sensor and a lens module, and therefore it is possible to improve the degree of freedom in lens selection.

In addition, according to embodiments, it is possible to sufficiently secure the distance between the filter and the lens module, whereby it is possible to inhibit limitation in stroke of a lens moving apparatus in the optical-axis direction when the thickness of the filter is large, and therefore it is possible to improve reliability in AF driving.

According to embodiments, a foreign matter adsorption portion may be adjacent to an active area of the image sensor so as to collect foreign matter, whereby it is possible to reduce a defect rate of the image sensor due to stains caused by foreign matter. In addition, according to embodiments, the area of the foreign matter collection portion formed at the holder may be reduced or no foreign matter collection portion may be formed at the holder, whereby the degree of freedom in design of the holder may be improved. In addition, according to embodiments, it is possible to sufficiently secure the area of an upper surface of the holder on which an adhesive member is coated, whereby it is possible to prevent a decrease in force of coupling between the holder and the base.

### [Description of Drawings]

FIG. 1 is a separated perspective view of a lens moving apparatus according to an embodiment.
FIG. 2 is a coupled view of the lens moving apparatus with a cover member removed.
FIG. 3A is an upper perspective view of a bobbin shown in FIG. 1.
FIG. 3B is an upper perspective view of the bobbin and a first buffer.
FIG. 3C is a lower perspective view of the bobbin and a coil.
FIG. 4A is a perspective view of a housing shown in FIG. 1.
FIG. 4B is a coupled view of the housing and a magnet.
FIG. 5 is a separated perspective view of a lower elastic member and a base.
FIG. 6A is a perspective view of the base and a second buffer.
FIG. 6B shows a lower surface of the bobbin corresponding to the second buffer.
FIG. 7 is a coupled perspective view of the base, the second buffer, and the lower elastic member.
FIG. 8 is a sectional view of the lens moving apparatus in direction AB of FIG. 2.
FIG. 9 is a sectional view of the lens moving apparatus in direction CD of FIG. 2.
FIG. 10 is a sectional view of a part of the lens moving apparatus according to the embodiment.
FIG. 11A is a lower perspective view of a third buffer and a cover member.
FIG. 11B is a partial sectional view of the lens moving apparatus.
FIG. 12 is an exploded perspective view of a camera module according to an embodiment.
FIG. 13 is a perspective view of a camera module according to another embodiment.
FIG. 14 is a separated perspective view of the camera module of FIG. 13.
FIG. 15 is a sectional view of the camera module in direction AB of FIG. 13.
FIG. 16A is a perspective view of a holder.
FIG. 16B is a sectional view of the holder in direction CD of FIG. 16A.
FIG. 17A is a perspective view of the holder and a first adhesive member.
FIG. 17B is a sectional view of the holder and the first adhesive member in direction CD of FIG. 17A.
FIG. 17C is a bottom perspective view of the holder and a filter.
FIG. 18A is a perspective view of the holder, the first adhesive member, and the filter.
FIG. 18B is a sectional view of the holder, the first adhesive member, and the filter in direction CD.
FIG. 19 is a sectional view of a part of the camera module according to the other embodiment.
FIG. 20 is an enlarged view of a dotted-line portion of FIG. 19.
FIG. 21 shows solders configured to conductively connect a circuit board and first and second terminals of first and second lower elastic members to each other.
FIG. 22 is a sectional view of a part of a camera module including a holder according to another embodiment.
FIG. 23 is a plan view of a holder according to a further embodiment.
FIG. 24 is a sectional view of the holder in direction **EF** of FIG. 23.
FIG. 25 is a separated perspective view of a camera module according to a further embodiment.
FIG. 26 is a coupled perspective view of the camera module of FIG. 25.
FIG. 27 is a separated perspective view of a lens moving apparatus of FIG. 25.
FIG. 28 is a sectional view of the camera module in direction AB of FIG. 26.
FIG. 29 is a separated perspective view of an image sensor unit of FIG. 25.
FIG. 30 is a separated perspective view of a foreign matter adsorption portion, a filter, and a holder of FIG. 29.
FIG. 31 is a perspective view of the holder.
FIG. 32 is a coupled perspective view of the holder, the filter, and the foreign matter adsorption portion.
FIG. 33 is a bottom perspective view of the holder.
FIG. 34A is a sectional view of the image sensor unit of FIG. 29 in direction AB of FIG. 26.
FIG. 34B is a partial enlarged view of the sectional view of FIG. 34A.
FIG. 35 shows solders configured to conductively connect a circuit board and first and second lower elastic members to each other.
FIG. 36 is a separated perspective view of an image sensor unit according to another embodiment.
FIG. 37 is a partial enlarged view of the sectional view of the image sensor unit of FIG. 36.
FIG. 38 shows another embodiment of a foreign matter adsorption portion of FIG. 37.
FIG. 39 shows a further embodiment of the foreign matter adsorption portion of FIG. 37.
FIG. 40 shows another embodiment of the foreign matter adsorption portion of FIG. 32.
FIG. 41 shows a further embodiment of the foreign matter adsorption portion of FIG. 32.
FIG. 42 shows another embodiment of the foreign matter adsorption portion of FIGs. 36 and 37.
FIG. 43 shows a further embodiment of the foreign matter adsorption portion of FIGs. 36 and 37.
FIG. 44 is a perspective view of a portable terminal according to an embodiment.
FIG. 45 is a view showing the construction of the portable terminal shown in FIG. 44.

### [Best Mode]

Reference will now be made in detail to embodiments, examples of which are illustrated in the accompanying drawings.

In addition, terms, (including technical and scientific terms) used in embodiments have the same meanings as those commonly understood by a person having ordinary skill in the art to which the disclosure pertains, unless otherwise defined, and it will be further understood that commonly used terms, such as those defined in dictionaries, should be interpreted as having meanings consistent with their meanings in the context of the relevant art.

In addition, the terms used in embodiments are provided to explain embodiments, but are not intended to restrict the disclosure. In this specification, a singular representation may include a plural representation unless otherwise defined, and in the case in which "at least one (or one or more) of A, B, and C" is described, one or more of all combinations constituted by A, B, and C may be included.

Also, in describing the components of the disclosure, terms such as "first," "second," "A," "B," "(a)," and "(b)" may be used. These terms are used only for the purpose of distinguishing one constituent from another, and the terms do not limit the nature, order or sequence of the components.

When one component is said to be "connected," "coupled," or "linked" to another, this may mean not only that the one component is directly connected, coupled, or linked to the other one but also that the one component is "connected," "coupled," or "linked" to the other one via yet another component interposed therebetween. In addition, it will be understood that when an element is referred to as being "on" or "under" another element, it can be directly on/under the element, and one or more intervening elements may also be present. When an element is referred to as being "on" or "under," "under the element" as well as "on the element" can be included based on the element.

"Autofocus" means automatically focusing on a subject to form an image of the subject on the surface of an image sensor. A lens moving apparatus according to an embodiment may perform an autofocus operation to move an optical module including at least one lens in a first direction.

Hereinafter, the lens moving apparatus may be referred to as a lens moving unit, a voice coil motor (VCM), or an actuator. Hereinafter, the term "coil" may be referred to as a coil unit, and the term "elastic member" may be referred to as an elastic unit or a spring.

Also, in the following description, the term "terminal" may be referred to as a pad, an electrode, a conductive layer, or a bonding portion.

For convenience of description, a lens moving apparatus according to an embodiment will be described using a Cartesian coordinate system (x, y, z). However, other different coordinate systems may be used, and the disclosure is not limited thereto. In the drawings, an x-axis direction and a y-axis direction are directions perpendicular to a z-axis direction, which is an optical-axis direction. The z-axis direction, which is the optical-axis direction, may be referred to as a "first direction," the x-axis direction may be referred to as a "second direction," and the y-axis direction may be referred to as a "third direction."

Shock may be applied to an injection-molded product (e.g. a bobbin) or a lens due to external shock factors, such as an AF driving or vehicle vibration test, and parts of the lens moving apparatus may be damaged by the shock.

With an increase in number of pixels of an image sensor of a camera module, the size of a lens mounted in the lens moving apparatus is increased. Stress applied to an elastic member and an injection-molded product (e.g. a bobbin) of the lens moving apparatus is increased due to an increase in size of the lens. Such an increase in stress may aggravate the influence on (e.g. damage to) the lens moving apparatus due to external shock.

A lens moving apparatus according to an embodiment may be provided with buffers 31, 32, and 33, whereby it is possible to prevent damage to components or parts of the lens moving apparatus due to external shock.

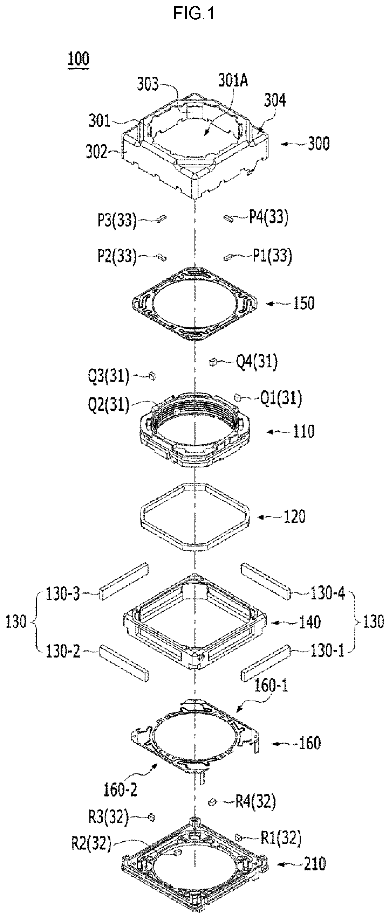

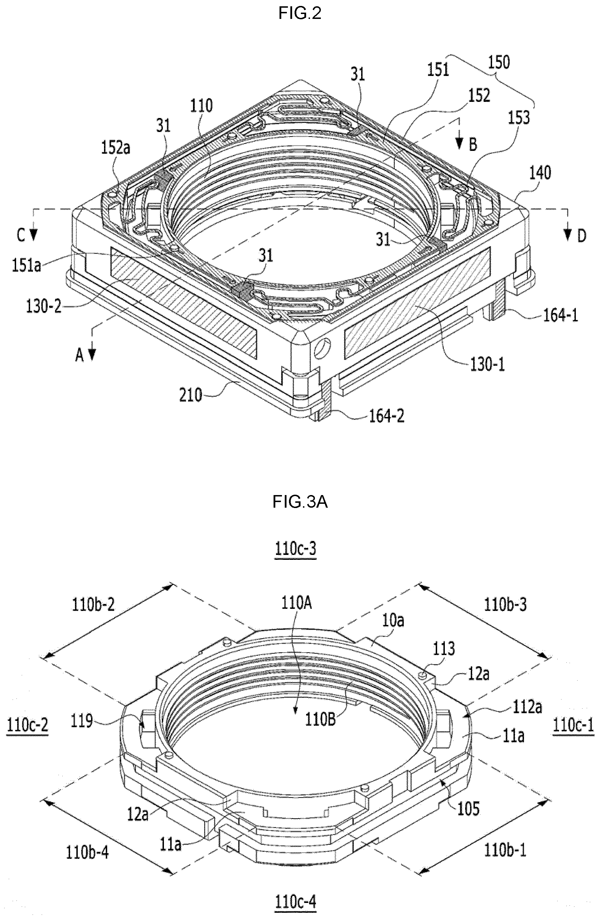

FIG. 1 is a separated perspective view of a lens moving apparatus 100 according to an embodiment, and FIG. 2 is a coupled view of the lens moving apparatus 100 with a cover member 300 removed.

Referring to FIGs. 1 and 2, the lens moving apparatus 100 includes a bobbin 110, a coil 120, a magnet 130, a housing 140, and a first buffer 31.

The lens moving apparatus 100 further includes a base 210.

In addition, the lens moving apparatus 100 further includes at least one of an upper elastic member 150, a lower elastic member 160, and a cover member 300.

First, the cover member 300 will be described.

The cover member 300 may define a receiving space together with the base 210, and may receive the above components of the lens moving apparatus 100.

The cover member 300 may be formed in the shape of a box, a lower portion of which is open and which includes an upper plate 301 and side plates 302 connected to the upper plate 301. Lower ends of the side plates 302 of the cover member 300 may be coupled to stairs 211 of the base 210 via an adhesive member or a sealing member. When viewed from above, the shape of the upper plate 301 of the cover member 300 may be polygonal, e.g. quadrangular or octagonal.

The cover member 300 may be provided in the upper plate 301 thereof with an opening, hole, or hollow 301A, through which a lens (not shown) coupled to the bobbin 110 is exposed to external light.

The cover member 300 may be made of a nonmagnetic material, such as SUS, in order to prevent a phenomenon in which the magnet 130 attracts the cover member. Alternatively, the cover member may be made of a magnetic material so as to perform the function of a yoke. For example, the cover member 300 may be made of a metal or plastic material; however, the disclosure is not limited thereto.

The cover member 300 may be provided with a boss 303 extending in a direction from the upper plate 301 to the bobbin 110. The boss 303 may be referred to as an "extension portion."

The cover member 300 may be provided with at least one boss 303 extending in a direction from one region adjacent to the hollow 301A formed in the upper plate 301 to an upper surface of the bobbin 110.

For example, the cover member 300 may be provided with four bosses corresponding to four corners of the upper plate 301; however, the disclosure is not limited thereto.

At least a part of the boss 303 of the cover member 300 may be disposed in or inserted into a recess 119 provided in the upper surface of the bobbin 110. For example, one end or a distal end of the boss 303 may be disposed in the recess 119.

A stair portion 304 having a stair formed together with an upper surface of the upper plate 301 in the optical-axis direction may be provided at each corner region of the upper plate 301 of the cover member 300. The stair portion 304 may include a surface located lower than the upper surface of the upper plate 301.

As the result of movement of the bobbin 110 in the optical-axis direction due to AF driving, the boss 303 of the cover member 300 may abut a bottom surface of the recess 119 of the bobbin 110, whereby the boss 303 may serve as a stopper that limits the movement of the bobbin 110 in an upward direction within a predetermined range.

Alternatively, in another embodiment in which the magnet is disposed on each corner of the housing, the boss 303 of the cover member 300 may perform the function of a yoke, and may be referred to as an inner yoke.

In a further example, the housing 140 may be omitted, and the boss of the cover member 300 may support or fix the magnet.

Next, the bobbin 110 will be described.

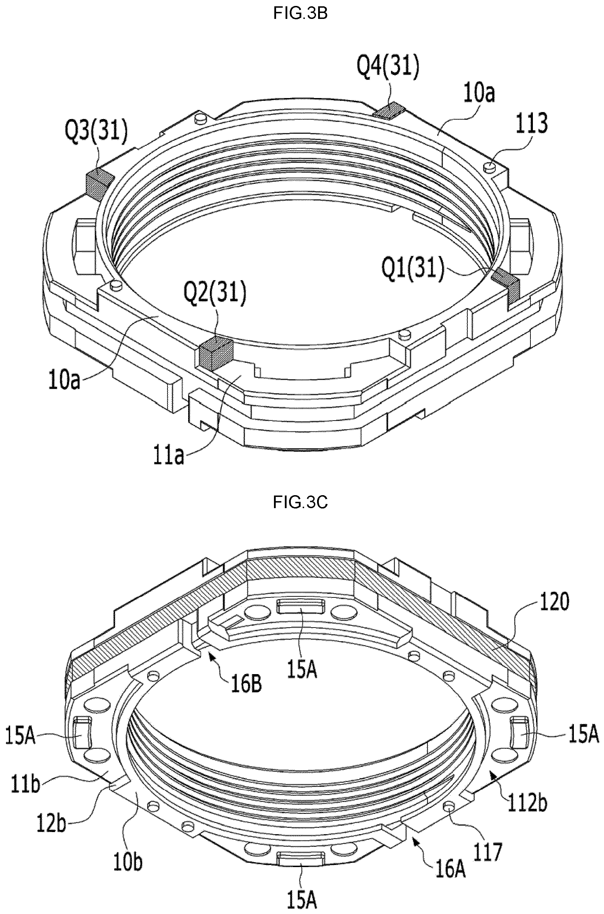

FIG. 3A is an upper perspective view of the bobbin 110 shown in FIG. 1, FIG. 3B is an upper perspective view of the bobbin 110 and the first buffer, and FIG. 3C is a lower perspective view of the bobbin 110 and the coil 120.

Referring to FIGs. 3A to 3C, the bobbin 110 may be disposed in the housing 140, and may be moved in the optical-axis (OA) direction or a direction parallel to the optical axis as the result of electromagnetic interaction between the coil 120 and the magnet 130.

The bobbin 110 may have an opening or hollow 110A, in which a lens or a lens barrel is mounted. The shape of the opening or hollow 110A of the bobbin 110 may coincide with the shape of the lens or the lens barrel mounted therein, and may be circular, oval, or polygonal; however, the disclosure is not limited thereto. For example, the opening or hollow 110A of the bobbin 110 may be a through-hole formed through the bobbin 110 in the optical-axis direction.

The lens or the lens module may be directly coupled to an inner surface of the bobbin 110. However, the disclosure is not limited thereto. For example, the bobbin 110 may include a lens barrel (not shown), in which at least one lens is installed, and the lens barrel may be coupled to the inner surface of the bobbin 110 in various manners. For example, a screw thread 110B for coupling with the lens or the lens module may be provided in the inner surface of the bobbin 110.

The bobbin 110 may be provided at the upper surface, an upper portion, or an upper end thereof with at least one first coupling portion 113 configured to be coupled and fixed to an inner frame 151 of the upper elastic member 150.

The bobbin 110 may be provided at a lower surface, a lower portion, or a lower end thereof with at least one second coupling portion 117 configured to be coupled and fixed to an inner frame 161 of the lower elastic member 160.

For example, in FIGs. 3A and 3B, each of the first coupling portion 113 and the second coupling portion 117 of the bobbin 110 is a boss; however, the disclosure is not limited thereto. In another embodiment, at least one of the first and second coupling portions of the bobbin 110 may be a coupling recess or a flat surface.

A first escape recess 112a is provided in one region of the upper surface of the bobbin 110 corresponding to or aligned with a first frame connection portion 153 of the upper elastic member 150.

In addition, a second escape recess 112b is provided in a region of the lower surface of the bobbin 110 corresponding to or aligned with a second frame connection portion 163 of the lower elastic member 160.

For example, each of the first escape recess 112a and the second escape recess 112b may be open to an outer surface of the bobbin 110; however, the disclosure is not limited thereto. In another embodiment, each of the first escape recess and the second escape recess may not be open to the outer surface of the bobbin 110.

When the bobbin 110 is moved in a first direction, spatial interference between the first and second frame connection portions 153 and 163 and the bobbin 110 may be avoided by the first escape recess 112a and the second escape recess 112b of the bobbin 110, whereby the first and second frame connection portions 153 and 163 of the upper and lower elastic members 150 and 160 may be more easily elastically deformed.

According to the invention, the first frame connection portion of the upper elastic member and the bobbin are designed so as not to interfere with each other, and the first escape recess and/or the second escape recess may not be provided in the bobbin.

For example, the bobbin 110 may be provided in the outer surface thereof with at least one recess 105, in which the coil 120 is disposed.

The coil 120 may be disposed or seated in the recess 105 of the bobbin 110.

For example, the coil 120 may be directly wound or turned in the recess 105 of the bobbin 110 so as to be wound in a clockwise direction or in a counterclockwise direction based on the optical axis OA.

The shape and number of recesses 105 of the bobbin 110 may correspond to the shape and number of coils disposed on the outer surface of the bobbin 110. In another embodiment, the bobbin 110 may be provided with no recess in which the coil is seated, and the coil 120 may be directly wound or turned around the outer surface of the bobbin 110 having no recess so as to be fixed thereto.

A recess 119 corresponding to the boss 303 of the cover member 300 may be formed in the upper surface of the bobbin 110. For example, the recess 119 may be formed in the first escape recess 112a; however, the disclosure is not limited thereto.

The bobbin 110 may be provided in a lower end of the outer surface thereof with at least one recess 16A and 16B, through which a start line (e.g. one end) or an end line (e.g. the other end) of the coil 120 extends.

The upper surface of the bobbin 110 may include a first surface 10a and a second surface 11a having a stair formed together with the first surface 10a in the optical-axis direction.

The upper surface of the bobbin 110 may include a third surface 12a configured to connect the first surface 10a and the second surface 11a to each other.

For example, the second surface 11a may be located lower than the first surface 10a. For example, the distance between the lower surface of the bobbin 110 and the second surface 11a may be less than the distance between the lower surface of the bobbin 110 and the first surface 10a.

For example, the first surface 10a and the second surface 11a may be parallel to each other; however, the disclosure is not limited thereto. In another embodiment, both may not be parallel to each other.

For example, the first surface 10a and the second surface 11a may be perpendicular to the optical axis; however, the disclosure is not limited thereto. In another embodiment, both may not be perpendicular to the optical axis.

For example, the third surface 12a may be perpendicular to at least one of the first surface 10a and the second surface 11a; however, the disclosure is not limited thereto, and the third surface 12a may not be perpendicular to the first surface 10a and the second surface 11a.

For example, the first coupling portion 113 may be formed on the first surface 10a of the upper surface of the bobbin 110.

For example, a bottom surface of the first escape recess 112a may be the same surface as the second surface 11a.

For example, the recess 119 may be formed in the second surface 11a, and the bottom surface of the recess 119 may be located lower than the second surface 11a. For example, the distance between the lower surface of the bobbin 110 and the bottom surface of the recess 119 may be less than the distance between the lower surface of the bobbin 110 and the second surface 11a.

The first buffer 31 may be disposed on the upper surface of the bobbin 110 corresponding to or opposite to the upper plate 301 of the cover member 300 in the optical-axis direction. The first buffer 31 may not overlap the boss 303 of the cover member 300 in the optical-axis direction.

For example, the first buffer 31 may be formed on the second surface 11a of the upper surface of the bobbin 110.

A lower surface of the first buffer 31 may contact the second surface 11a of the upper surface of the bobbin 110. In addition, for example, the first buffer 31 may contact the third surface 12a of the upper surface of the bobbin 110.

The first buffer 31 is disposed in the first escape recess 112a. The first buffer 31 may contact the bottom surface of the first escape recess 112a. In addition, the first buffer 31 may contact a side surface of the first escape recess 112a.

The first buffer 31 may include at least one buffer stopper Q1 to Q4. Here, the buffer stopper may be referred to as a "shock absorption portion."

For example, the first buffer 31 may include four buffer stoppers Q1 to Q4 spaced apart from each other.

Each of the buffer stoppers Q1 to Q4 may be disposed in a corresponding one of the first escape recesses 112a of the bobbin 110.

For example, the first buffer 31 may be disposed in a region in which an edge of the second surface 11a and one end of the third surface 12a contacts each other; however, the disclosure is not limited thereto.

As shown in FIG. 2, the first buffer 31 does not overlap the first connection portion 153 of the upper elastic member 150 in the optical-axis direction. In addition, for example, the first buffer 31 is spaced apart from the first connection portion 153 of the upper elastic member 150.

In another example, the first buffer may overlap the first connection portion 153 of the upper elastic member 150 in the optical-axis direction. In addition, for example, in another embodiment, the first buffer may contact the first connection portion 153 of the upper elastic member 150.

An upper surface of the first buffer 31 may be the same plane as the first surface 10a of the bobbin 110; however, the disclosure is not limited thereto. In another embodiment, the upper surface of the buffer 31 may be higher or lower than the first surface 10a.

For example, the length (or the thickness) of the first buffer 31 in the optical-axis direction may be equal to that of the stair between the first surface 10a and the second surface 11a of the upper surface of the bobbin 110; however, the disclosure is not limited thereto. In another embodiment, for example, the length (or the thickness) of the first buffer 31 in the optical-axis direction may be greater or less than that of the stair between the first surface 10a and the second surface 11a of the upper surface of the bobbin 110.

The distance between the boss 303 and the upper surface of the bobbin 110 in the optical-axis direction may be equal to or less than the distance between the first buffer 31 and an inner surface of the upper plate of the cover member 300 in the optical-axis direction.

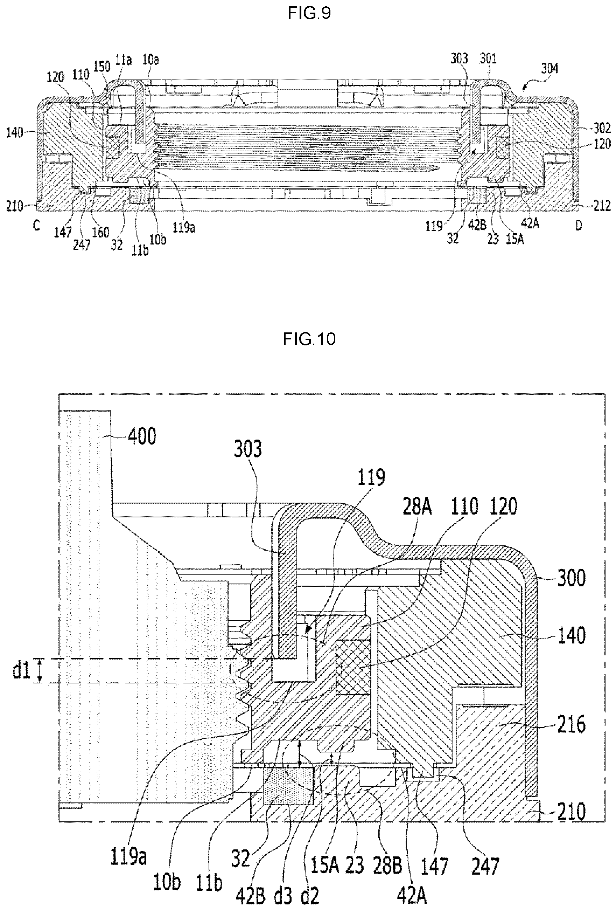

In addition, for example, at an initial position of an AF operation unit, the distance d1 (see FIG. 10) between the boss 303 and a bottom surface 119a of the recess 119 of the bobbin 110 in the optical-axis direction may be less than the distance between the inner surface of the upper plate 301 of the cover member 300 and the first buffer 310 in the optical-axis direction. Alternatively, in another embodiment, d1 may be equal to the distance between the inner surface of the upper plate 301 of the cover member 300 and the first buffer 310 in the optical-axis direction.

At the time of AF driving, the boss 303 of the cover member 300 may correspond to a main shock point, and the buffer 31 may correspond to an auxiliary shock point.

The initial position of the AF operation unit may be the original position of the AF operation unit in the state in which no driving signal or no electric power is applied to a first coil 1120 or the position at which the AF operation unit is located as the result of the upper and lower elastic members 150 and 160 being elastically deformed due only to the weight of the AF operation unit.

In addition, the initial position of the AF operation unit may be the position at which the AF operation unit is located when gravity acts in a direction from the bobbin 110 to the base 210 or when gravity acts in a direction from the base 210 to the bobbin 110.

For example, the AF operation unit may be the bobbin 110. Alternatively, for example, the AF operation unit may include the bobbin 110 and components (e.g. the coil 120) coupled to the bobbin 110. The AF operation unit may further include the lens or the lens barrel coupled to the bobbin 110.

In FIG. 3B, the first buffer 31 is disposed on the second surface 11a of the upper surface of the bobbin 110; however, a first buffer according to another example may be disposed in one region of the inner surface of the upper plate 301 of the cover member 300 corresponding to the second surface 11a of the upper surface of the bobbin 110. In this case, d1 may be equal to or less than the distance between the first buffer and the one region of the inner surface of the upper plate 301 of the cover member 300 in the optical-axis direction.

Next, the coil 120 will be described.

The coil 120 may be disposed on the bobbin 110, may be coupled or connected to the bobbin 110, or may be supported by the bobbin 110.

For example, the coil 120 may be disposed on the outer surface of the bobbin 110 and performs electromagnetic interaction with the magnet 130 disposed on the housing 140. In order to generate electromagnetic force due to interaction with the magnet 130, electric power may be supplied to the coil 120 or a driving signal may be applied to the coil.

The driving signal applied to the coil 120 may be a direct-current signal, such as direct-current current (or direct-current voltage). Alternatively, in another embodiment, the driving signal applied to the coil 120 may include an alternating-current signal and a direct-current signal.

The bobbin 110 elastically supported by the upper and lower elastic members 150 and 160 may be moved in the optical-axis direction or the first direction by electromagnetic force due to electromagnetic interaction between the coil 120 and the magnet 130.

The AF operation unit may be unidirectionally or bidirectionally driven by electromagnetic force due to electromagnetic interaction between the coil 120 and the magnet 130. Here, unidirectional driving means that the AF operation unit is moved in one direction, such as an upward direction (e.g. an upward direction (+Z-axis direction) from the initial position of the AF operation unit, and bidirectional driving means that the AF operation unit is moved in two directions (e.g. an upward direction or a downward direction) from the initial position of the AF operation unit.

The intensity and/or polarity (e.g. the current flow direction) of driving signal provided to the coil 120 may be controlled, whereby movement of the AF operation unit (e.g. the bobbin 110) in the first direction may be controlled, and therefore an autofocus function may be performed.

The coil 120 may be disposed on the bobbin 110 so as to have a closedloop shape (e.g. a ring shape).

For example, the coil 120 may wrap the outer surface of the bobbin 110, and may have a ring shape in which the coil is wound about the optical axis in the clockwise direction or the counterclockwise direction.

In another embodiment, the coil 120 may be realized in the form of a coil ring wound about an axis perpendicular to the optical axis in the clockwise direction or the counterclockwise direction, and the number of coil rings may be equal to the number of magnets 130; however, the disclosure is not limited thereto.

The coil 120 may be conductively connected to at least one of the upper elastic member 150 and the lower elastic member 160, and a driving signal may be applied to the coil 120 through at least one of the upper and lower elastic members 150 and 160.

For example, the coil 120 may be coupled to elastic units 160-1 and 160-2 of the lower elastic member 160 by a solder or a conductive adhesive, and a driving signal may be provided to the coil 120 through the elastic units 160-1 and 160-2.

Next, the housing 140 will be described.

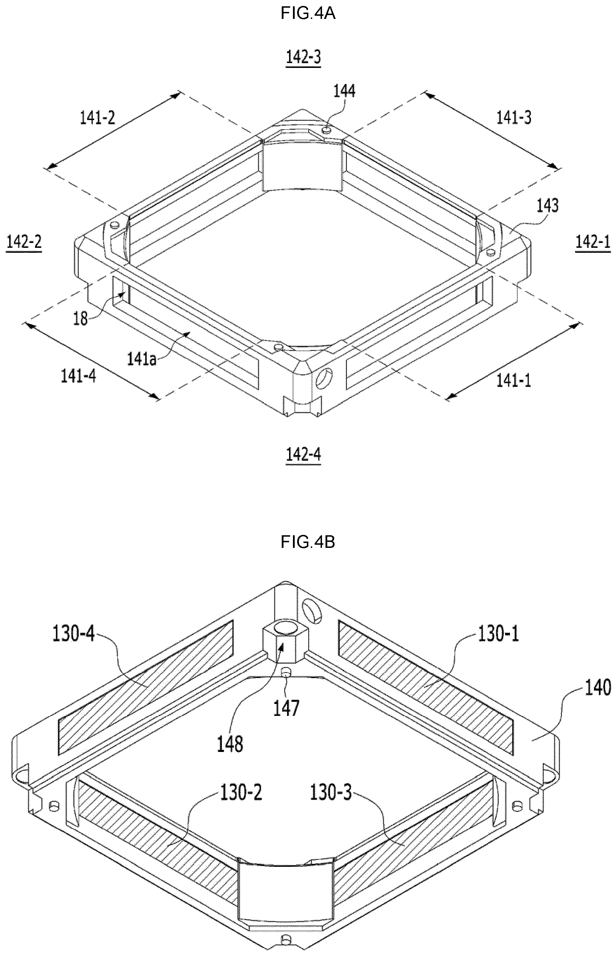

FIG. 4A is a perspective view of the housing 140 shown in FIG. 1, and FIG. 4B is a coupled view of the housing 140 and the magnet 130.

Referring to FIGs. 4A and 4B, the housing 140 is disposed in the cover member 300.

The housing 140 supports the magnet 130, and receives the bobbin 110 therein such that the bobbin 110 can be moved in the first direction.

The housing 140 may generally have a hollow pillar shape.

The housing 140 may be provided with an opening (or a hollow) in which the bobbin 110 is received, and the opening of the housing 140 may be a through-hole formed through the housing 140 in the optical-axis direction.

The housing 140 may include side portions (or "first side portions") 141-1 to 141-4 and corner portions (or "second side portions") 142-1 to 142-4.

For example, the housing 140 may include a plurality of side portions 141-1 to 141-4 and a plurality of corner portions 142-1 to 142-4 disposed so as to form a polygonal (e.g. quadrangular or octagonal) or circular opening. Here, the corner portions of the housing 140 may be referred to as "pillar portions."

For example, the side portions 141-1 to 141-4 of the housing 140 may be disposed at positions corresponding to the side plates 302 of the cover member 300. For example, corresponding ones of the side portions of the housing 140 and the side plates of the cover member 300 may be parallel to each other.

For example, the side portions 141-1 to 141-4 of the housing 140 may be portions corresponding to sides of the housing 140, and the corner portions 142-1 to 142-4 of the housing 140 may be portions corresponding to corners of the housing 140.

The inner surface of each of the corner portions 142-1 to 142-4 of the housing 140 may be a flat surface, a chamfered surface, or a curved surface.

The magnet 130 may be disposed or installed on at least one of the side portions 141-1 to 141-4 of the housing 140. For example, seating portions 141a, in which magnets 130-1 to 130-4 are seated, disposed, or fixed, may be provided at the first to fourth side portions 141-1 to 141-4 of the housing 140.

In FIG. 4A, the seating portions 141a may be openings or through-holes formed through the side portions 141-1 to 141-4 of the housing 140; however, the disclosure is not limited thereto. In another embodiment, the seating portions may be recesses or concave recesses.

The housing 140 may include a supporting portion 18 adjacent to the seating portion 141a so as to support an edge of a first surface of the magnet 130 opposite to the coil 120 and/or the bobbin 110.

The supporting portion 18 may be located adjacent to the inner surface of the housing 140, and may protrude from the side surface of the seating portion 141a in a horizontal direction. In addition, for example, the supporting portion 18 may include a tapered portion or an inclined surface. In another embodiment, the housing 140 may include no supporting portion 18.

In addition, guide recesses 148, into which bosses 216 of the base 210 are inserted or to which the bosses of the base are fastened or coupled, may be provided in lower portions of outer surfaces of the corner portions 142-1 to 142-4 of the housing 140.

The housing 140 may be provided on an upper portion, an upper surface, or an upper end thereof with a stopper 143 in order to prevent direct collision with the inner surface of the upper plate 301 of the cover member 300. Here, the stopper 143 may be referred to as a "boss" or a "protrusion."

For example, the stoppers 143 may be provided on the corner portions of the housing 140; however, the disclosure is not limited thereto. In another embodiment, the stoppers 143 may be provided on at least one of the side portions and the corner portions of the housing 140.

For example, an upper surface of the stopper 143 of the housing 140 may contact the inner surface of the upper plate 301 of the cover member 300; however, the disclosure is not limited thereto. In another embodiment, there may be no contact therebetween.

In addition, the housing 140 may be provided on the upper surface, the upper end, or the upper portion thereof with at least one first coupling portion 144, to which a first outer frame 152 of the upper elastic member 150 is coupled. In addition, the housing 140 may be provided on a lower surface, a lower portion, or a lower end thereof with at least one second coupling portion 147, to which an outer frame 162 of the lower elastic member 160 is coupled.

For example, the first coupling portion 144 and the second coupling portion 147 are disposed on the corner portions 142-1 to 142-4 of the housing 140; however, the disclosure is not limited thereto. In another embodiment, the first and second coupling portions may be disposed on the side portions of the housing 140.

In FIGs. 4A and 4B, each of the first and second coupling portions 144 and 147 of the housing 140 is a protrusion; however, the disclosure is not limited thereto. In another embodiment, at least one of the first and second coupling portions 144 and 147 may be a recess or a flat surface.

For example, an adhesive (not shown), such as silicone or epoxy, may be disposed between the guide recesses 148 of the housing 140 and the bosses 216 of the base 210, and the guide recesses 148 of the housing 140 and the bosses 216 of the base 210 may be coupled to each other via the adhesive, whereby the housing 140 may be coupled to the base 210.

Next, the magnet 130 will be described.

At the initial position of the AF operation unit (e.g. the bobbin 110), the magnet 130 may be disposed on the side portions 141-1 to 141-4 of the housing 140 so as to correspond to or to be opposite to the coil 120.

At the initial position of the AF operation unit, the magnet 130 may be disposed in the seating portion 141a of the housing 140 so as to overlap the coil 120 in a direction perpendicular to the optical-axis direction.

In another embodiment, no seating portion 141a may be formed in the side portions 141-1 to 141-4 of the housing 140, and the magnet 130 may be disposed on outer surfaces or inner surfaces of the side portions 141-1 to 141-4 of the housing 140.

In the embodiment, the magnet 130 includes first to fourth magnets 130-1 to 130-4 disposed on the first to fourth side portions 141-1 to 141-4 of the housing 140; however, the disclosure is not limited thereto. The number of magnets 130 may be two or more. For example, in another embodiment, two magnets may be disposed on two opposite side portions of the housing 140.

Each of the magnets 130-1 to 130-4 may have a shape corresponding to the outer surface of a corresponding one of the side portions 141-1 to 141-4 of the housing 140, such as a polyhedral shape (e.g. a rectangular parallelepiped shape); however, the disclosure is not limited thereto.

Each of the magnets 130-1 to 130-4 may be a monopolar magnet having two different polarities and a border surface naturally formed between the different polarities.

For example, each of the magnets 130-1 to 130-4 may be a monopolar magnet disposed such that a first surface thereof opposite to the coil 120 has an N pole and a second surface opposite to the first surface has an S pole; however, the disclosure is not limited thereto. The N pole and the S pole may be reversely disposed.

In another embodiment, in order to increase electromagnetic force, each of the magnets 130-1 to 130-4 may be a bipolar magnet divided into two parts in a direction perpendicular to the optical axis. Here, each of the magnets 130-1 to 130-4 may be realized by a ferrite, alnico, or rare-earth magnet; however, the disclosure is not limited thereto.

In the case in which each of the magnets 130-1 to 130-4 is a bipolar magnet, each of the magnets 130-1 to 130-4 may include a first magnet portion, a second magnet portion, and a partition disposed between the first magnet portion and the second magnet portion.

The first magnet portion may include an N pole, an S pole, and a first border surface between the N pole and the S pole. Here, the first border surface may be a portion having substantially no magnetism, may include a section having little polarity, and may be a portion that is naturally generated in order to form a magnet including a single N pole and a single S pole.

The second magnet portion may include an N pole, an S pole, and a second border surface between the N pole and the S pole. Here, the second border surface may be a portion having substantially no magnetism, may include a section having little polarity, and may be a portion that is naturally generated in order to form a magnet including a single N pole and a single S pole.

The partition may be a portion that separates or isolates the first magnet portion and the second magnet portion from each other, may be a portion having substantially no magnetism, and may be a portion having little polarity. For example, the partition may be a nonmagnetic material or air. For example, the partition may be referred to as a "neutral zone" or a "neutral region."

The partition is a portion that is artificially formed when the first magnet portion and the second magnet portion are magnetized, and the width of the partition may be greater than the width of each of the first border surface and the second border surface. Here, the width of the partition may be the length of the partition in a direction from the first magnet portion to the second magnet portion.

The first surface of each of the magnets 130-1 to 130-4 may be a flat surface; however, the disclosure is not limited thereto. The first surface of each of the magnets 130-1 to 130-4 may include a curved surface, an inclined surface, or a tapered portion. For example, the first surface of each of the magnets 130-1 to 130-4 may be a surface opposite to the outer surface of the bobbin 110 and/or the coil 120.

In another embodiment, the magnet 130 may be disposed on each of the corner portions 142-1 to 142-4 of the housing 140. For example, in another embodiment, the magnet 130 may be disposed on each of two or more corner portions of the housing 140.

A lens moving apparatus according to another embodiment may further include a sensing magnet disposed on the bobbin 110 and a position sensor disposed on the housing 140 so as to be opposite to the sensing magnet. Here, the position sensor may be a Hall sensor or a driver IC including a Hall sensor. The position sensor may output an output signal based on the result of the sensing magnet sensing a magnetic field. The output signal of the position sensor may be used to detect displacement of the AF operation unit.

The lens moving apparatus 100 according to the embodiment may further include a second buffer 32 disposed on the upper surface of the base 210 so as to alleviate shock due to collision between the bobbin 110 and the base 210. The second buffer 32 will be described below.

The upper elastic member 150 and the lower elastic member 160 flexibly support the bobbin 110.

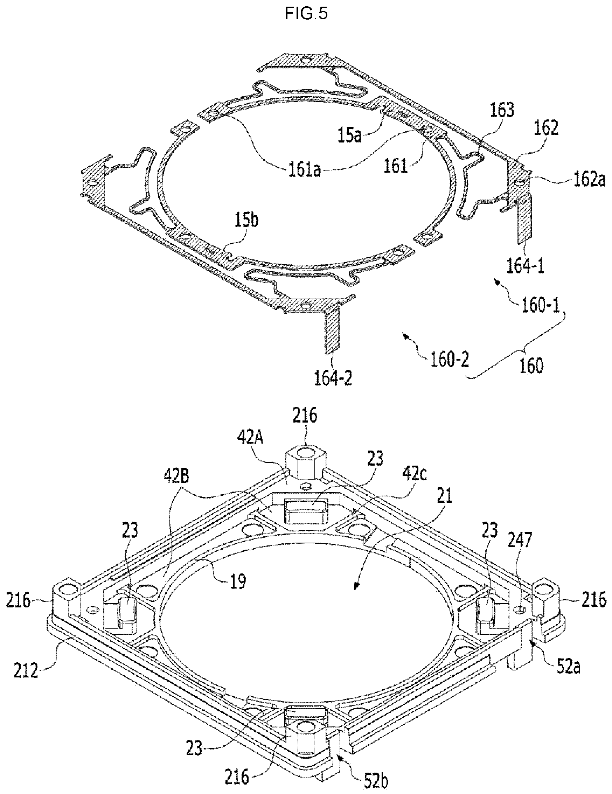

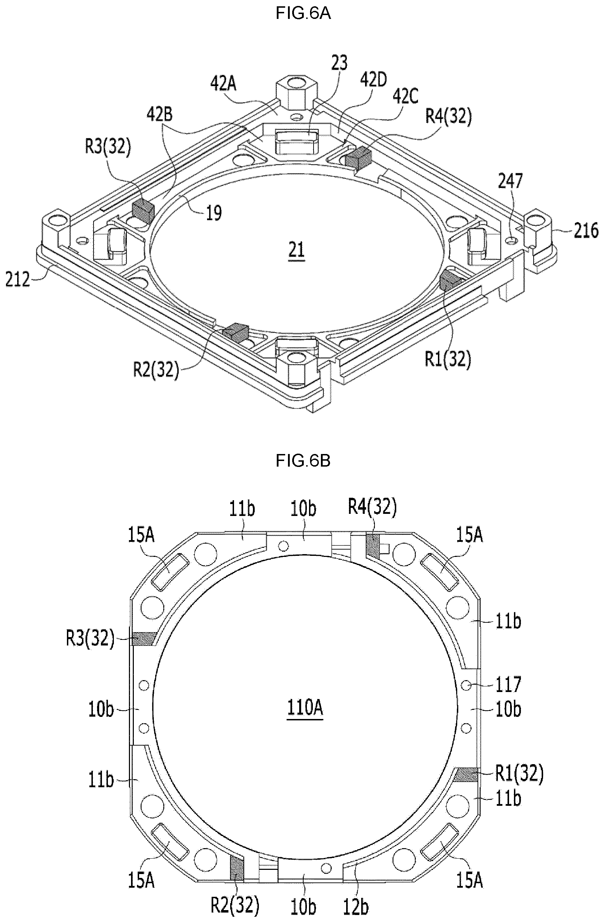

FIG. 5 is a separated perspective view of the lower elastic member 160 and the base, FIG. 6A is a perspective view of the base 210 and the second buffer 32,

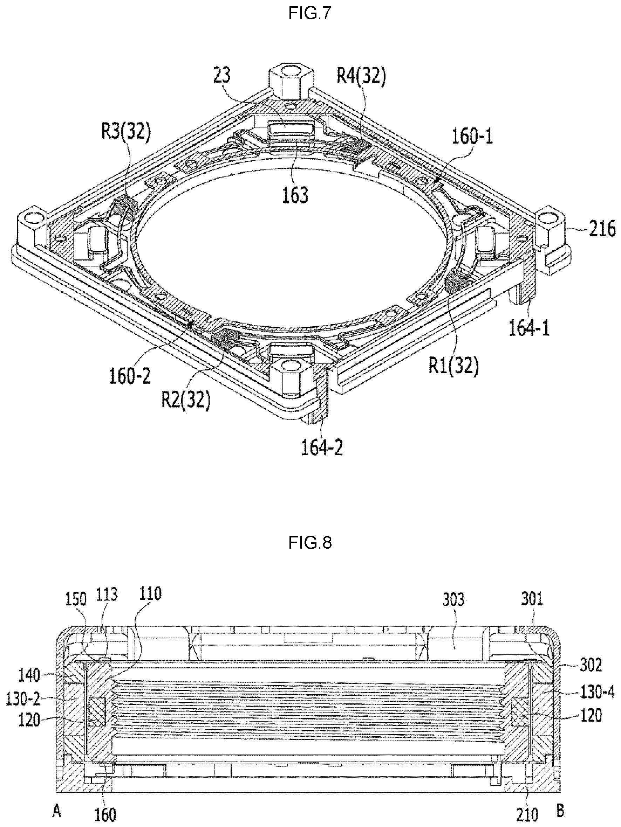

FIG. 6B shows the lower surface of the bobbin 110 corresponding to the second buffer 32, FIG. 7 is a coupled perspective view of the base 210, the second buffer 32, and the lower elastic member 160, FIG. 8 is a sectional view of the lens moving apparatus 100 in direction AB of FIG. 2, and FIG. 9 is a sectional view of the lens moving apparatus 100 in direction CD of FIG. 2.

Referring to FIGs. 5 to 9, the upper elastic member 150 may be coupled to the upper portion (or the upper surface or the upper end) of the bobbin 110 and/or to the upper portion (or the upper surface or the upper end) of the housing 140.

The lower elastic member 160 may be coupled to the lower portion (or the lower surface or the lower end) of the bobbin 110 and/or to the lower portion (or the lower surface or the lower end) of the housing 140.

In FIG. 2, the upper elastic member 150 is not divided into a plurality of parts; however, the disclosure is not limited thereto. In another embodiment, the upper elastic member 150 may include a plurality of elastic members spaced apart from each other.

Referring to FIG. 2, the upper elastic member 150 includes a first inner frame 151 coupled to the upper portion of the bobbin 110, a first outer frame 152 coupled to the upper portion of the housing 140, and a first frame connection portion 153 configured to connect the first inner frame 151 and the first outer frame 152 to each other. In the following description, the inner frame may be referred to as an "inner portion," the outer frame may be referred to as an "outer portion," and the frame connection portion may be referred to as a "connection portion."

A hole 151a, to which the first coupling portion 113 of the bobbin 110 is coupled, may be provided in the first inner frame 151 of the upper elastic member 150, and a hole 152a, to which the first coupling portion 144 of the housing 140 is coupled, may be provided in the first outer frame 152.

Referring to FIG. 5, the lower elastic member 160 may include two or more divided or separated elastic members, and may be coupled to the bobbin 110. For example, the elastic members may be referred to as "lower elastic members," "elastic units," or "springs."

For example, the lower elastic member 160 may include first and second elastic members 160-1 and 160-2 spaced apart from each other, and the first and second elastic members 160-1 and 160-2 may be separated or spaced apart from each other.

The coil 120 may be conductively connected to the first and second elastic members 160-1 and 160-2. For example, one end (or a first end) of the coil 120 may be coupled to the first elastic member 160-1, and the other end (or a second end) of the coil 120 may be coupled to the second elastic member 160-2.

Each of the first and second elastic members 160-1 and 160-2 may include a second inner frame 161 coupled to the lower portion of the bobbin 110, a second outer frame 162 coupled to the lower portion of the housing 140, and a second frame connection portion 163 configured to connect the second inner frame 161 and the second outer frame 162 to each other.

A hole 161a, to which the second coupling portion 117 of the bobbin 110 is coupled, may be provided in the second inner frame 161 of the lower elastic member 160, and a hole 162a, to which the second coupling portion 147 of the housing 140 is coupled, may be provided in the second outer frame 162.

For example, a first bonding portion (or a "first bonding region") 15a, to which one end of the coil 120 is coupled, may be provided at one end of the second inner frame 161 of the first elastic member 160-1, and a second bonding portion (or a "second bonding region") 15b, to which the other end of the coil 120 is coupled, may be provided at one end of the second inner frame 161 of the second elastic member 160-2.

For example, one end of the coil 120 may be coupled to the first bonding portion 15a of the inner frame 161 of the first elastic member 160-1, and the other end of the coil 120 may be coupled to the second bonding portion 15b of the inner frame 161 of the second elastic member 160-2, by a solder or a conductive adhesive member.

The reason that the first and second bonding portions 15a and 15b are provided at the second inner frame 161 is that, since the second inner frame 161 is closer to the bobbin 110 than the second outer frame 163, bonding with the coil 120 can be more easily performed.

For example, guide recesses configured to guide one end and the other end of the coil 120 may be provided in the first and second bonding portions 15a and 15b.

For the first and second bonding portions 15a and 15b, the "bonding portions" may be referred to as pad portions, connection terminal portions, solder portions, or electrode portions.

Each of the upper elastic member 150 and the lower elastic member 160 may be implemented by a leaf spring; however, the disclosure is not limited thereto. Each elastic member may be implemented by a coil spring or a suspension wire.

Each of the first and second frame connection portions 153 and 163 may be formed so as to be bent or curved at least once in order to form a predetermined pattern. Upward and/or downward movement of the bobbin 110 in the first direction may be flexibly (or elastically) supported through displacement and microscopic deformation of the first and second frame connection portions 153 and 163.

For example, in order to prevent an oscillation phenomenon when the bobbin 110 is moved, a damper may be disposed between the first frame connection portion 153 of the upper elastic member 150 and the upper surface of the bobbin 110 (e.g. the first escape recess 112a). Alternatively, a damper (not shown) may also be disposed between the second frame connection portion 163 of the lower elastic member 160 and the lower surface of the bobbin 110 (e.g. the second escape recess 112b).

Alternatively, for example, a damper may be coated on a coupling portion between the upper elastic member 150 and each of the bobbin 110 and the housing 140 or on a coupling portion between the lower elastic member 160 and each of the bobbin 110 and the housing 140. For example, the damper may be gel-type silicone.

For example, the first and second elastic members 160-1 and 160-2 may be separated or spaced apart from each other at the first side portion 141-1 and the second side portion 141-2 of the housing 140; however, the disclosure is not limited thereto.

The first elastic member 160-1 may include a first terminal 164-1 connected to the outer surface of the second outer frame 162 of the first elastic member 160-1, bent from the second outer frame 162 of the first elastic member 160-1 in a direction toward the base 210, and extending toward the base.

In addition, the second elastic member 160-2 may include a second terminal 164-2 connected to the outer surface of the second outer frame 162 of the second elastic member 160-2, bent from the second outer frame 163 of the second elastic member 160-2 in a direction toward the base 210, and extending toward the base.

For example, the first terminal 164-1 of the first elastic member 160-1 may extend from the second outer frame 162 of the first elastic member 160-1 to the first outer surface of the base 210. In addition, the second terminal 164-2 of the second elastic member 160-2 may extend from the second outer frame 162 of the second elastic member 160-2 to the first outer surface of the base 210.

For example, the first and second terminals 164-1 and 164-2 of the first and second elastic members 160-1 and 160-2 may be disposed on the first outer surface of the base 210 so as to be spaced apart from each other, and may abut the first outer surface of the base 210.

For example, the first terminal 164-1 of the first elastic member 160-1 may be disposed, seated, or inserted in a first depressed portion 52a provided in the base 210.

In addition, the second terminal 164-2 of the second elastic member 160-2 may be disposed, seated, or inserted in a second depressed portion 52b provided in the base 210. Here, the depressed portion may be referred to as a "recess." For example, the first and second depressed portions 52a and 52b may be formed in the first outer surface of the base 210.

The first and second terminals 164-1 and 164-2 of the first and second elastic members 160-1 and 160-2 may be exposed from the base 210, and the first and second terminals 164-1 and 164-2 may be spaced apart from each other.

For example, an inner surface of the first terminal 164-1 disposed in the first depressed portion 52a of the base 210 may abut one surface (e.g. a bottom surface) of the first depressed portion 52a, and an outer surface of the first terminal 164-1 may be exposed from the outer surface (e.g. the first outer surface) of the base 210. The outer surface of the first terminal 164-1 may be an opposite surface of the inner surface of the first terminal 164-1.

In addition, an inner surface of the second terminal 164-2 disposed in the second depressed portion 52b of the base 210 may abut one surface (e.g. a bottom surface) of the second depressed portion 52b, and an outer surface of the second terminal 164-2 may be exposed from the outer surface (e.g. the first outer surface) of the base 210. The outer surface of the second terminal 164-2 may be an opposite surface of the inner surface of the second terminal 164-2.

For example, a lower end of each of the first and second terminals 164-1 and 164-2 may be exposed from the lower surface of the base 210; however, the disclosure is not limited thereto. In another embodiment, the lower end of each of the first and second terminals 164-1 and 164-2 may not be exposed from the lower surface of the base 210.

The depth of the depressed portions 52a and 52b may be greater than the thickness of the connection terminals 164-1 and 164-2, and outer surfaces of the connection terminals 164-1 and 164-2 disposed in the depressed portions 52a and 52b may not protrude out of the depressed portions 52a and 52b; however, the disclosure is not limited thereto. In another embodiment, the outer surfaces of the connection terminals 164-1 and 164-2 may protrude out of the depressed portions 52a and 52b.

The first and second terminals 164-1 and 164-2 may be conductively connected to external wires or external elements by a conductive adhesive member (e.g. a solder) such that electric power or a driving signal is received from the outside.

If the solder bonded to the first and second terminals 164-1 and 164-2 protrudes out of the outer surface of the base 210, contact or collision between the solder bonded to the first and second terminals 164-1 and 164-2 and the cover member 300 may be prevented, whereby electrical short circuit or open circuit may occur. In the embodiment, the depth of the depressed portions 52a and 52b is sufficiently secured such that the solder bonded to the connection terminals 164-1 and 164-2 does not protrude out of the outer surface of the base 210, whereby it is possible to prevent electrical short circuit or open circuit.

For the first and second terminals 164-1 and 164-2, the "connection terminals" may be referred to as pad portions, bonding portions, solder portions, or electrode portions.

The first and second terminals 164-1 and 164-2 of the first and second elastic members 160-1 and 160-2 may be conductively connected to the coil 120, and electric power or a driving signal for driving the coil 120 may be provided to the first and second terminals 164-1 and 164-2.

In FIG. 5, the first terminal 164-1 is formed integrally with the first elastic member 160-1, and the second terminal 164-2 is formed integrally with the second elastic member 160-2; however, the disclosure is not limited thereto. In another embodiment, the first connection terminal may be formed separately from the first elastic member and disposed on the first outer surface of the base 210, the second connection terminal may be formed separately from the first elastic member and disposed on the first outer surface of the base 210, the first elastic member and the first connection terminal may be connected to each other by a conductive adhesive (e.g. a solder), and the second elastic member and the second connection terminal may be connected to each other by a conductive adhesive (e.g. a solder).

Next, the base 210 will be described.

The base 210 may be coupled to the housing 140, and may define a receiving space configured to receive the bobbin 110 and the housing 140 together with the cover member 300. The base 210 may be provided with an opening 21 corresponding to the opening of the bobbin 110 and/or the opening of the housing 140, and may be configured in a shape coinciding with or corresponding to the shape of the cover member 300, such as a quadrangular shape.

The base 210 may be provided at the lower end of the outer surface thereof with a stair 211, which may be coated with an adhesive when fixing the cover member 300 by adhesion. In this case, the stair 211 may guide the cover member 300 coupled to the upper side thereof, and may be opposite the lower end of the side plate 302 of the cover member 300. An adhesive member and/or a sealing member may be disposed or coated between the lower end of the side plate 302 of the base 210 and the stair 211 of the base 210.

The base 210 may be disposed under the bobbin 110 and the housing 140.

For example, the base 210 may be disposed under the lower elastic member 160.

Bosses 216 protruding toward the housing 140 may be formed on the upper surface of the base 210.

The base 210 may be provided with bosses 216 protruding from the four corners or corner portions thereof by a predetermined height in the upward direction. Here, the bosses 216 of the base 210 may be referred to as "pillar portions."

For example, each of the bosses 216 of the base 210 may have a multilateral pillar shape protruding from the upper surface of the base 210 so as to be perpendicular to the upper surface of the base 210; however, the disclosure is not limited thereto.

The bosses 216 of the base 210 may be inserted into, fastened to, or coupled to the guide recesses 148 of the housing 140 by an adhesive member, such as epoxy or silicone.

In order to prevent the lower surface or the lower end of the bobbin 210 from directly colliding with the upper surface of the base 210 at the time of AF driving or when external shock occurs, the base 210 may be provided with stoppers 23 protruding from the upper surface of the base 210. The base 210 may be provided with a plurality of stoppers. For example, the stoppers 23 of the base 210 may be disposed so as to correspond to the bosses 216 of the base 210; however, the disclosure is not limited thereto.

In order to avoid spatial interference between the bobbin 110 and the lower elastic member 160, the stoppers 23 of the base 210 may be located higher than the first and second elastic members 160-1 and 160-2 coupled to the base 210 (e.g. the second frame connection portion 163).

In addition, the base 210 may be provided in the upper surface thereof with a recess 247, in which the protrusion-shaped second coupling portion 147 of the housing 140 is seated, inserted, and coupled. The recess 247 may correspond to or may be opposite to the second coupling portion 147 of the housing 140 in the optical-axis direction. For example, the recess 247 may be formed in one region of the upper surface of the base 210 located between the boss 216 and the stopper 23 of the base 210; however, the disclosure is not limited thereto.

For example, the base 210 may include side portions corresponding to or opposite to the side portions 141-1 to 141-4 of the housing 140 and corner portions corresponding to or opposite to the corner portions 142-1 to 142-4 of the housing 140.

For example, the first and second depressed portions 52a and 52b may be formed in the outer surface of the first side portion of the base 210.

For example, each of the first and second depressed portions 52a and 52b may include an upper opening that is open to the upper surface of the base 210 and a lower opening that is open to the lower surface of the base 210.

The upper surface of the base 210 may include a first surface 42A and a second surface 42B having a stair formed together with the first surface 42A in the optical-axis direction.

For example, the second surface 42B of the base 210 may be located lower than the first surface 42A. For example, the distance between the lower surface of the base 210 and the second surface 42B may be less than the distance between the lower surface of the base 210 and the first surface 42A.

For example, the first surface 42A and the second surface 42B may be parallel to each other; however, the disclosure is not limited thereto. In another embodiment, both may not be parallel to each other.

For example, the first surface 42A and the second surface 42B may be perpendicular to the optical axis; however, the disclosure is not limited thereto. In another embodiment, both may not be perpendicular to the optical axis.

The second surface 42B may be closer to the opening 21 of the base 210 than the first surface 42A.

The first surface 42A may be closer to the outer surface of the base 210 than the second surface 42B.

The first surface 42A may be closer to the corner of the base 210 than the second surface 42B.

The base 210 may further include a third surface 42C located lower than the first surface 42A and higher than the second surface 42B. For example, the third surface 42C may abut the inner surface of the base 210 formed by the opening. In addition, the third surface 42C may have the same height as the uppermost end 19 of the inner surface of the base 210.

For example, the first surface 42A may be referred to as a "1-1 surface," the second surface 42B may be referred to as a "1-2 surface," and the third surface 42C may be referred to as a "1-3 surface."

The bosses 216 may be disposed on the first surface 42A of the upper surface of the base 210, and may protrude from the first surface 42A in the upward direction or in the optical-axis direction.

The stoppers 23 may be disposed on the second surface 42B of the upper surface of the base 210, and may protrude from the second surface 42B in the upward direction or in the optical-axis direction.

An upper surface of each of the stoppers 23 may be located higher than the first surface 42A of the upper surface of the base 210. Alternatively, in another embodiment, the upper surface of each of the stoppers 23 and the first surface 42A may be located at the same height. In a further embodiment, the upper surface of each of the stoppers 23 may be located lower than the first surface 42A.

The upper surface of the stopper 23 may be located higher than the second surface 42B and the third surface 42C of the upper surface of the base 210.

The recess 247 may be formed in the first surface 42A of the upper surface of the base 210.

Referring to FIG. 6A, the second buffer 32 may be disposed on the second surface 42B of the upper surface of the base 210.

A lower surface of the second buffer 32 may contact the second surface 42B of the upper surface of the base 210. In addition, for example, the upper surface of the base 210 may further include a surface 42D configured to connect the first surface 42A and the second surface 42B of the base 210 to each other.

For example, the second buffer 32 may contact the surface 42D of the base 210.

The second buffer 32 may include at least one buffer stopper R1 to R4. Here, the buffer stopper may be referred to as a "shock absorption portion."

For example, the second buffer 32 may include four buffer stoppers R1 to R4 spaced apart from each other. For example, the second buffer 32 may be disposed between the opening 21 of the base 210 and sides of the upper surface of the base 210.

Referring to FIGs. 3C and 6B, the lower surface of the bobbin 110 may be opposite to the upper surface of the base 210 in the optical-axis direction. The lower surface of the bobbin may include a first surface 10b and a second surface 11b having a stair formed together with the first surface 10b in the optical-axis direction.

The lower surface of the bobbin 110 may include a third surface 12b configured to connect the first surface 10b and the second surface 11b to each other.

The first surface 10b may be referred to as a "2-1 surface," the second surface 11b may be referred to as a "2-2 surface," and the third surface 12b may be referred to as a "2-3 surface."

For example, the second surface 11b of the lower surface of the bobbin 110 may be located higher than the first surface 10b of the lower surface of the bobbin 110. For example, the distance between the upper surface of the bobbin 110 and the second surface 11b may be less than the distance between the upper surface of the bobbin 110 and the first surface 11a.

For example, the first surface 10b and the second surface 11b of the lower surface of the bobbin 110 may be parallel to each other; however, the disclosure is not limited thereto. In another embodiment, both may not be parallel to each other.

For example, the first surface 10b and the second surface 11b may be perpendicular to the optical axis; however, the disclosure is not limited thereto. In another embodiment, both may not be perpendicular to the optical axis.

For example, the third surface 12b may be perpendicular to at least one of the first surface 10b and the second surface 11b; however, the disclosure is not limited thereto, and the third surface 12b may not be perpendicular to the first surface 10b and the second surface 11b.

For example, the second coupling portion 117 may be formed on the first surface 10b of the lower surface of the bobbin 110.

For example, a bottom surface of the second escape recess 112b may be the same surface as the second surface 11b.

A stopper 15A may be provided on the lower surface of the bobbin 110. The stopper 15A may protrude or extend toward the upper surface of the base 210.

For example, the bobbin 110 may be provided with a stopper 15A formed in the second escape recess 112b.

For example, the stopper 15A may be disposed on the second surface 11b of the lower surface of the bobbin 110, and may protrude from the second surface 11b of the lower surface of the bobbin 110 in the downward direction.

For example, the stopper 15A may be disposed in each of four second escape recesses 112b of the bobbin 110.

The stopper 15A of the bobbin 110 may correspond to or may be opposite to the stopper 23 of the base 210 in the optical-axis direction. For example, the stopper 15A of the bobbin 110 may overlap the stopper 23 of the base 210 in the optical-axis direction.

At the initial position of the AF operation unit, the stopper 15A of the bobbin 110 and the stopper 23 of the base 210 may be spaced apart from each other.

The second surface 42B of the upper surface of the base 210 may include a first region that overlaps the second surface 11b of the lower surface of the bobbin 110 in the optical-axis direction, and the second buffer 32 may be disposed in the first region of the second surface 42B of the upper surface of the base 210.

For example, the second buffer 32 may be disposed spaced apart from the stopper 23 of the base 210. A second buffer 32 according to another embodiment may abut the stopper 23 of the base 210.

The distance between the stopper 15A of the bobbin 110 and the stopper 23 of the base 210 in the optical-axis direction may be equal to or less than the distance between the second buffer 32 and the lower surface of the bobbin 110 in the optical-axis direction.

For example, at the initial position of the bobbin 110, the distance d2 (see FIG. 10) between the stopper 15A of the bobbin 110 and the stopper 23 of the base 210 in the optical-axis direction may be less than the distance between the second surface 11b of the bobbin 110 and the second surface 42B of the base 210 in the optical-axis direction.

For example, at the initial position of the bobbin 110, the distance d2 between the stopper 15A of the bobbin 110 and the stopper 23 of the base 210 in the optical-axis direction may be less than the distance between the second surface 11b of the bobbin 110 and the second buffer 32.

For example, an upper surface of the second buffer 32 may be located lower than the first surface 42A of the base 210. For example, the distance between the upper surface of the second buffer 32 and the lower surface of the base 210 may be less than the distance between the first surface 42A of the base 210 and the lower surface of the base 210.

In another embodiment, for example, the upper surface of the second buffer 32 may be located at the same height as the first surface 42A of the base 210.

For example, the length (or the thickness) of the second buffer 32 in the optical-axis direction may be less than that of the stair between the first surface 42A and the second surface 42B of the base 210. In another embodiment, the length (or the thickness) of the second buffer 32 in the optical-axis direction may be equal to that of the stair between the first surface 42A and the second surface 42B of the base 210.

In addition, for example, the upper surface of the second buffer 32 may be located lower than the upper surface of the stopper 23 of the base 210. In another embodiment, for example, the upper surface of the second buffer 32 may be located at the same height as the upper surface of the stopper 23 of the base 210. In a further embodiment, the upper surface of the second buffer 32 may be located higher than the upper surface of the stopper 23.

For example, the length (or the thickness) of the second buffer 32 in the optical-axis direction may be less than the length (or the thickness) of the stopper 23 of the base 210 in the optical-axis direction.

In another embodiment, the length (or the thickness) of the second buffer 32 in the optical-axis direction may be equal to the length (or the thickness) of the stopper 23 of the base 210 in the optical-axis direction.

In a further embodiment, the length (or the thickness) of the second buffer 32 in the optical-axis direction may be greater than the length (or the thickness) of the stopper 23 of the base 210 in the optical-axis direction.

The second buffer 32 may be disposed between the second surface 11b of the bobbin 110 and the second surface 42B of the base 210. For example, the second buffer 32 may be attached or fixed to the second surface 42B of the base 210.

For example, at the initial position of the AF operation unit, the upper surface of the second buffer 32 may be located lower than the second frame connection portion 163 of the lower elastic member 160; however, the disclosure is not limited thereto. In another embodiment, the upper surface of the second buffer 32 may be located at the same height as the second frame connection portion 163 or may be located higher than the second frame connection portion.

For example, at least a part of the second buffer 32 may overlap the second frame connection portion 163 of the lower elastic member 160 in the optical-axis direction; however, the disclosure is not limited thereto. In another embodiment, both may not overlap each other in the optical-axis direction.

At least a part of the second buffer 32 may contact the second frame connection portion 163 of the lower elastic member 160; however, the disclosure is not limited thereto. In another embodiment, both may be spaced apart from each other.

In FIG. 6A, the second buffer 32 is attached or fixed to the second surface 42B of the base 210; however, in another embodiment, the second buffer may be attached or fixed to the second surface 11b of the lower surface of the bobbin 110. In this case, the distance between the stopper 15A of the bobbin 110 and the stopper 23 of the base 210 in the optical-axis direction may be equal to or less than the distance between the second buffer and the upper surface of the base in the optical-axis direction. In addition, for example, the lower surface of the second buffer may be located higher than or at the same height as the lower surface of the stopper 15A of the bobbin 110.

FIG. 10 is a sectional view of a part of the lens moving apparatus 100 according to the embodiment.

Referring to FIG. 10, the first buffer 31 may be disposed between the inner surface of the upper plate 301 of the cover member 300 and the second surface 11A of the upper surface of the bobbin 110.

Since the distance d1 between the boss 303 and the bottom surface 119a of the recess 119 of the bobbin 110 is less than the distance between the inner surface of the upper plate 301 of the cover member 300 and the first buffer 31, the boss may collide first with the bottom surface 119a due to external shock, and then the inner surface of the upper plate 301 of the cover member 300 may collide with the first buffer 31.

That is, the bottom surface 119a may correspond to a main shock point or a main shock region 28A, and the first buffer 31 may correspond to an auxiliary shock point or an auxiliary shock region. The first buffer 31 may serve to auxiliarily alleviate shock of the cover member 300 to the bobbin 110.

In addition, even though d1 is equal to the distance between the inner surface of the upper plate 301 of the cover member 300 and the first buffer 31, the bottom surface 119a may correspond to a main shock point, and the first buffer 31 may correspond to an auxiliary shock point, since stiffness of the first buffer 31 is less than stiffness of each of the cover member 300 and the bobbin 110.

The first buffer 31 may be made of a material that exhibits higher shock absorption than the material for the cover member 300, the bobbin 110, the housing 140, and/or the base 210.

For example, the first buffer 31 may be made of a material that exhibits stiffness lower than stiffness of each of the cover member 300, the bobbin 110, the housing 140, and/or the base 210.

Here, stiffness k may be a ratio of force F applied to an elastomer to displacement δ of the elastomer due thereto (k = F/δ). For example, stiffness may be defined as force necessary to deform the elastomer by a unit length (e.g. 1 mm).

Alternatively, stiffness may be defined as Young's modulus. Young's modulus is an elastic coefficient that defines the relationship between stress (force per unit area) and strain of a linear elastic material in a uniaxial deformation region. Since the unit of Young's modulus is the unit of pressure, Young's modulus may be expressed as pascal, megapascal (MPa), or gigapascal (GPa).

The first buffer 31 may be made of a material that absorbs shock, such as rubber, silicone, foam rubber, a POM material (e.g. polyacetal or polyoxymethylene), or urethane.

For example, the first buffer 31 may include any one of rubber, silicone, foam rubber, a POM material, and urethane.

Since the first buffer 31 is made of a material that exhibits higher shock absorption than the material for the cover member 300 and the bobbin 110, the first buffer 31 is greatly deformed when the first buffer 31 is a main shock point, whereby a stroke range of the bobbin 110 in the optical-axis direction is continuously changed. If the stroke range of the bobbin 110 in the optical-axis direction is continuously changed, reliability in autofocus due to AF driving may be deteriorated.

In addition, the second buffer 32 may be disposed between the second surface 11b of the lower surface of the bobbin 110 and the second surface 42B of the upper surface of the base 210.

Since the distance d2 between the stopper 15A of the lower surface of the bobbin 110 and the stopper 23 of the upper surface of the base 210 in the optical-axis direction is less than the distance between the second surface 11b of the bobbin 110 and the second buffer 32, the stopper 15A of the bobbin 110 may collide with the stopper 23 of the base 210 due to external shock, and then the lower surface (e.g. the second surface 11b) of the bobbin 110 may collide with the second buffer 32.

That is, each of the stopper 15A of the bobbin 110 and the stopper 23 of the base 210 may correspond to a main shock point or a main shock region 28B, and the second buffer 32 may correspond to an auxiliary shock point or an auxiliary shock region. The second buffer 32 may serve to auxiliarily alleviate shock due to collision between the bobbin 110 and the base 210.

Even though d2 is equal to the distance between the second surface 11b of the bobbin 110 and the second buffer 32, each of the stoppers 15A and 23 may correspond to a main shock point, and the second buffer 32 may correspond to an auxiliary shock point, since stiffness of the second buffer 32 is less than stiffness of each of the bobbin 110 and the base 210.

A description of the material for the first buffer 31 may be applied or applied with necessary modifications to the material for the second buffer 32. For example, the material for the second buffer 32 may be identical to the material for the first buffer 31.

The lens moving apparatus 100 may further include a third buffer disposed on the inner surface of the upper plate of the cover member 300.

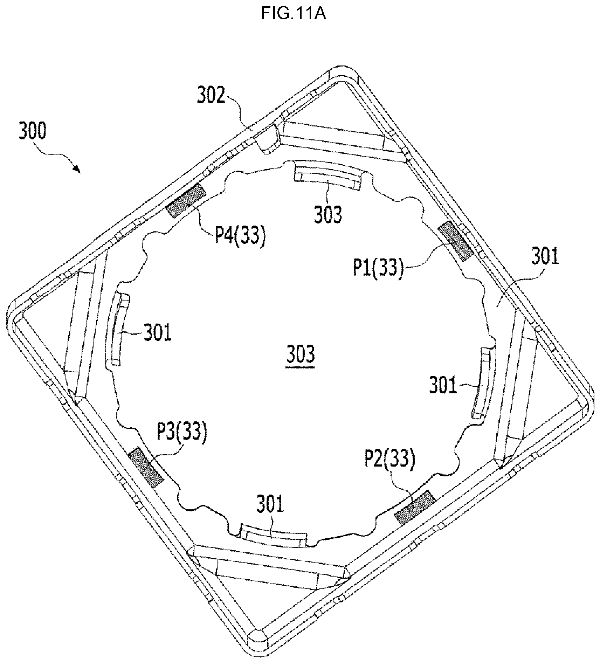

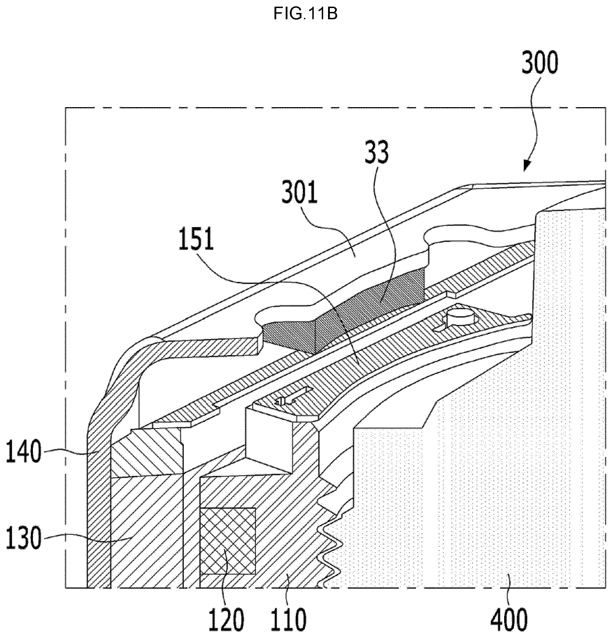

FIG. 11A is a lower perspective view of the third buffer 33 and the cover member 300, and FIG. 11B is a partial sectional view of the lens moving apparatus 100.

Referring to FIGs. 11A and 11B, the third buffer 33 may be disposed on the inner surface of the upper plate of the cover member 300 so as to correspond to or to be opposite to the first surface 10a of the upper surface of the bobbin 110 in the optical-axis direction.

For example, the third buffer 33 may correspond to or may be opposite to the first inner frame 151 of the upper elastic member 150 disposed on the first surface 10a of the upper surface of the bobbin 110 in the optical-axis direction.

For example, the third buffer 33 may include a plurality of buffer stoppers P1 to P4 spaced apart from each other. The plurality of buffer stoppers P1 to P4 may be disposed on the inner surface of the upper plate 310 corresponding to sides of the cover member 300.

For example, the third buffer 33 may be disposed in one region of the inner surface of the upper plate 301 of the cover member 300 located between two adjacent bosses of the cover member 300.

For example, the buffer stoppers P1 to P4 may be disposed in rotational symmetry by a predetermined angle (e.g. 90 degrees) about the optical axis OA of the cover member 300 or a central axis of the opening 301A.

The distance between the boss 303 and the upper surface of the bobbin 110 in the optical-axis direction may be equal to or less than the distance between the third buffer 33 and the upper surface of the bobbin 110.

For example, at the initial position of the AF operation unit, the distance d1 between the boss 303 of the cover member 300 and the bottom surface 119a of the recess 119 of the bobbin 110 may be less than the distance between the third buffer 33 disposed on the cover member 300 and the first surface 10a of the upper surface of the bobbin 110.

For example, at the initial position of the AF operation unit, the distance d1 between the boss 303 of the cover member 300 and the bottom surface 119a of the recess 119 of the bobbin 110 may be less than the distance between the third buffer 33 disposed on the cover member 300 and the first inner frame 151 of the upper elastic member 150 disposed on the first surface 10a of the upper surface of the bobbin 110.

The boss 303 of the cover member 300 and the bottom surface 119a of the recess 119 of the bobbin 110 may collide with each other due to AF driving or external shock, and then the third buffer 33 and the bobbin 110 may collide with each other. That is, each of the third buffer 33 and the first surface 10a of the bobbin 110 and/or the first inner frame 151 disposed on the first surface 10a may correspond to an auxiliary shock point, and may auxiliarily alleviate shock.

A description of the material for the first buffer 31 may be applied or applied with necessary modifications to the material for the third buffer 33. For example, the material for the third buffer 33 may be identical to the material for the first buffer 31.

In another embodiment, the third buffer may not be disposed on the inner surface of the upper plate of the cover member 300 but may be disposed on the first surface 10a of the upper surface of the bobbin 110. For example, in another embodiment, the third buffer may be disposed on the first inner frame 153 located on the first surface 10a of the bobbin 110. In this case, d1 may be equal to or less than the distance between the third buffer and the inner surface of the upper plate 301 of the cover member 300 in the optical-axis direction.

The lens moving apparatus according to the embodiment shown in FIG. 1 is provided with the first buffer 31, the second buffer 32, and the third buffer 33; however, the disclosure is not limited thereto. A lens moving apparatus according to another embodiment may include the first buffer 31 and at least one of the second to third buffers 32 and 33. A lens moving apparatus according to another example may include at least one of the second to third buffers 32 and 33.

As the result of movement of the bobbin 110 in the optical-axis direction due to external shock factors and/or AF driving, the bobbin 110 may collide with the cover member 300 in the upward direction and may collide with the base 210 in the downward direction.

Since stiffness of the first to third buffers 31 to 33 is less than stiffness of the cover member 300, the bobbin 110, and the housing 140, the first to third buffers are easily deformed by external shock. When each of the first to third buffers 31 to 33 is disposed at the main shock point, therefore, a stroke range of the AF operation unit in the optical-axis direction is continuously changed at the time of AF driving, whereby reliability in AF driving may be deteriorated.

Since, in the embodiment, at least one of the first to third buffers 31 to 33 is disposed at the auxiliary shock point as described above, however, it is possible to auxiliarily absorb shock by collision between the bobbin 110 and the cover member 300 and/or between the bobbin 110 and the base 210 due to external shock and/or AF driving, whereby it is possible to prevent damage to the AF operation unit (e.g. the bobbin 110). Even though the first to third buffers 31 to 33 auxiliarily absorb shock, it is possible to improve the effect of preventing damage to the bobbin 110 due to shock absorption, since the first to third buffers 31 to 33 exhibit higher shock absorption than the cover member 300, the bobbin 210, and the base 210.

In addition, at the same time, since the first to third buffers 31 to 33 auxiliarily absorb shock, deformation of the first to third buffers 31 to 33 due to shock is small, whereby it is possible to inhibit abnormal fluctuation in stroke range of the AF operation unit in the optical-axis direction.

Meanwhile, the lens moving apparatuses according to the above embodiment may be used in various fields, such as a camera module or an optical instrument.

For example, the lens moving apparatus 100 according to the embodiment may be included in an optical instrument configured to form an image of an object in a space using reflection, refraction, absorption, interference, diffraction, etc., which are characteristics of light, to increase the visual power of the eyes, to record or reproduce an image formed by a lens, to perform optical measurement, or to propagate or transfer an image. For example, an optical instrument according to an embodiment may be a cellular phone, a mobile phone, a smartphone, a portable smart device, a digital camera, a laptop computer, a digital broadcasting terminal, a personal digital assistant (PDA), a portable multimedia player (PMP), a navigation device, etc.; however, the disclosure is not limited thereto. Any device capable of capturing an image or taking a photograph may be used.

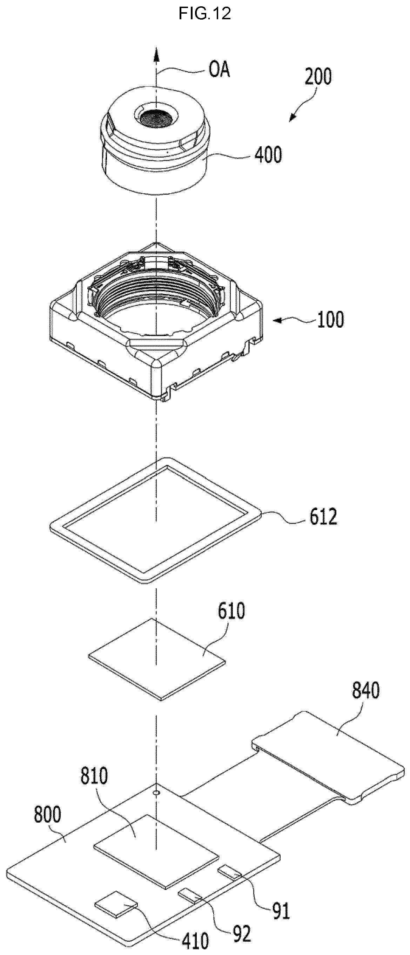

FIG. 12 is an exploded perspective view of a camera module 200 according to an embodiment.

Referring to FIG. 12, the camera module may include a lens module 400, a lens moving apparatus 100, an adhesive member 612, a filter 610, a circuit board 800, an image sensor 810, and a connector 840.

The lens module 400 may include a lens or a lens barrel, and may be mounted or coupled to a bobbin 110 of the lens moving apparatus 100.

For example, the lens module 400 may include one or more lenses and a lens barrel configured to receive one or more lenses. However, a configuration of the lens module is not limited to the lens barrel, and any holder structure capable of supporting one or more lenses may be used. The lens module may be coupled to the lens moving apparatus 100 so as to be movable together with the lens moving apparatus 100.

As an example, the lens module 400 may be thread-engaged with the lens moving apparatus 100. As an example, the lens module 400 may be coupled to the lens moving apparatus 100 by an adhesive (not shown). Meanwhile, light that has passed through the lens module 400 may irradiate the image sensor 810 via the filter 610.

The adhesive member 612 couples or adheres a base 210 of the lens moving apparatus 100 to the circuit board 800. For example, the adhesive member 612 may be epoxy, a thermo-hardening adhesive, or an ultraviolet-hardening adhesive.

The filter 610 may function to prevent a specific-frequency-band component of light passing through the lens barrel 400 from being incident on the image sensor 810. The filter 610 may be an infrared cutoff filter; however, the disclosure is not limited thereto. In this case, the filter 610 may be disposed parallel to an x-y plane.

The infrared cutoff filter may be made of a film material or a glass material. As an example, the infrared cutoff filter may be formed by coating a flat optical filter, such as a cover glass configured to protect an imaging surface, with an infrared cutoff coating material.

The filter 610 may be disposed under the base 210 of the lens moving apparatus 100.

For example, the base 210 of the lens moving apparatus 100 may be provided at a lower surface thereof with a seating portion on which the filter 610 is seated. In another embodiment, the filter may not be disposed on the base but a separate sensor base on which the filter is seated may be provided.

The circuit board 800 may be disposed under the lens moving apparatus 100, and the image sensor 810 may be mounted on the circuit board 800. The image sensor 810 may receive an image included in light incident through the lens moving apparatus 100, and may convert the received image into an electrical signal.

The image sensor 810 may be located so as to have the same optical axis as the lens module 400. As a result, the image sensor may acquire light that has passed through the lens module 400. The image sensor 810 may output radiated light as an image.

The circuit board 800 is conductively connected to a coil 120 of the lens moving apparatus 100.

For example, the circuit board 800 may be provided with terminals 91 and 92 conductively connected to first and second terminals 164-1 and 164-2 of a lower elastic member 150 of the lens moving apparatus 100.

In FIG. 12, two terminals 91 and 92 of the circuit board 800 are shown; however, the disclosure is not limited thereto. The circuit board 800 may include a plurality of terminals necessary to control the camera module, e.g. two or more terminals.

The filter 610 and the image sensor 810 may be disposed spaced apart from each other while being opposite to each other in the first direction.

The connector 840 may be conductively connected to the circuit board 800, and may have a port for conductive connection with an external device.

The camera module 200 may include a controller 410 configured to control AF driving of the lens moving apparatus 100. In another embodiment, the controller 410 may be omitted.

The camera module 200 may further include a motion sensor (not shown) configured to output information about rotational angular velocity based on movement of the camera module 200.

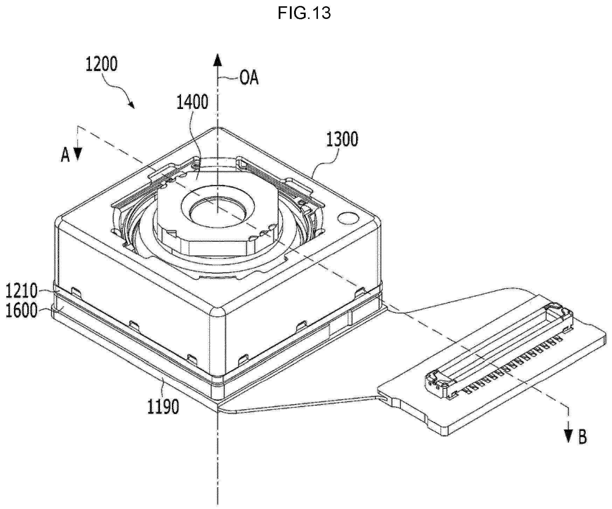

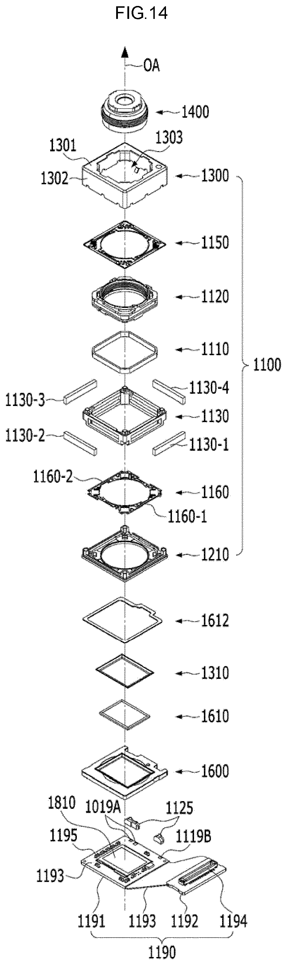

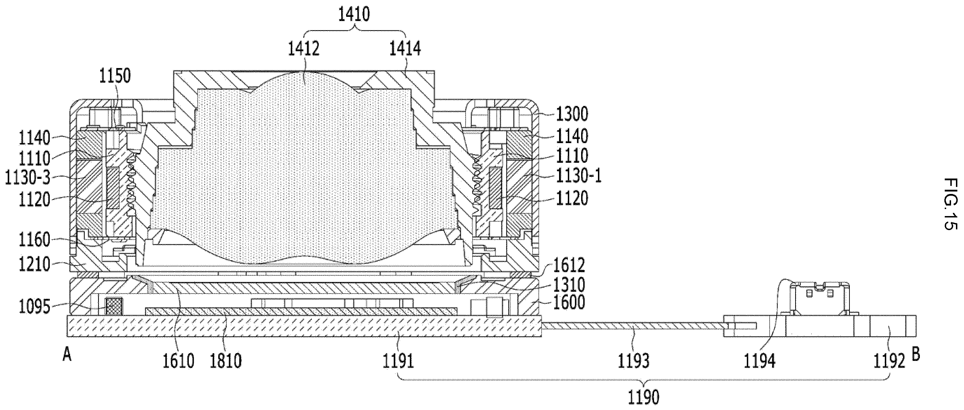

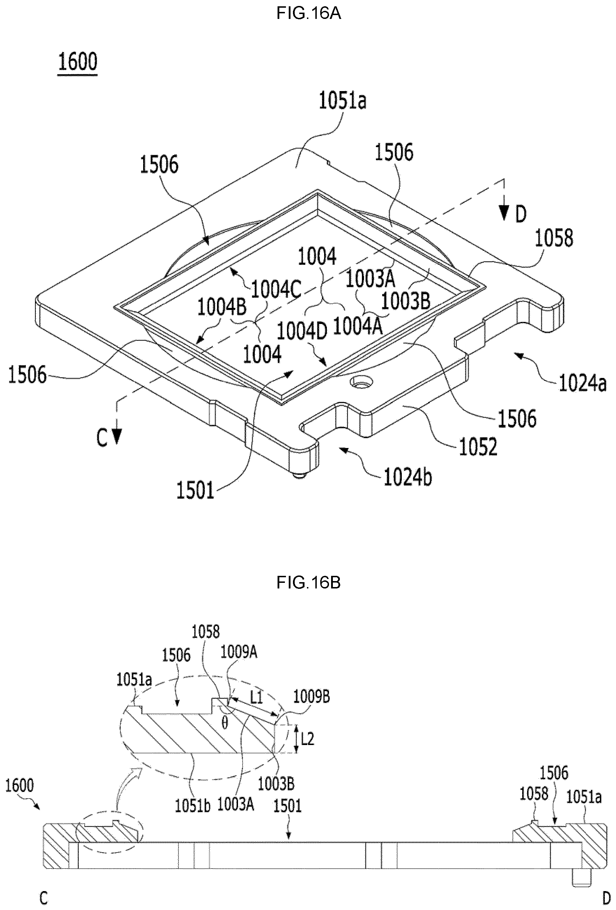

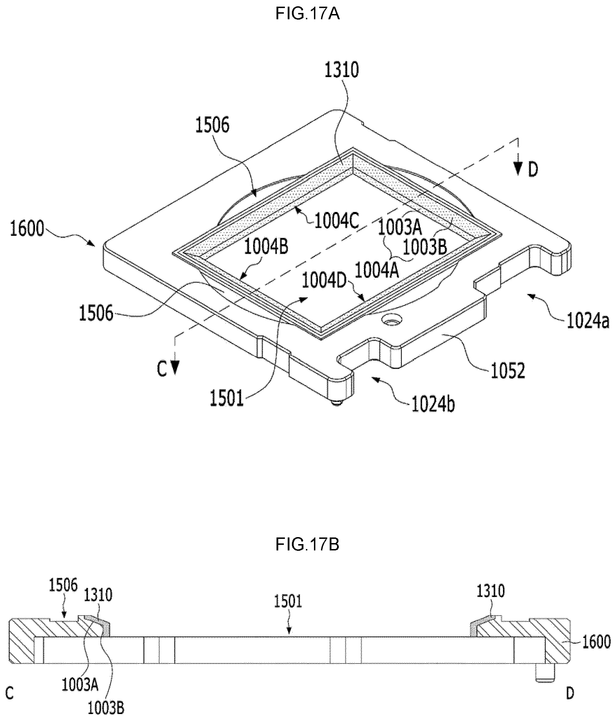

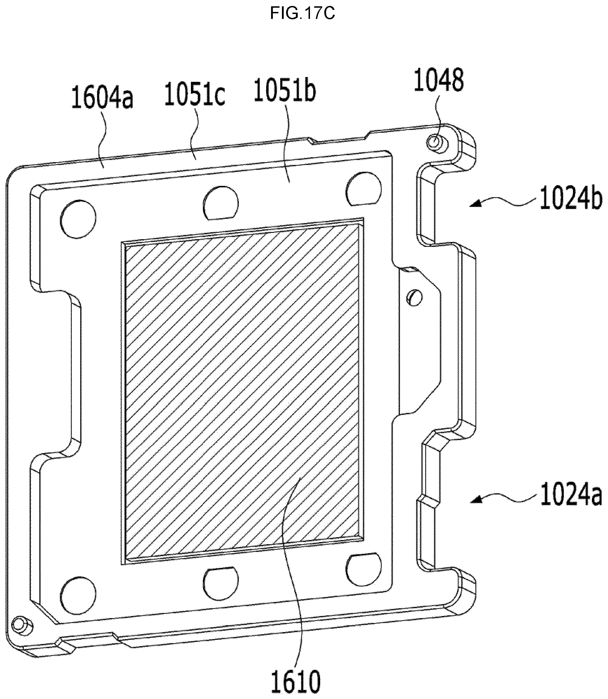

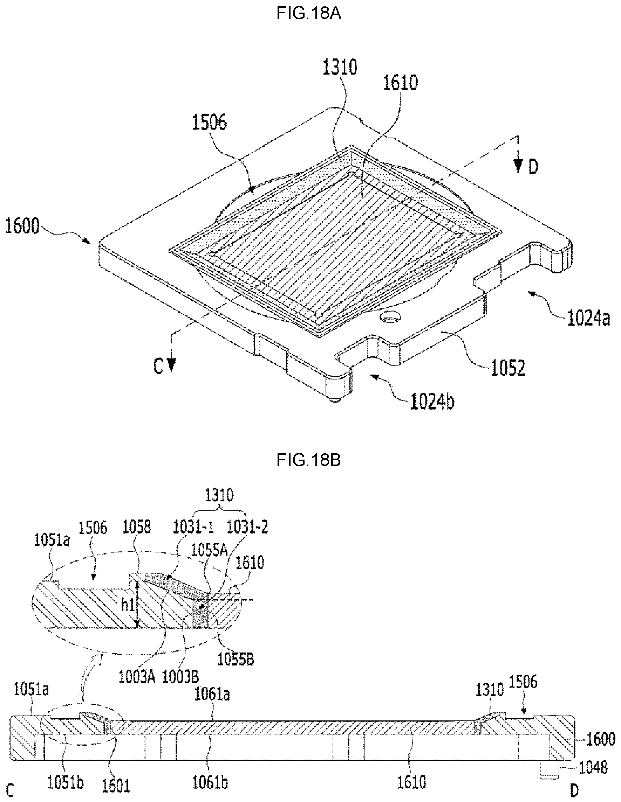

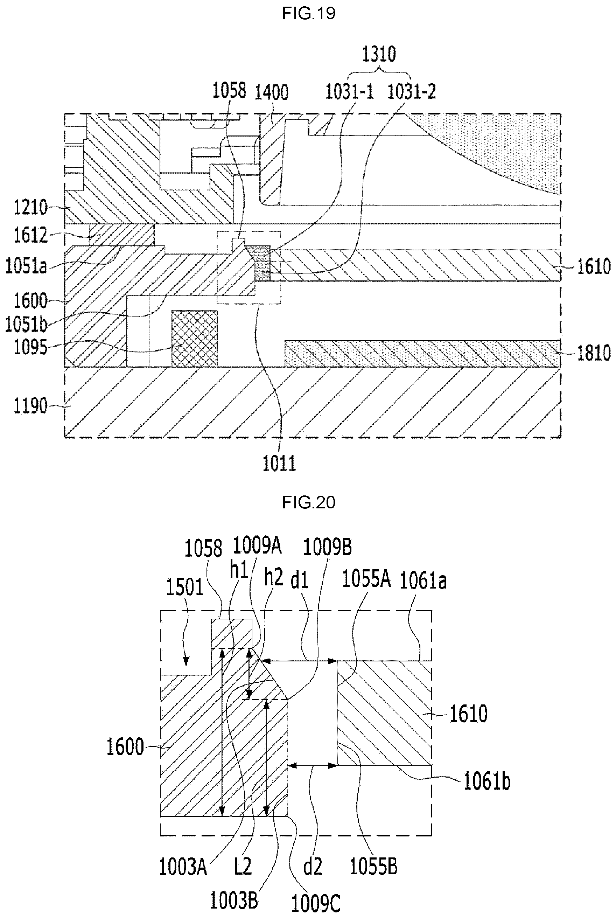

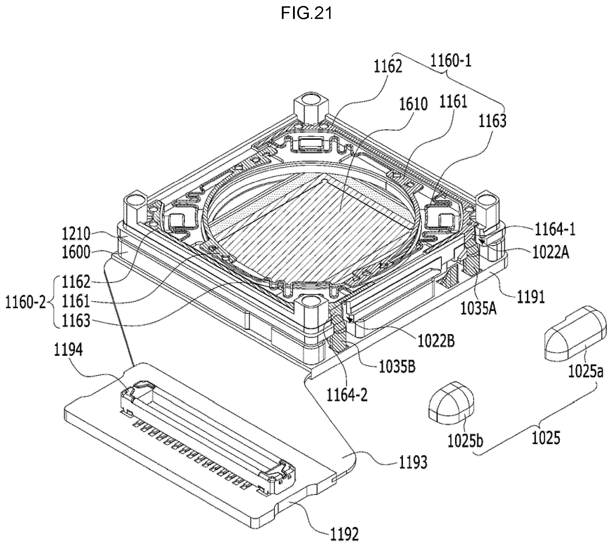

FIG. 13 is a perspective view of a camera module 1200 according to another embodiment, FIG. 14 is a separated perspective view of the camera module 1200 of FIG. 13, FIG. 15 is a sectional view of the camera module in direction AB of FIG. 13, FIG. 16A is a perspective view of a holder 1600, FIG. 16B is a sectional view of the holder 1600 in direction CD of FIG. 16A, FIG. 17A is a perspective view of the holder 1600 and a first adhesive member 1310, FIG. 17B is a sectional view of the holder 1600 and the first adhesive member 1310 in direction CD of FIG. 17A, FIG. 17C is a bottom perspective view of the holder 1600 and a filter 1610, FIG. 18A is a perspective view of the holder 1600, the first adhesive member 1310, and the filter 1610, FIG. 18B is a sectional view of the holder 1600, the first adhesive member 1310, and the filter 1610 in direction CD, FIG. 19 is a sectional view of a part of the camera module 1200 according to the other embodiment, FIG. 20 is an enlarged view of a dotted-line portion 1011 of FIG. 19, and FIG. 21 shows solders 1035A and 1035B configured to conductively connect a circuit board 1190 and first and second terminals 1164-1 and 1164-2 of first and second lower elastic members 1160-1 and 1160-2 to each other.

Referring to FIGs. 13 to 21, the camera module 1200 may include a lens module 1400, a lens moving apparatus 1100, a filter 1610, a holder 1600, a first adhesive member 1310, a circuit board 1190, and an image sensor 1810.

Here, the "camera module" may be referred to as an "imaging device" or a "photographing device," and the holder 1600 may be referred to as a "sensor base." In addition, the lens module 1400 may be referred to as a "lens unit" or a "lens assembly." The lens module 1400 may be coupled to the lens moving apparatus 1100, and may include at least one of a lens 1412 and a lens barrel 1414.

In addition, the camera module 1200 may further include a second adhesive member 1612 configured to couple or attach the lens moving apparatus 1100 (e.g. a base 1210) and the holder 1600 to each other.

In addition, the camera module 1200 may further include an adhesive member (not shown) disposed between the holder 1600 and the circuit board 1800.

In addition, the camera module 1200 may further include a circuit element (or an electronic element) 1095 disposed or mounted on the circuit board 1190.

The lens module 1400 may be mounted to a bobbin 1110 of the lens moving apparatus 1100.

The lens moving apparatus 1100 may drive the lens module 1400, and may move the lens module in the optical-axis direction.

The camera module 1200 may be any one of an autofocus (AF) camera module and an optical image stabilization (OIS) camera module. The AF camera module may be a camera module capable of performing only an autofocus function, and the OIS camera module may be a camera module capable of performing an autofocus function and an optical image stabilization (OIS) function.

In FIGs. 13 and 14, the lens moving apparatus 1100 is an AF lens moving apparatus; however, the disclosure is not limited thereto. In another embodiment, the lens moving apparatus 1100 may be an OIS lens moving apparatus. Here, the meaning of "AF" and "OIS" may be identical to what has been described in connection with the AF camera module and the OIS camera module.

In another embodiment, the camera module 1200 may include the lens moving apparatus 100 described with reference to FIGs. 1 to 11B, instead of the lens moving apparatus 1100 of FIG. 14.

The lens moving apparatus 1100 includes a housing 1140, a bobbin 1110 disposed in the housing 1140, the bobbin being configured to allow the lens module 1400 to be mounted thereto, a coil 1120 disposed on the bobbin 1110, a magnet 1130 disposed on the housing 1140, the magnet being opposite to the coil 1120, at least one upper elastic member 1150 coupled to an upper portion of the bobbin 1110 and an upper portion of the housing 1140, a lower elastic member 1160 coupled to a lower portion of the bobbin 1110 and a lower portion of the housing 1140, and a base 1210.

In addition, the lens moving apparatus 1100 further includes a cover member 1300 coupled to the base 1210, the cover member being configured to define a space in which components of the lens moving apparatus 1100 are received together with the base 1210.

The cover member 1300 may be formed in the shape of a box, a lower portion of which is open and which includes an upper plate 1301 and a side plate 1302. For example, the lower portion of the cover member 1300 (e.g. a lower portion of the side plate 1302) may be coupled to the base 1210. The shape of the upper plate 1301 of the cover member 1300 may be circular or polygonal, e.g. quadrangular or octagonal; however, the disclosure is not limited thereto. The cover member 1300 may be provided in the upper plate 1301 thereof with an opening 1303, through which the lens module 1400 coupled to the bobbin 1110 is exposed to external light.

For example, the coil 1120 may be connected to at least one of the upper elastic member 1150 and the lower elastic member 1160. For example, the lower elastic member 1160 may include two lower elastic members 1160-1 and 1160-2, e.g. lower springs, and the coil 1120 may be connected to the two lower elastic members 1160-1 and 1160-2.

The upper elastic member 1150 includes a first inner frame (or a first inner portion) coupled to the bobbin 1110, a first outer frame (or a first outer portion) coupled to the housing 1140, and a first connection portion configured to connect the first inner frame and the first outer frame to each other.

In addition, each of the lower elastic members 1160-1 and 1160-2 may include a second inner frame (or a second inner portion) 161 coupled to the bobbin 1110, a second outer frame (or a second outer portion) 162 coupled to the housing 1140, and a second connection portion 1163 configured to connect the second inner frame and the second outer frame to each other.

The two lower elastic members 1160-1 and 1160-2 may be conductively connected to the coil 1120. For example, one end of the coil 1120 may be connected to the second inner frame 1161 of the first lower elastic member 1160-1, and the other end of the coil 1120 may be connected to the second inner frame 1161 of the second lower elastic member 1160-2.

The first lower elastic member 1160-1 may include a first terminal 1164-1, and the second lower elastic member 1160-2 may include a second terminal 1164-2 (see FIG. 21). A driving signal for the coil 1120 may be input from the outside via the first and second terminals 1164-1 and 1164-2.

The first terminal 1164-1 may be bent from the second outer frame 1162 of the first lower elastic member 1160-1 to an outer surface (or a "first outer surface") of the base 1210.

The second terminal 1164-2 may be bent from the second outer frame 1162 of the second lower elastic member 1160-2 to the outer surface (or the "first outer surface") of the base 1210.

At least a part of each of the first and second terminals 1164-1 and 1164-2 may be disposed on an outer surface of the holder 1600 and may be conductively connected to the circuit board 1190. The circuit board 1190 may provide a driving signal to the coil 1120 via the first and second terminals 1164-1 and 1164-2 of the first and second lower elastic members 1160-1 and 1160-2.

For example, the first terminal 1164-1 may be disposed in a first recess 1022A of the base 1210 and a first recessed portion 1024a of the holder 1600, and the second terminal 1164-2 may be disposed in a second recess 1022B of the base 1210 and a second recessed portion 1024b of the holder 1600.

The first terminal 1164-1 may be conductively connected to a first pad (or a first terminal) 1019A of the circuit board 1190 by the first solder 1035A, and the second terminal 1164-2 may be conductively connected to a second pad (or a second terminal) 1019B of the circuit board 1190 by the second solder 1035B. The first and second pads 1035A and 1035B may be formed on a first board 1191.

The camera module 1200 may further include a protective material 1025 configured to wrap the terminals 1164-1 and 1164-2 and the solders 1035A and 1035B.

A first protective material 1025a may be disposed in the first recess 1022A of the base 1210 and the first recessed portion 1024a of the holder 1600 so as to wrap the first solder 1035A and the first terminal 1164-1. The first protective material 1025a may protect the first solder 1035A and the first terminal 1164-1 from external shock and may prevent deterioration in reliability of conductive connection between the first solder 1035A and the first terminal 1164-1.

In addition, a second protective material 1025b may be disposed in the second recess 1022B of the base 1210 and the second recessed portion 1024b of the holder 1600 so as to wrap the second solder 1035B and the second terminal 1164-2. The second protective material 1025b may protect the second solder 1035B and the second terminal 1164-2 from external shock and may prevent deterioration in reliability of conductive connection between the second solder 1035B and the second terminal 1164-2.

The coil 1120 may be disposed on an outer surface of the bobbin 1110. For example, the coil 1120 may be wound on the outer surface of the bobbin 1110 in a ring shape; however, the disclosure is not limited thereto. A driving signal may be provided to the coil 1120. The driving signal may be a current form or a voltage form, and may include at least one of a direct-current signal and an alternating-current signal.

The magnet 1130 may be disposed on a side portion of the housing 1140. The magnet 1130 may include a plurality of magnets 1130-1 to 1130-4, and the magnet 1130 disposed on the housing 1140 may correspond to, may be opposite to, or may overlap the coil 1120 in a direction perpendicular to the optical axis OA.

The bobbin 1110 and the lens module 1400 coupled thereto may be moved in the optical-axis direction due to interaction between the magnet 1130 and the coil 1120 having the driving signal provided thereto, whereby displacement of the bobbin 1110 in the optical-axis direction may be controlled, and therefore AF driving may be implemented.

Also, in order to perform AF feedback driving, the lens moving apparatus 1100 of the camera module 1200 may further include a sensing magnet (not shown) disposed on the bobbin 1110 and an AF position sensor (e.g. a Hall sensor) (not shown) disposed on the housing 1140 and/or the base 1210 so as to correspond to, to be opposite to, or to overlap the sensing magnet.

In addition, the lens moving apparatus 1100 may further include an AF circuit board disposed on the housing 1140, the AF circuit board being configured to allow the AF position sensor to be mounted thereon. At this time, the circuit board may be conductively connected to the coil 1120 and the AF position sensor, and a driving signal may be provided to each of the coil 1120 and the AF position sensor through the circuit board.

When the AF position sensor is implemented by a Hall sensor alone, a driving signal from the outside may be provided to the circuit board, and the driving signal may be provided to the coil 1120 through the circuit board and the two elastic members 1160-1 and 1160-2 connected to the circuit board.

When the AF position sensor is a driver IC including a Hall sensor, a driving signal is provided from the AF position sensor to the circuit board, and the driving signal may be provided to the coil 1120 through the two elastic members 1160-1 and 1160-2 connected to the circuit board.

The AF position sensor may output an output signal based on the result of the sensing magnet sensing a magnetic field due to movement of the bobbin 100. The output of the AF position sensor may be transmitted to the circuit board, and may be output to the outside through the circuit board.

In another embodiment, the AF position sensor may be disposed on the bobbin, and the sensing magnet may be disposed on the housing. In addition, the lens moving apparatus 1100 may further include a balancing magnet disposed on the bobbin 1110 and disposed at an opposite side of the sensing magnet.

A camera module according to another embodiment includes a housing coupled to the lens module 1400, the housing being configured to fix the lens module 1400, instead of the lens moving apparatus 1100 of FIG. 13. The housing may be coupled or attached to an upper surface of the holder 1600. The housing attached or fixed to the holder 1600 may not be moved, and the position of the housing may be stationary in a state of being attached to the holder 1600.

An OIS lens moving apparatus according to another embodiment may include an OIS coil disposed so as to correspond to, to be opposite to, or to overlap the magnet 1130 in the optical-axis direction, a printed circuit board disposed on the base 1210, and a supporting member having one end coupled to the upper elastic member 1150 and the other end conductively connected to the printed circuit board, in addition to the AF lens moving apparatus. In addition, the OIS lens moving apparatus may further include an OIS position sensor conductively connected to the printed circuit board and disposed on the base 1210.

The holder 1600 may be disposed under the base 1210 of the lens moving apparatus 1100.

For example, the holder 1600 may be disposed under the lens module 1400.

The holder 1600 may include an opening 1501 corresponding to the image sensor 1810.

The opening 1501 of the holder 1600 may be formed through the holder 1600 in the optical-axis direction, and may be referred to as a "hole" or a "through-hole."

For example, the opening 1501 may be formed through the center of the holder 1600, and may be disposed so as to correspond to or to be opposite to the image sensor 1810 (e.g. an active area of the image sensor 1810).

The filter 1610 may be disposed in the opening 1501 of the holder 1600. The filter 1610 may have a plate shape or a flat quadrangular shape; however, the disclosure is not limited thereto.

The shape of the opening 1501 of the holder 1600 may coincide with the shape of the filter 1610, or may have a shape appropriate to receive the filter 1610. For example, when viewed from above, the shape of the opening 1501 may be a polygon (e.g. a quadrangle), a circle, or an oval; however, the disclosure is not limited thereto.

Light that has passed through the lens module 1400 may be incident on the image sensor 1810 via the filter 1610.

The filter 1610 may function to prevent a specific-frequency-band component of light that has passed through the lens module 1400 from being incident on the image sensor 1810. For example, the filter 1610 may be an infrared cutoff filter; however, the disclosure is not limited thereto. In another embodiment, the filter may be infrared pass filter. For example, the filter 1610 may be disposed parallel to the x-y plane perpendicular to the optical axis OA.

The first adhesive member 1310 may be disposed between the filter 1610 and the holder 1600, and may couple the filter 1610 and the holder 1600 to each other.

The filter 1610 may be attached to an inner surface of the opening 1501 of the holder 1600 by the first adhesive member 1310. Here, the first adhesive member 1310 may be epoxy, a thermo-hardening adhesive (e.g. thermo-hardening epoxy), or an ultraviolet-hardening adhesive (e.g. ultraviolet-hardening epoxy).

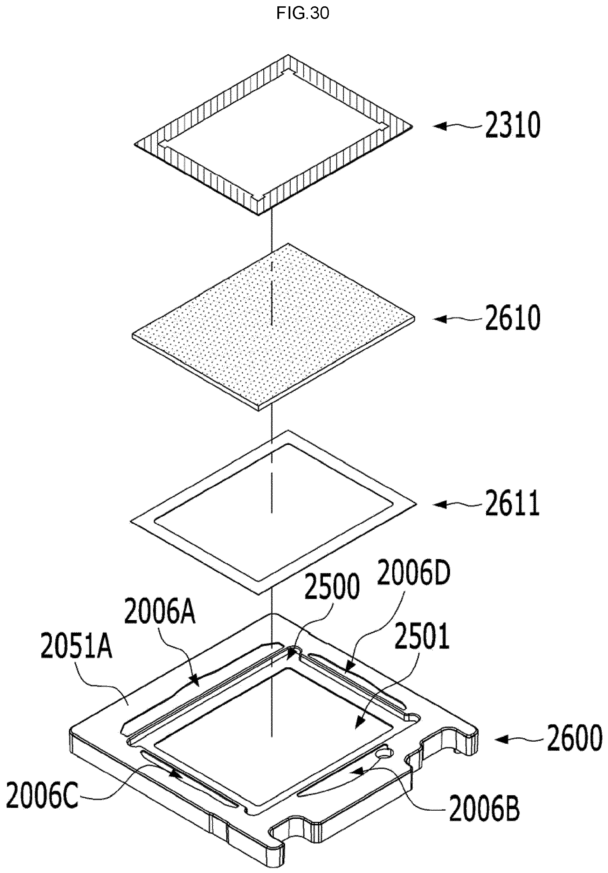

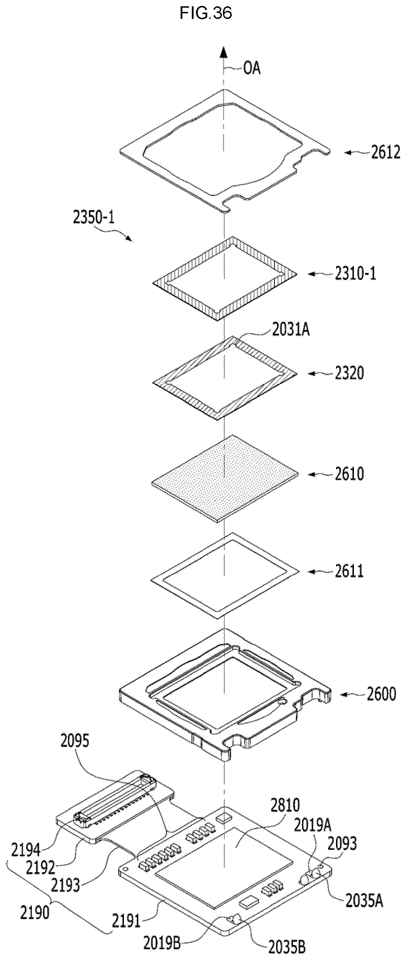

Another embodiment may further include a foreign matter adsorption portion 2310, which will be described with reference to FIGs. 30 to 34B. A further embodiment may further include foreign matter adsorption portions 2310-1, 2310-2, 2310-3, 2310A, 2310B, 2310C, and 2310D and a light blocking member 2320, which will be described with reference to FIGs. 36 to 43.

The second adhesive member 1612 may couple or attach the base 1210 of the lens moving apparatus 1100 to the holder 1600. For example, the second adhesive member 1612 may be disposed between a lower surface of the base 1210 and the upper surface of the holder 1600, and may adhere both to each other.

The second adhesive member 1612 may serve to prevent introduction of foreign matter into the lens moving apparatus 1100 in addition to the adhesion function thereof. For example, the second adhesive member 1612 may be epoxy, a thermo-hardening adhesive, or an ultraviolet-hardening adhesive.

For example, the second adhesive member 1612 may be disposed on the upper surface of the holder 1600 so as to have a ring shape wrapping the circumference of the opening 1501 of the holder 1600; however, the disclosure is not limited thereto.

The holder 1600 may be disposed on the circuit board 1800, and may support the lens moving apparatus 1100. For example, the lower surface of the base 1210 of the lens moving apparatus 1100 and the upper surface of the holder 1600 may be opposite to each other in the optical-axis direction, and both may be attached to each other by the second adhesive member 1612.

For example, the lower surface of the base 1210 of the lens moving apparatus 1100 may abut the upper surface of the holder 1600, and may be supported by the upper surface of the holder 1600.

The circuit board 1190 may be a printed circuit board (PCB).

The circuit board 1190 may be disposed under the holder 1600, and may include a first board 1191, a second board 1192 connected to the first board 1191, a third board 1193 connected to the second board 1192, and a connector 194 connected to the third board 1193.

The holder 1600 may be attached or fixed to an upper surface of the circuit board 1800 by an adhesive member (not shown), such as epoxy, a thermo-hardening adhesive, or an ultraviolet-hardening adhesive. At this time, the adhesive member may be disposed between the lower surface of the holder 1600 and the upper surface of the circuit board 1800.

The image sensor 1810 and the circuit element 1095 may be disposed on the circuit board 1800.

For example, the circuit element 85 may be disposed on or mounted to the first board 1191. In addition, the circuit board 1190 may include at least one terminal disposed or formed on the first board 1191. For example, the number of terminals of the circuit board 1190 may be plural, and the plurality of terminals of the circuit board 1190 may be conductively connected to the image sensor 1810 and the circuit element 1095.

The sensor base 1600, the image sensor 1810, and the circuit element 1095 may be disposed on the first board 1191. For example, each of the first board 1191 and the third board 192 may be a rigid printed circuit board, and the second board 1192 may be a flexible printed circuit board configured to conductively connect the first board 1191 and the third board 1193 to each other; however, the disclosure is not limited thereto. In another embodiment, at least one of the first to third boards may be a rigid printed circuit board or a flexible printed circuit board. In a further embodiment, the first to third boards may be integrated into a single board.

The image sensor 1810 may be mounted on the circuit board 1800 and may be conductively connected to the circuit board 1190. At this time, the image sensor 1810 may include an active area (or an effective image area) on which light that has passed through the filter 1610 is incident such that an image included in the light is formed.

An optical axis of the image sensor 1810 and an optical axis of the lens module 1400 may be aligned with each other. The image sensor 1810 may convert light radiated to the active area into an electrical signal, and may output the converted electrical signal.

For example, the filter 1610 and the active area of the image sensor 1810 may be disposed spaced apart from each other while being opposite to each other in the optical-axis (OA) direction.

The circuit element 1095 may be conductively connected to the first board 1191, and may constitute a controller configured to control the image sensor 1810 and the lens moving apparatus 1100. For example, the circuit element 1095 may include at least one of at least one capacitor, a memory, a controller, a sensor (e.g. a motion sensor), and an integrated circuit (IC).

The circuit board 1800 may be conductively connected to the lens moving apparatus 1100.

For example, the circuit board 1800 may be conductively connected to the first and second elastic members 1160-1 and 1160-2 of the lens moving apparatus 1100. For example, the circuit board 1800 may include terminals conductively connected to the first and second elastic members 1160-1 and 1160-2 of the lens moving apparatus 1100 by the solders.

Alternatively, in another embodiment, the circuit board 1800 may be conductively connected to a circuit board of the lens moving apparatus.

For example, a driving signal may be provided to the coil 1120 of the lens moving apparatus 1100 through the circuit board 1800. Alternatively, in another embodiment, a driving signal may be provided to the AF position sensor (or the OIS position sensor) through the circuit board 1800. In addition, output of the AF position sensor (and/or the OIS position sensor) may be transmitted to the circuit board 1800.

The connector 1194 may be conductively connected to the circuit board 1800, and may be provided with a port for conductive connection with an external device.

Although not shown in FIG. 13, another embodiment may further include a reinforcement member disposed under the circuit board 1800 and attached to a lower surface of the circuit board 1800 and a lower surface of the image sensor. Here, the reinforcement member, which is a plate member having a predetermined thickness and hardness, may hermetically seal a through-hole of the circuit board 1800, may stably support the circuit board and the image sensor, and may inhibit damage to the circuit board due to shock or contact from the outside. In addition, the reinforcement member may improve a heat dissipation effect of dissipating heat generated from the image sensor to the outside.

For example, the reinforcement member may be made of a metal material that exhibits high thermal conductivity, such as SUS or aluminum; however, the disclosure is not limited thereto. In another embodiment, the reinforcement member may be made of glass epoxy, plastic, or a synthetic resin.

In an embodiment provided with the reinforcement member, the circuit board 1800 may include an opening or a through-hole, the image sensor may be disposed in the opening or the through-hole of the circuit board, and the image sensor may be disposed on an upper surface of the reinforcement member.

In addition, the reinforcement member may be conductively connected to a ground terminal of the circuit board 1800, whereby the reinforcement member may serve as a ground configured to protect the camera module from electrostatic discharge protection(ESD).

A camera module according to a further embodiment may further include a blocking member disposed on an upper surface of the filter 1610. The blocking member may be referred to as a "masking portion."

For example, the blocking member may be disposed in an edge region of the upper surface of the filter 1610, and may serve to block at least a part of light that has passed through the lens module 1400 and is incident on the edge region of the filter 1610 from passing through the filter 1610. For example, the blocking member may be coupled or attached to the upper surface of the filter 1610 by an adhesive member.

For example, when viewed from above, the filter 1610 may have a quadrangular shape, and the blocking member may be formed along each side of the upper surface of the filter 1610 in symmetry with respect to the filter 1610. For example, the blocking member may be formed so as to have a fixed width at each side of the upper surface of the filter 1610. For example, the blocking member may be made of an opaque material. For example, the blocking member may be provided as an opaque adhesive material coated on the filter 1610 or as a film attached to the filter 1610.

The filter 1610 and the active area of the image sensor 1810 may be disposed so as to be opposite to or to overlap each other in the optical-axis direction, and the blocking member may not overlap the active area of the image sensor 1810 in the optical-axis direction. In addition, at least a part of the blocking member may overlap the terminal of the circuit board 1800 and/or a wire in the optical-axis direction.

Since the blocking member is disposed such that at least a part of the blocking member overlaps the terminal of the circuit board 1800 and/or the wire, it is possible to block light directed to the terminal of the circuit board 1800 and/or the wire, among light that has passed through the lens module 1400, whereby it is possible to prevent the occurrence of a flare phenomenon, and therefore it is possible to prevent distortion of an image formed on the image sensor 1810 or deterioration in quality of the image.

Referring to FIGs. 16A to 18B, the holder 1600 may include an inner surface 1004.

The inner surface 1004 may be referred to as an inner wall or an inner circumferential surface. The opening 1501 of the holder 1600 may be formed by the inner surface 1004 of the holder 1600.

When the shape of the opening 1501 is quadrangular when viewed from above, the inner surface 1004 of the holder 1600 may include four inner surfaces 1004a to 1004d.

Although not shown in FIG. 16A, for example, a recess may be formed in at least one of the four inner surfaces 1004a to 1004d.

The inner surface 1004 of the holder 1600 may include a first surface 1003A abutting or adjacent to an upper surface 1051a of the holder 1600 and a second surface 1003B located between the first surface 1003A and a lower surface 1051b of the holder 1600. The first surface 1003A and the second surface 1003B may be connected to or may contact each other.

The inclination angle of the first surface 1003A and the inclination angle of the second surface 1003B are different from each other based on the upper surface or the lower surface of the holder 1600.

The upper surface 1051a of the holder 1600 may be a surface opposite to the base 1210 (and/or the lens module 1400), and the lower surface 1051b of the holder 1600 may be an opposite surface of the upper surface 1051a.

For example, the second surface 1003B may connect the first surface 1003A and the lower surface 1051b of the holder 1600 to each other.

The first surface 1003A may be an inclined surface that is inclined from the upper surface 1051a of the holder 1600 by a predetermined angle θ. For example, the predetermined angle θ may be an interior angle between the upper surface 1051a and the first surface 1003A.

The predetermined angle θ may be an obtuse angle. For example, θ may range from 100 degrees to 160 degrees. In another embodiment, θ may range from 120 degrees to 150 degrees. In a further embodiment, θ may range from 130 degrees to 145 degrees.

The first surface 1003A may be an inclined surface that is inclined by the predetermined angle θ.

In FIG. 16B, the first surface 1003A is a single inclined surface; however, the disclosure is not limited thereto. In another embodiment, the first surface may include a plurality of inclined surfaces.

For example, the plurality of inclined surfaces of the first surface 1003A may have different inclination angles. Alternatively, the angle of one of the plurality of inclined surfaces of the first surface 1003A may be different from the angle of at least one of the other inclined surfaces.

In addition, the second surface 1003B may be a surface perpendicular to the upper surface 1051a of the holder 1600; however, the disclosure is not limited thereto. For example, the interior angle between the first surface 1003A and the second surface 1003B may be an obtuse angle.

Each of the first surface 1003A and the second surface 1003B may be a flat surface; however, the disclosure is not limited thereto. In another embodiment, at least one of the first surface 1003A and the second surface 1003B may be a curved surface.

The length (hereinafter referred to as a "first length") L1 of the first surface 1003A in a direction from a first corner 1009A to a second corner 1009B of the holder 1600 may be greater than the length (hereinafter referred to as a "second length") L2 of the second surface 1003B in the optical-axis direction (L1>L2); however, the disclosure is not limited thereto. In another embodiment, the first length may be equal to or less than the second length.

For example, the first corner 1009A may be a portion at which the upper surface 1051a and the first surface 1003A of the holder 1600 join each other. For example, the first corner 1009A may be an upper end of the inner surface 1004 of the holder 1600.

For example, the second corner 1009B may be a portion at which the first surface 1003A and the second surface 1003B of the holder 1600 join each other.

The filter 1610 may be disposed in the opening 1501 of the holder 1600.

When viewed from above, the area of the opening 1501 of the holder 1600 may be greater than the area of the filter 1610. For example, the area of the opening 1501 formed by the second surface 1003B may be greater than the area of the filter 1610.

The filter 1610 may be disposed in the opening 1501 of the holder 1600 using a jig or a supporting portion. At this time, the filter 1610 may be disposed in the opening 1501 of the holder 1600 such that an outer surface of the filter 1610 is opposite to the inner surface 1004 of the holder 1600. Next, the first adhesive member 1310 may be injected or supplied into a space between the outer surface of the filter 1610 and the inner surface of the holder 1600, and the injected first adhesive member 1310 may be hardened. For example, the first adhesive member 1310 may be a UV-hardening adhesive member, such as UV epoxy.

A side surface of the filter 1610 may correspond to, may be opposite to, or may overlap the inner surface 1004 of the holder 1600 in a direction perpendicular to the optical axis OA.

For example, at least a part of the filter 1610 may be spaced apart from the holder 1600. For example, at least a part of the side surface of the filter 1610 may be spaced apart from the inner surface 1004 of the holder 1600.

The first inner surface 1004A and the second inner surface 1004B may be opposite to each other, and the third inner surface 1004C and the fourth inner surface 1004D may be opposite to each other.

The third inner surface 1004C may connect one end of the first inner surface 1004A and one end of the second inner surface 1004B to each other, and the fourth inner surface 1004D may connect the other end of the first inner surface 1004A and the other end of the second inner surface 1004B to each other.

The holder 1600 may be provided with a boss 1058 disposed around the opening 1501 and protruding from the upper surface 1051a of the holder 1600. For example, the boss 1058 may protrude from the upper surface 1051a of the holder 1600 in the optical-axis direction or a vertical direction.

For example, the boss 1058 may be disposed on the upper surface 1051a of the holder 1600 along the inner surface 1004 of the holder 1600. For example, when viewed from above, the shape of the boss 1058 may coincide with or may be similar to the shape of the opening 1501 (e.g. a quadrangular shape); however, the disclosure is not limited thereto.

For example, the boss 1058 may be disposed in a region in which the upper surface 1051a of the holder 1600 and the first surface 1003A of the inner surface 1004 of the holder 1600 join each other. For example, a lower portion or a lower end of the boss 1058 may be adjacent to or may contact the first surface 1003A of the inner surface 1004 of the holder 1600.

In order to fix the filter 1610 to the holder 1600, the first adhesive member 1310 is injected or coated on the inner surface 1004 of the holder 1600, and the boss 1058 may serve to inhibit the first adhesive member 310 from overflowing to the upper surface of the holder 1600.

In addition, an upper surface of the boss 1058 may be located higher than an upper surface 610 of the filter 1610 disposed in the opening 1501 of the holder 1600 in the optical-axis direction; however, the disclosure is not limited thereto. In another embodiment, the upper surface of the boss 1058 may be located lower than the upper surface of the filter 1610.

In a holder 1600 according to another embodiment, the boss 1058 may be omitted.

The holder 1600 may further include a stopper (not shown) disposed adjacent to the opening 1501 and protruding from the upper surface of the holder 1600 in the optical-axis direction. The stopper may be a protrusion.

A lower end of the lens module 1400 moved in the optical-axis direction by AF driving may abut an upper surface of the stopper, but the lower end of the lens module 1400 may not be moved under the stopper any more by the stopper. That is, at the time of AF driving, collision between the lens module 1400 and the upper surface of the filter 1610 may be prevented by the stopper.

The holder 1600 may include a recess-shaped foreign matter collection portion 1506 depressed from the upper surface 1051a. The foreign matter collection portion 1506 may be disposed adjacent to the boss 1058; however, the disclosure is not limited thereto. For example, the foreign matter collection portion 1506 may be located outside the boss 1058 based on the boss 1058; however, the disclosure is not limited thereto.

In addition, the foreign matter collection portion 1506 may be formed adjacent to or abutting the boss 1058; however, the disclosure is not limited thereto. In another embodiment, the foreign matter collection portion may be formed spaced apart from the boss.

The foreign matter collection portion 1506 may collect foreign matter introduced from the lens moving apparatus 1100. The foreign matter collection portion 1506 may be referred to as a dust trapper. In FIG. 16A, the holder 1600 may include four foreign matter collection portions 1506; however, the disclosure is not limited thereto. In another embodiment, one or more foreign matter collection portions may be provided.

The holder 1600 may be provided in an outer surface 1052 thereof with at least one recessed portion 1024a and 1024b depressed from the outer surface 1052. Here, the recessed portion 1024a and 1024b may be referred to as a "depressed portion" or a "recess."

For example, the holder 1600 may include four outer surfaces, and may include a first recessed portion 1024a and a second recessed portion 1024b formed in any one of the outer surfaces so as to be spaced apart from each other.

The first and second recessed portions 1024a and 1024b may correspond to or may be opposite to the terminals 1164-1 and 1164-2 of the first and second elastic members 1160-1 and 1160-2 of the lower elastic member 1160.

Each of the first and second depressed portions 1024a and 1024b may include an upper opening that is open to the upper surface 1051a of the holder 1600 and a lower opening that is open to the lower surface 1051b of the holder 1600.

The first and second depressed portions 1024a and 1024b of the holder 1600 may correspond to or may be opposite to the recesses 1022A and 1022B (see FIG. 21) formed in the outer surface of the base 1210 of the lens moving apparatus 1100.

The holder 1600 may include a boss 1604a protruding from the lower surface 1051b thereof.

For example, the lower surface 1051b of the holder 1600 may be a surface located at an opposite side of the upper surface 1051a of the holder 1600.

The boss 1604a of the holder 1600 may be located so as to be connected to or to abut an edge of the lower surface 521b of the holder 1600, and may abut the outer surface of the holder 1600.

When viewed from below, the shape of the boss 1604a may be a quadrangular shape. A third adhesive member may be disposed between a lower surface 1051c of the boss 1604a of the holder 1600 and the circuit board 1800. For example, the third adhesive member may be a thermo-hardening adhesive member, such as thermo-hardening epoxy.

A protrusion 1048 configured to be coupled to a recess or a hole 1093 (see FIG. 14) formed in the circuit board 1800 may be formed on the lower surface 1051c of the boss 604 of the holder 1600.

Referring to FIG. 17B, the first adhesive member 1310 may be disposed on at least one of the first surface 1003A and the second surface 1003B of the inner surface 1004 of the holder 1600.

For example, the first adhesive member 1310 may include a first portion disposed between the first surface 1003A of the inner surface 1004 of the holder 1600 and one region of the outer surface of the filter 1610 and a second portion disposed between the second surface 1003B of the inner surface 1004 of the holder 1600 and the other region of the outer surface of the filter 1610.

The first adhesive member 1310 may abut the boss 1058 of the holder 1600.

The filter 1610 may not overlap the holder 1600 in the optical-axis direction.

The filter 1610 may overlap at least one of the first surface 1003A and the second surface 1003B of the inner surface 1004 of the holder 1600 in a direction perpendicular to the optical axis.

Referring to FIGs. 16B and 18B, the thickness of the filter 1610 may be less than the distance from the lower surface 1051b to the upper surface 1051a of the holder 1600; however, the disclosure is not limited thereto. In another embodiment, the thickness of the filter 1610 may be equal to or greater than the distance from the lower surface 1051b to the upper surface 1051a of the holder 1600. For example, the thickness of the filter 1610 may be the length of the filter 1610 in the optical-axis direction.

A lower surface 61a of the filter 1610 may be located higher than or at the same height as the lower surface 1051b of the holder 1600; however, the disclosure is not limited thereto.

For example, the lower surface 1061b of the filter 1610 may be located at the same height as the lower surface 1051b of the holder 1600 based on an upper surface of the image sensor 1810 or the upper surface of the circuit board 1800, however, the disclosure is not limited thereto.

In another embodiment, the lower surface 1061b of the filter 1610 may be located higher than the lower surface 1051b of the holder 1600. In a further embodiment, the lower surface 1061b of the filter 1610 may be located lower than the lower surface 1051b of the holder 1600.

For example, the lower surface 1061b of the filter 1610 may be located higher than the lower surface 1051b of the holder 1600 and lower than the second corner 1009B of the holder 1600 based on the upper surface of the image sensor 1810 or the upper surface of the circuit board 1800.

In addition, for example, an upper surface 1061a of the filter 1610 may be located higher than or at the same height as the upper surface 1051a of the holder 1600 based on the upper surface of the image sensor 1810 or the upper surface of the circuit board 1800. For example, the upper surface 1061a of the filter 1610 may be located lower than or at the same height as the first corner 1009A of the holder 1600.

In addition, for example, the upper surface 1061a of the filter 1610 may be located higher than the second corner 1009B of the holder 1600 based on the upper surface of the image sensor 1810 or the upper surface of the circuit board 1800.

In another embodiment, the upper surface 1061a of the filter 1610 may be located lower than the second corner 1009B of the holder 1600.

Referring to FIG. 18B, the first adhesive member 1310 may include a first portion 1031-1 disposed between a first region 1055A of the outer surface of the filter 1610 and the first surface 1003A of the inner surface 1004 of the holder 1600 and a second portion 1031-2 disposed between a second region 1055B of the outer surface of the filter 1610 and the second surface 1003B of the inner surface 1004 of the holder 1600.

For example, the first region 1055A of the filter 1610 may be a region located higher than the second corner 1009B of the holder 1600 based on the second corner 1009B, and the second region 1055B may be a region located lower than the second corner 1009B.

The first region 1055A of the filter 1610 may be located above the second region 1055B of the filter 1610. For example, the second region 1055B of the filter 1610 may be located closer to the image sensor 1810 than the first region 1055A.

The first portion 1031-1 of the first adhesive member 1310 may connect the first surface 1003A of the inner surface 1004 of the holder 1600 and the first region 1055A of the outer surface of the filter 1610 to each other, and may attach or fix the first surface 1003A and the first region 1055A to each other.

For example, the length of the first portion 1031-1 of the first adhesive member 1310 in a horizontal direction may be increased in a direction from the lower surface 1051b to the upper surface 1051a of the holder 1600. In addition, for example, the length of the second portion 1031-2 of the first adhesive member 1310 in the horizontal direction may be uniform or fixed. For example, the horizontal direction may be a direction perpendicular to the optical axis.

In addition, the second portion 1031-2 of the first adhesive member 1310 may connect the second surface 1003B of the inner surface 1004 of the holder 1600 and the second region 1055B of the outer surface of the filter 1610 to each other, and may attach or fix the second surface 1003B and the second region 1055B to each other.

For example, the distance between the first region 1055A of the filter 1610 and the first surface 1003A of the inner surface 1004 of the holder 1600 may be gradually increased in the direction from the lower surface 1051b to the upper surface 1051a of the holder 1600.

In addition, for example, the distance between the second region 1055B of the filter 1610 and the second surface 1003B of the inner surface 1004 of the holder 1600 may be uniform or fixed from the lower surface 1051b of the holder 1600 to the second corner 1009B of the holder 1600; however, the disclosure is not limited thereto.

In another embodiment, at least one protrusion (not shown) opposite to the outer surface of the filter 1610 may be formed on at least one of the first surface 1003A and the second surface 1003B of the holder 1600.

Since the first surface 1003A of the inner surface 1004 of the holder 1600 is an inclined surface and d1 is gradually increased in the direction from the lower surface 1051b to the upper surface 1051a of the holder 1600, it is possible to easily inject the first adhesive member 1310 into a space between the inner surface 1004 of the holder 1600 and the outer surface of the filter 1610.

In addition, since the distance between the first region 1055A of the filter 1610 and the first surface 1003A of the inner surface 1004 of the holder 1600 is gradually increased in the direction from the lower surface 1051b to the upper surface 1051a of the holder 1600, it is possible to increase the area of adhesion between the first adhesive member 1310 and the inner surface 1004 of the holder 1600, whereby it is possible to increase or improve the force of adhesion between the holder 1600 and the filter 1610.

A holder of a general camera module is provided with a supporting portion, at least a part of which overlaps a filter in the optical-axis direction, the supporting portion being configured to support the filter. This camera module has the following limitations.

First, when the camera module is designed, the thickness of the camera module in the optical-axis direction is limited by the thickness of the supporting portion. For example, the thickness of the supporting portion may be about 0.17 mm.

In addition, the distance between an image sensor and a lens module may be reduced, whereby the degree of freedom in lens selection may be reduced. In addition, the distance between the filter and the lens module may be reduced, whereby stroke of a lens moving apparatus in the optical-axis direction may be limited, and therefore it may be difficult to secure reliability in AF driving.

In the embodiment, the force of adhesion between the filter 1610 and the holder 1600 is increased, whereby the filter 1610 may be stably attached and fixed to the holder 1600 by the first adhesive member 1310 even though the holder 1600 is not provided with a supporting portion capable of supporting the filter 1610.

In addition, the holder 1600 is not provided with a supporting portion that overlaps the filter 1610 in the optical-axis direction. In the embodiment, therefore, it is possible to increase a height margin of the camera module in the optical-axis direction and to prevent a decrease in distance between the image sensor and the lens module, whereby it is possible to improve the degree of freedom in lens selection. In the embodiment, for example, it is possible to secure a height margin in the optical-axis direction by the thickness of the supporting portion (about 0.17 mm).

In addition, it is possible to sufficiently secure the distance between the filter 1610 and the lens module 1400. In the embodiment, therefore, it is possible to inhibit limitation in stroke of the lens moving apparatus in the optical-axis direction when the thickness of the filter 1610 is large, whereby it is possible to improve reliability in AF driving.

For example, the thickness of the filter 1610 of the camera module according to the embodiment may be 0.2 mm or more. For example, the thickness of the filter 1610 may range from 0.2 mm to 5 mm. For example, the thickness of the filter 1610 may range from 0.2 mm to 1 mm. In addition, for example, the thickness of the filter 1610 may range from 0.4 mm to 1 mm.

For example, the filter 1610 may be a glass filter.

FIG. 19 is a sectional view of a part of the camera module 1200 according to the other embodiment, and FIG. 20 is an enlarged view of a dotted-line portion 1011 of FIG. 19. The first adhesive member 1310 is omitted from FIG. 20.

Referring to FIGs. 19 and 20, the lower surface 1061b of the filter 1610 may be located higher than the lower surface 1051b of the holder 1600 and lower than the second corner 1009B of the holder 1600. In addition, the upper surface 1061a of the filter 1610 may be located lower than the upper surface 1051a of the holder 1600 and higher than the second corner 1009B of the holder 1600.

For example, the lower surface 1061b of the filter 1610 may be located higher than a third corner 9C of the inner surface 1004 of the holder 1600 and lower than the second corner 1009B of the holder 1600. In addition, the upper surface 1061a of the filter 1610 may be located lower than the first corner 1009A of the holder 1600 and higher than the second corner 1009B of the holder 1600. For example, the third corner 9C may be a portion at which the second surface 1003B of the inner surface 1007 of the holder 1600 and the lower surface of the holder 1600 join each other.

The thickness of the filter 1610 may be less than the distance h1 from the lower surface 1051b to the upper surface 1051a of the holder 1600.

d1 may be the distance between the outer surface of the filter 1610 and the first surface 1003A of the inner surface 1004 of the holder 1600. For example, d1 may be the distance between the first region 1055A of the outer surface of the filter 1610 and the first surface 1003A of the inner surface 1004 of the holder 1600. d1 may be gradually increased in the direction from the lower surface 1051b to the upper surface 1051a of the holder 1600.

For example, d1 may range from 0.4 mm to 0.6 mm. For example, d1 may range from 0.4 mm to 0.5 mm. It is preferable for d1 to be greater than 0.4 mm in consideration of the size of a needle of an adhesive injector configured to inject the first adhesive member 1310. The reason for this is that, if d1 is less than 0.4 mm, it is not possible to easily and smoothly coat or inject the first adhesive member 1310 on the inner surface 1004 of the holder 1600. Also, if d1 is greater than 0.6 mm, the distance between the filter 1610 and the first surface 1003A of the inner surface 1004 of the holder 1600 may be too large, whereby the size of the holder may be increased, and therefore the amount of the first adhesive member that is used may be increased.

In addition, d2 may be the distance between the outer surface of the filter 1610 and the second surface 1003B of the inner surface 1004 of the holder 1600. For example, d2 may be the distance between the second region 1055B of the outer surface of the filter 1610 and the second surface 1003B of the inner surface 1004 of the holder 1600.

For example, d2 may be uniform or fixed from the lower surface 1051b to the second corner 1009B of the holder 1600.

For example, d2 may range from 0.05 mm to 0.15 mm. For example, d2 may range from 0.05 mm to 0.1 mm. If d2 is less than 0.05 mm, the distance between the outer surface of the filter 1610 and the inner surface of the holder 1600 may be too small, whereby the holder 1600 and the filter 1610 may collide with each other due to external shock, and therefore at least one thereof may be damaged.

If d2 is greater than 0.15 mm, on the other hand, the size of the holder 1600 may be increased, and therefore the size of the camera module according to the embodiment may be increased.

In addition, the numerical range of d2, which is a range set in consideration of the fact that the center of the filter 1610 is shifted when the holder 1600 and the filter 1610 are assembled, is set in consideration of the area of adhesion of the first adhesive member 1310. For example, if d2 is less than 0.05 mm, the area of the first adhesive member 1310 located between the inner surface of the holder 1600 and the outer surface of the filter 1610 may not be sufficient to stably adhere both to each other. If d2 is greater than 0.15 mm, on the other hand, the amount of the first adhesive member 1310 that is used may be excessively increased.

The length (or the height) h2 of the first surface 1003A of the inner surface 1004 of the holder 1600, which is an inclined surface, in the optical-axis direction may be equal to or less than the thickness (or the height) of the filter 1610.

Since the holder 1600 according to the embodiment does not have a supporting portion that overlaps the filter 600 in the optical-axis direction, it is possible to increase the distance between the filter 600 and the lens module 1400. As a result, limitation in thickness of the filter 1610 may be alleviated, and even though a filter 1610 having a large thickness is used, it is possible to inhibit limitation in stroke in the lens moving apparatus in the optical-axis direction, whereby it is possible to improve reliability in AF driving.

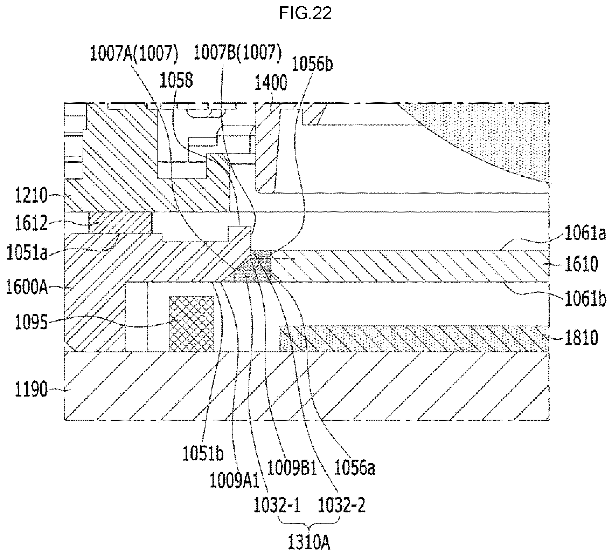

FIG. 22 is a sectional view of a part of a camera module including a holder 1600A according to another embodiment.

Referring to FIG. 22, an inner surface 1007 of the holder 1600A may include a first surface 1007A abutting or adjacent to a lower surface 1051b of the holder 1600A and a second surface 1007B located between the first surface 1007A and an upper surface 1051a of the holder 1600A.

For example, the second surface 1007B may connect the first surface 1007A and the upper surface 1051a (or a boss 1058) of the holder 1600A to each other.

The first surface 1007A may be an inclined surface that is inclined from the lower surface 1051b of the holder 1600A by a predetermined angle. For example, the predetermined angle may be an interior angle between the lower surface 1051b and the first surface 1007A of the holder 1600A.

The predetermined angle may be an obtuse angle, and a description of the predetermined angle θ of FIG. 16B may be applied or applied with necessary modifications thereto.

The first surface 1007A may be an inclined surface that is inclined by the predetermined angle. In FIG. 22, the first surface 1007A is a single inclined surface; however, the disclosure is not limited thereto. In another embodiment, the first surface may include a plurality of inclined surfaces.

For example, the plurality of inclined surfaces of the first surface 1007A may have different inclination angles. Alternatively, the angle of one of the plurality of inclined surfaces of the first surface 1007A may be different from the angle of at least one of the other inclined surfaces.

In addition, the second surface 1007B may be a surface perpendicular to the upper surface 1051a of the holder 1600A; however, the disclosure is not limited thereto. For example, the interior angle between the first surface 1007A and the second surface 1007B may be an obtuse angle.

Each of the first surface 1007A and the second surface 1007B may be a flat surface; however, the disclosure is not limited thereto. In another embodiment, at least one of the first surface 1007A and the second surface 1007B may be a curved surface.

A first adhesive member 1310A may be disposed between the inner surface 1007 of the holder 1600A and the outer surface of the filter 1610.

The first adhesive member 1310A may be disposed on at least one of the first surface 1007A and the second surface 1007B of the holder 1600A.

The first adhesive member 1310A may include a first portion 1032-1 disposed between the first surface 1007A of the holder 1600A and the first region of the outer surface of the filter 1610 and a second portion 1032-2 disposed between the second surface 1007B of the holder 1600A and the second region of the outer surface of the filter 1610.

The first adhesive member 1310A may be spaced apart from the boss 1058; however, the disclosure is not limited thereto. In another embodiment, the first adhesive member may contact the boss 1058.

For example, the length of the first portion 1032-1 of the first adhesive member 1310A in the horizontal direction may be gradually increased in a direction from the upper surface 1051a to the lower surface 1051b of the holder 1600.

The filter 1610 may not overlap the holder 1600A in the optical-axis direction, and may overlap at least one of the first surface 1007A and the second surface 1007B of the inner surface 1007 of the holder 1600 in a direction perpendicular to the optical axis.

The thickness of the filter 1610 may be less than the distance from the lower surface 1051b to the upper surface 1051a of the holder 1600A; however, the disclosure is not limited thereto. In another embodiment, the former may be equal to or greater than the latter.

The lower surface of the filter 1610 may be located higher than or at the same height as the lower surface 1051b of the holder 1600A; however, the disclosure is not limited thereto. In another embodiment, the lower surface of the filter 1610 may be located higher than the lower surface 1051b of the holder 1600A. In yet another embodiment, the lower surface of the filter 1610 may be located lower than the lower surface 1051b of the holder 1600.

In a further embodiment, the lower surface of the filter 1610 may be located higher than the lower surface 1051b of the holder 1600A and lower than a second corner 1009B1 of the holder 1600.

In addition, for example, the upper surface 1061a of the filter 1610 may be located lower than the upper surface 1051a of the holder 1600A based on the upper surface of the image sensor 1810 or the upper surface of the circuit board 1800.

In addition, for example, the upper surface 1061a of the filter 1610 may be located higher than the second corner 1009B1 of the holder 1600A and lower than the upper surface 1051a of the holder 1600 based on the upper surface of the image sensor 1810 or the upper surface of the circuit board 1800. In another embodiment, the upper surface 1061a of the filter 1610 may be located lower than the second corner 1009B of the holder 1600A. In a further embodiment, the upper surface 1061a of the filter 1610 may have the same height as the second corner 1009B of the holder 1600A based on the upper surface of the image sensor 1810 or the upper surface of the circuit board 1800.

The first adhesive member 1310A may include a first portion 1032-1 disposed between a first region 1056a of the outer surface of the filter 1610 and the first surface 1007A of the inner surface 1007 of the holder 1600 and a second portion 1032-2 disposed between a second region 1056b of the outer surface of the filter 1610 and the second surface 1007B of the inner surface 1007 of the holder 1600A. At this time, the first region 1056a of the filter 1610 may be a region located lower than the second corner 1009B1 of the holder 1600A based on the second corner 1009B1, and the second region 1056b may be a region located higher than the second corner 1009B1.

For example, a first corner 1009A1 of the holder 1600A may be a portion at which the lower surface 1051b and the first surface 1007A of the holder 1600 join each other. For example, the first corner 1009A1 may be a lower end of the inner surface 1007 of the holder 1600A.

For example, the second corner 1009B1 may be a portion at which the first surface 1007A and the second surface 1007B of the holder 1600A join each other.

For example, the first region 1056a of the filter 1610 may be located closer to the image sensor 1810 than the second region 1056b.

The first portion 1032-1 of the first adhesive member 1310A may connect the first surface 1007A of the inner surface 1007 of the holder 1600A and the first region 1056a of the outer surface of the filter 1610 to each other, and may attach or fix the first surface 1007A and the first region 1056a to each other.

For example, the length of the first portion 1032-1 of the first adhesive member 1310A in the horizontal direction may be increased in a direction from the upper surface 1051a to the lower surface 1051b of the holder 1600A. In addition, for example, the length of the second portion 1032-2 of the first adhesive member 1310A in the horizontal direction may be uniform or fixed. For example, the horizontal direction may be a direction perpendicular to the optical axis.

In addition, the second portion 1032-2 of the first adhesive member 1310A may connect the second surface 1007B of the inner surface 1007 of the holder 1600A and the second region 1056b of the outer surface of the filter 1610 to each other, and may attach or fix the second surface 1007B and the second region 1056b to each other.

For example, the distance between the first region 1056a of the filter 1610 and the first surface 1007A of the inner surface 1007 of the holder 1600A may be gradually increased in the direction from the upper surface 1051a to the lower surface 1051b of the holder 1600.

In addition, for example, the distance between the second region 1056b of the filter 1610 and the second surface 1007B of the inner surface 1007 of the holder 1600A may be uniform or fixed; however, the disclosure is not limited thereto.

In another embodiment, at least one protrusion (not shown) opposite to the outer surface of the filter 1610 may be formed on at least one of the first surface 1007A and the second surface 1007B of the holder 1600A.

A description of d1, d2, and h1 of FIG. 20 may be applied or applied with necessary modifications to the embodiment of FIG. 22.

The first surface 1007A of the inner surface 1007 of the holder 1600A is an inclined surface. Since the distance between the first region 1056a of the filter 1610 and the first surface 1007A of the inner surface 1007 of the holder 1600A is gradually increased in the direction from the upper surface 1051a to the lower surface 1051b of the holder 1600A, it is possible to increase the area of adhesion between the first adhesive member 1310A and the inner surface 1007 of the holder 1600A, whereby it is possible to increase or improve the force of adhesion between the holder 1600A and the filter 1610.

In the embodiment, the force of adhesion between the filter 1610 and the holder 1600 is increased, whereby the filter 1610 may be stably attached and fixed to the holder 1600A by the first adhesive member 1310A even though the holder 1600A is not provided with a supporting portion capable of supporting the filter 1610.

In addition, the holder 1600A is not provided with a supporting portion that overlaps the filter 1610 in the optical-axis direction. In the embodiment, therefore, it is possible to increase the height margin of the camera module in the optical-axis direction and to prevent a decrease in distance between the image sensor and the lens module, whereby it is possible to improve the degree of freedom in lens selection, and therefore it is possible to improve reliability in AF driving.

A holder according to a further embodiment may have a structure in which the embodiment of FIG. 16B and the embodiment of FIG. 22 are combined with each other. That is, an inner surface of the holder may include a first surface abutting or adjacent to an upper surface of the holder, a second surface abutting or adjacent to a lower surface of the holder, and a third surface configured to connect the first surface and the second surface to each other. At this time, the first surface of the holder may correspond to the first surface 1003A of FIG. 16B, and a description of the first surface 1003A may be applied or applied with necessary modifications thereto. In addition, the first surface of the holder may correspond to the first surface 1007A of FIG. 22, and a description of the first surface 1007A may be applied or applied with necessary modifications thereto. In addition, the third surface of the holder may be a surface perpendicular to the upper surface of the holder.

The first adhesive member may be disposed on at least one of the first surface, the second surface, and the third surface of the holder. In addition, the first adhesive member may be disposed, connected, or attached between at least one of the first surface, the second surface, and the third surface of the holder and the outer surface of the filter 1610.

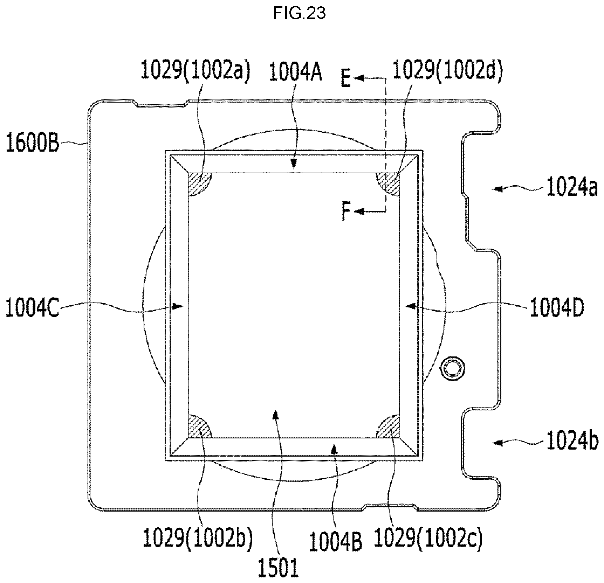

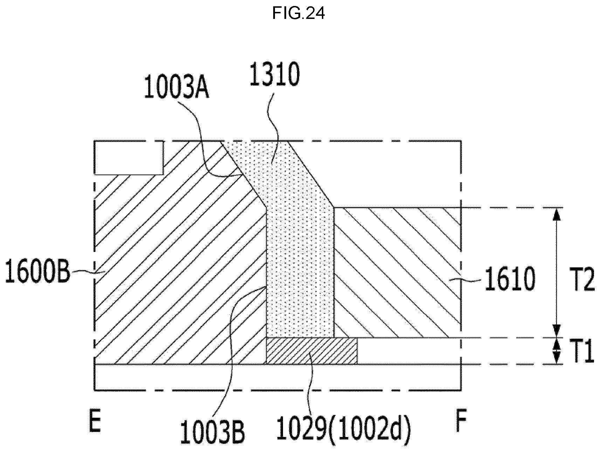

FIG. 23 is a plan view of the holder 1600B according to the further embodiment, and FIG. 24 is a sectional view of the holder 1600B in direction EF of FIG. 23.

Referring to FIGs. 23 and 24, the holder 1600B may be provided with a supporting portion 1029 disposed on at least one corner or corner region of an inner surface 1004 (1004a to 1004d) thereof. A description of the holder 1600 of FIGs. 16A and 16B may be applied or applied with necessary modifications to the holder 1600B excluding the supporting portion 1029.

The supporting portion 1029 may protrude from a second surface 1003B of the holder 1600 in the horizontal direction or the direction perpendicular to the optical axis.

For example, the holder 1600B may be provided with a plurality of bosses 1002a to 1002d disposed spaced apart from each other. Each of the plurality of bosses 1002a to 1002d may be disposed on a corresponding one of the corners of the inner surface of the holder 1600B.

The supporting portion 1029 may overlap the corner or the corner region of the filter 1610 in the optical-axis direction, and may support the corner or the corner region of the filter 1610.

In another embodiment, the supporting portion 1029 may not be provided on the corner or the corner region of the inner surface 1004 (1004a to 1004d) of the holder 1600B but may be provided on a side of the inner surface 1004 of the holder 1600B.

A first thickness T1 of the supporting portion 1029 may be less than a second thickness T2 of the filter 1610.

For example, the first thickness T1 may be equal to or less than 1/2 of the second thickness T2.

For example, the ratio of the first thickness T1 to the second thickness T2 (T1:T2) may be 1:2 to 1:50.

Alternatively, for example, the ratio of the first thickness T1 to the second thickness T2 (T1:T2) may be 1:2 to 1:10. Alternatively, for example, the ratio of the first thickness T1 to the second thickness T2 (T1:T2) may be 1:4 to 1:10.

Since the inner surface of the holder 1600B includes a first surface 1003A and 1003B, the force of adhesion between the filter 1610 and the holder 1600B may be improved by the first adhesive member 1310, as described in the embodiment of FIGs. 16A and 16B. The supporting portion 1029 of FIGs. 23 and 24 may auxiliarily support the filter 1610 together with the first adhesive member 1310, whereby the filter 1610 may be stably supported.

In addition, when the size of the filter 1610 is large, flatness of the filter 1610 in the horizontal direction may be improved by the supporting portion 1029.

Also, in the embodiment of FIG. 23, when the first adhesive member 1310 is injected into a space between the filter 1610 and the holder 1600B, the supporting portion may be used as a means configured to support the filter 1610 with respect to the holder 1600B without using a jig.

In addition, since the supporting portion 1029 serves to assist the first adhesive member 1310 in order to support the filter 1610, the thickness of the supporting portion 1029 may be less than the thickness of the filter 1610. As a result, it is possible to alleviate an increase in distance between the filter 1610 and the lens module 1400, to alleviate limitation in thickness of the filter 1610, and to alleviate limitation in stroke of the lens moving apparatus in the optical-axis direction.

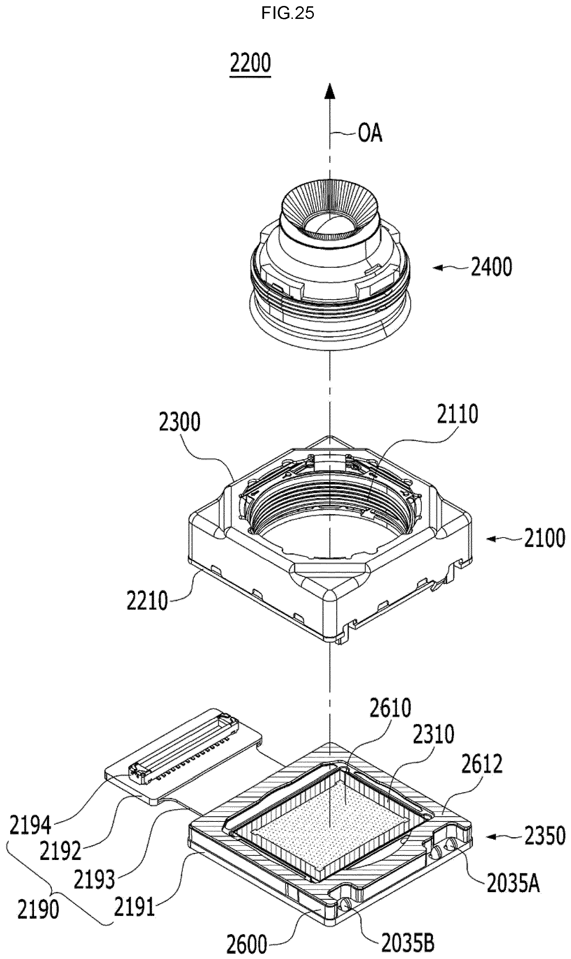

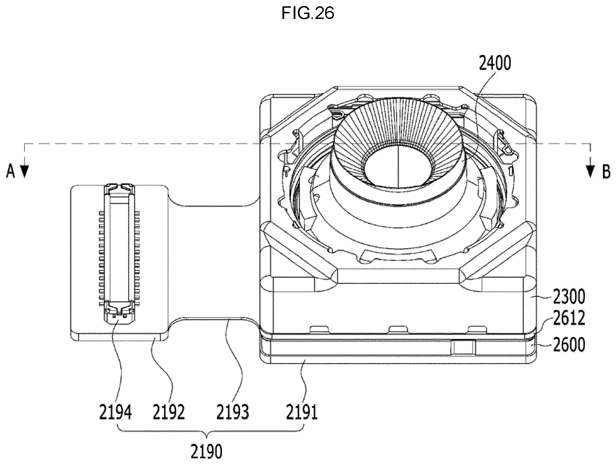

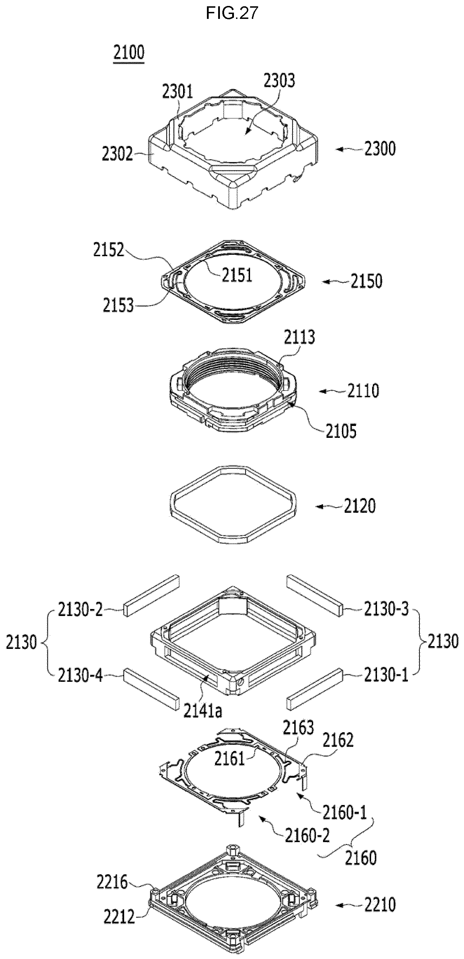

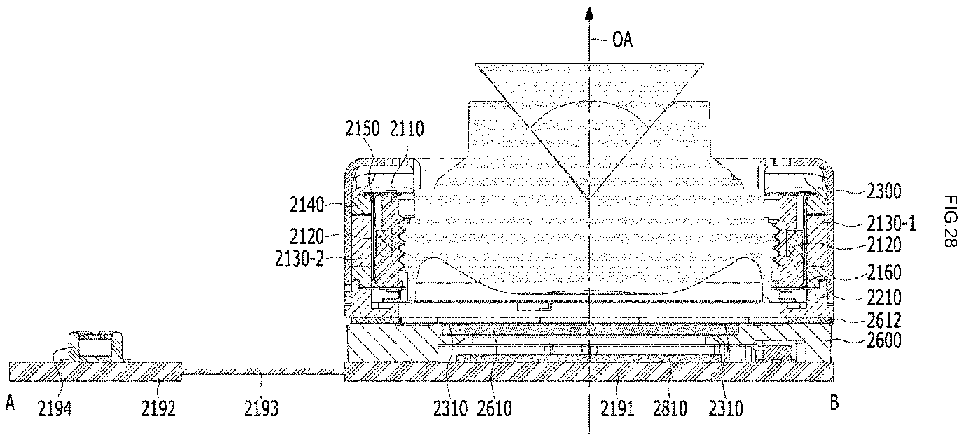

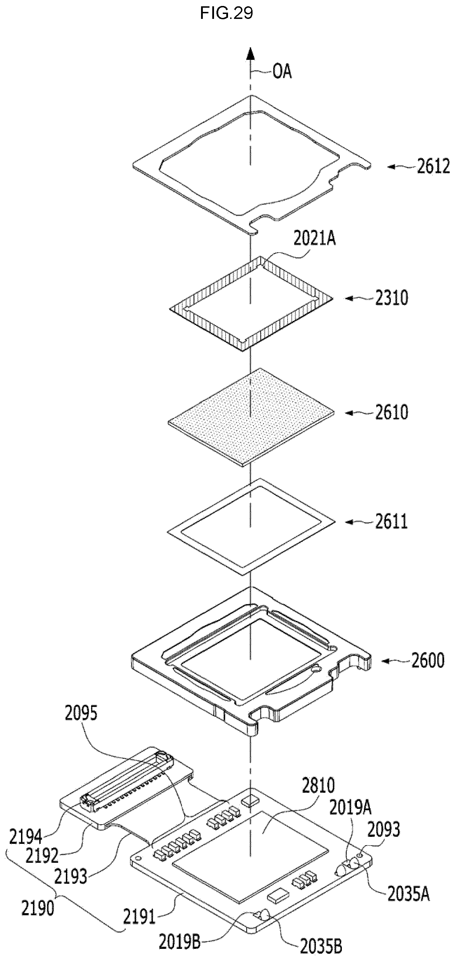

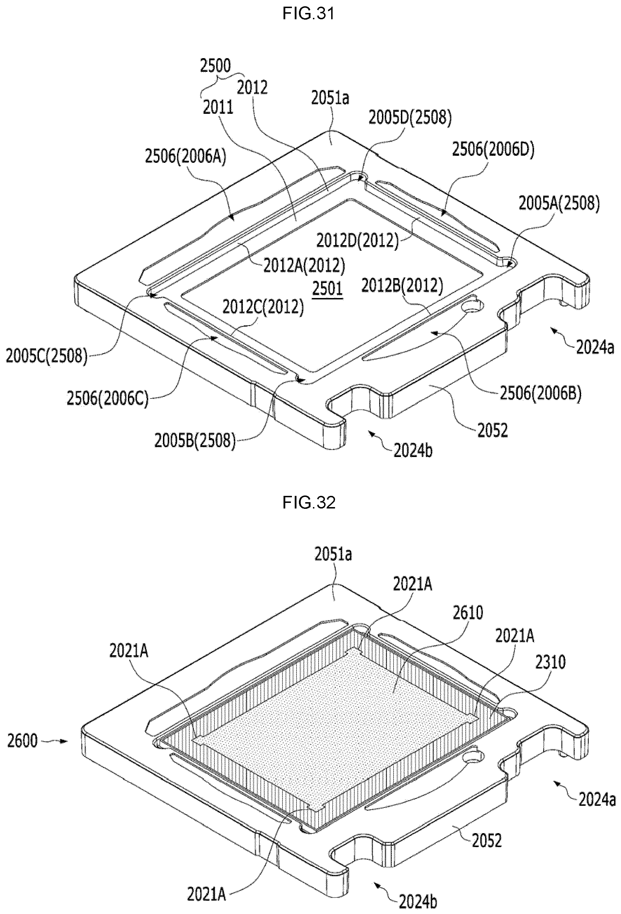

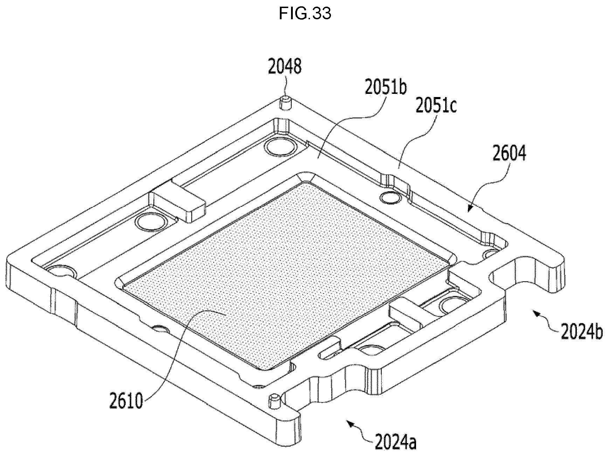

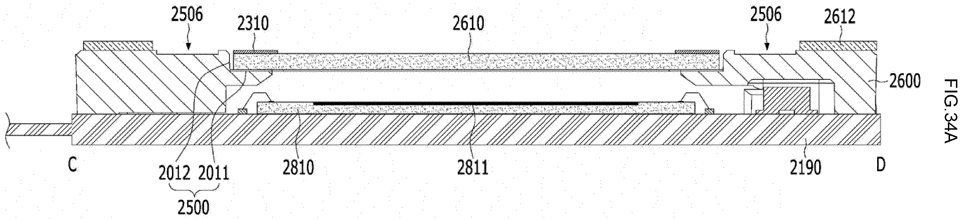

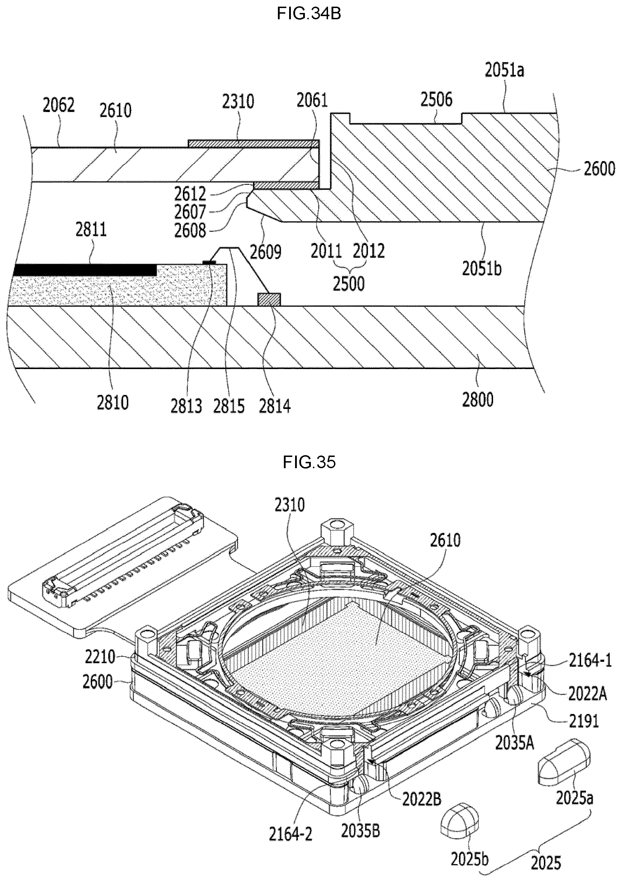

FIG. 25 is a separated perspective view of a camera module 2200 according to an embodiment, FIG. 26 is a coupled perspective view of the camera module 2200 of FIG. 25, FIG. 27 is a separated perspective view of a lens moving apparatus 2100 of FIG. 25, FIG. 28 is a sectional view of the camera module 2200 in direction AB of FIG. 26, FIG. 29 is a separated perspective view of an image sensor unit 2350 of FIG. 25, FIG. 30 is a separated perspective view of a foreign matter adsorption portion 2310, a filter 2610, and a holder 2600 of FIG. 29, FIG. 31 is a perspective view of the holder 2600, FIG. 32 is a coupled perspective view of the holder 2600, the filter 2610, and the foreign matter adsorption portion 2310, FIG. 33 is a bottom perspective view of the holder 2600 and an adhesive member 2612, FIG. 34A is a sectional view of the image sensor unit 2350 of FIG. 5 in direction AB of FIG. 2, FIG. 34B is a partial enlarged view of the sectional view of FIG. 34A, and FIG. 35 shows solders 2035A and 2035B configured to conductively connect a circuit board 2190 and first and second lower elastic members 2160-1 and 2160-2 to each other.

Referring to FIGs. 25 to 35, the camera module 2200 may include a lens module 2400, a lens moving apparatus 2100, and an image sensor unit 2350.

Here, the "camera module" may be referred to as an "imaging device" or a "photographing device," and the holder 2600 may be referred to as a "sensor base." In addition, the lens module 2400 may be referred to as a "lens unit" or a "lens assembly." The lens module 2400 may be coupled to the lens moving apparatus 2100, and may include at least one of a lens 2412 and a lens barrel 2414.

In addition, the lens moving apparatus 2100 may be referred to as a lens moving unit, a voice coil motor (VCM), an actuator, or a lens moving device. Also, in the following description, the term "coil" may be referred to as a coil unit, and the term "elastic member" may be referred to as an elastic unit or a spring. Also, in the following description, the term "terminal" may be referred to as a pad, an electrode, a conductive layer, or a bonding portion.

The lens moving apparatus 2100 may be coupled to the lens module 2400, may move the lens module 2400 in the optical-axis (OA) direction or a direction parallel to the optical axis, and may perform an autofocus function. Here, the "autofocus function" may be a function of moving the lens in the optical-axis direction based on the distance from a subject to automatically focus on the subject in order to obtain a clear image of the subject on the image sensor.

The lens module 2400 may be mounted to a bobbin 2110 of the lens moving apparatus 2100. The lens moving apparatus 2100 may drive the lens module 2400, and may move the lens module 2400 in the optical-axis direction.

The camera module 2200 may be any one of an autofocus (AF) camera module and an optical image stabilization (OIS) camera module. The AF camera module may be a camera module capable of performing an autofocus function, and the OIS camera module may be a camera module capable of performing an autofocus function and an optical image stabilization (OIS) function.

The lens moving apparatus 2100 shown in FIG. 27 is an AF lens moving apparatus; however, the disclosure is not limited thereto. In another embodiment, the lens moving apparatus may be an OIS lens moving apparatus. Here, the meaning of "AF" and "OIS" may be identical to what has been described in connection with the AF camera module and the OIS camera module.

A camera module according to another embodiment may include the lens moving apparatus 100 described with reference to FIGs. 1 to 11B, instead of the lens moving apparatus 2100 of FIG. 27.

The image sensor unit 2350 may include a filter 2610 and an image sensor 2810, and may convert an image that has passed through the lens module 2400 and coupled to the image sensor 2810 into an electrical signal.

Referring to FIGs. 27 and 28, the lens moving apparatus 2100 includes a housing 2140, a bobbin 2110 disposed in the housing 2140, the bobbin being configured to allow the lens module 2400 to be mounted thereto, a coil 2120 disposed on the bobbin 2110, a magnet 2130 disposed on the housing 2140, the magnet being opposite to the coil 2120, an upper elastic member 2150 coupled to an upper portion of the bobbin 2110 and an upper portion of the housing 2140, a lower elastic member 2160 coupled to a lower portion of the bobbin 1110 and a lower portion of the housing 1140, and a base 2210.

In addition, the lens moving apparatus 2100 further includes a cover member 2300 coupled to the base 2210, the cover member being configured to define a space in which components of the lens moving apparatus 2100 are received together with the base 2210.

The coil 2120 may be disposed on an outer circumferential surface or an outer surface of the bobbin 2110. For example, a recess 2015, in which the coil 2120 is disposed or seated, may be provided in the outer surface of the bobbin 2110.

The coil 2120 may have a closed-loop shape or a ring shape. For example, the coil 2120 may be wound on the outer surface of the bobbin 2110 in a ring shape; however, the disclosure is not limited thereto.

The coil 2120 may be connected to at least one of the upper elastic member 2150 and the lower elastic member 2160. A driving signal may be provided to the coil 2120. The driving signal may be a current form or a voltage form, and may include at least one of a direct-current signal and an alternating-current signal.

At least one of the upper elastic member 2150 and the lower elastic member 2160 may include two or more elastic members, and the coil 2120 may be conductively connected to at least one of the upper elastic member 2150 and the lower elastic member 2160.

For example, the lower elastic member 2160 may include two lower elastic members 2160-1 and 2160-2, e.g. lower springs, and the coil 2120 may be connected to the two lower elastic members 2160-1 and 2160-2.

The upper elastic member 2150 includes a first inner frame (or a first inner portion) coupled to the bobbin 2110, a first outer frame (or a first outer portion) coupled to the housing 2140, and a first connection portion configured to connect the first inner frame and the first outer frame to each other.

In addition, each of the lower elastic members 2160-1 and 2160-2 may include a second inner frame (or a second inner portion) 161 coupled to the bobbin 2110, a second outer frame (or a second outer portion) 162 coupled to the housing 2140, and a second connection portion 163 configured to connect the second inner frame and the second outer frame to each other.

The two lower elastic members 2160-1 and 2160-2 may be conductively connected to the coil 2120. For example, one end of the coil 2120 may be connected to the second inner frame 2161 of the first lower elastic member 2160-1, and the other end of the coil 2120 may be connected to the second inner frame 2161 of the second lower elastic member 2160-2.

The first lower elastic member 2160-1 may include a first terminal 2164-1, and the second lower elastic member 2160-2 may include a second terminal 2164-2 (see FIG. 35). Each of the first and second terminals 2164-1 and 2164-2 may be conductively connected to the circuit board 2190 via a solder. A driving signal for the coil 2120 may be input from the outside via the first and second terminals 2164-1 and 2164-2.

The first terminal 2164-1 may be bent from the second outer frame 2162 of the first lower elastic member 2160-1 to an outer surface (or a "first outer surface") of the base 2210.

The second terminal 2164-2 may be bent from the second outer frame 2162 of the second lower elastic member 2160-2 to the outer surface (or the "first outer surface") of the base 2210.

At least a part of each of the first and second terminals 2164-1 and 2164-2 may be disposed on an outer surface of the holder 2600 and may be conductively connected to the circuit board 2190. The circuit board 2190 may provide a driving signal to the coil 2120 via the first and second terminals 2164-1 and 2164-2 of the first and second lower elastic members 2160-1 and 2160-2.

Referring to FIG. 35, for example, the first terminal 2164-1 may be disposed in a first recess 2022A of the base 2210 and a first recessed portion 2024a of the holder 2600, and the second terminal 2164-2 may be disposed in a second recess 2022B of the base 2210 and a second recessed portion 2024b of the holder 2600.

The first terminal 2164-1 may be conductively connected to a first pad (or a first terminal) 2019A of the circuit board 2190 by the first solder 2035A, and the second terminal 2164-2 may be conductively connected to a second pad (or a second terminal) 2019B of the circuit board 2190 by the second solder 2035B. The first and second pads 2019A and 2019B may be formed on a first board 2191.

The camera module 2200 may further include a protective material 2025 configured to wrap the terminals 2164-1 and 2164-2 and the solders 2035A and 2035B.

The protective material 2025 may include a first protective material 2025a and a second protective material 2025b.

The first protective material 2025a may be disposed in the first recess 2022A of the base 2210 and the first recessed portion 2024a of the holder 2600 so as to wrap the first solder 2035A and the first terminal 2164-1.

The first protective material 2025a may protect the first solder 2035A and the first terminal 2164-1 from external shock and may prevent deterioration in reliability of conductive connection between the first solder 2035A and the first terminal 2164-1.

In addition, the second protective material 2025b may be disposed in the second recess 2022B of the base 2210 and the second recessed portion 2024b of the holder 2600 so as to wrap the second solder 2035B and the second terminal 2164-2. The second protective material 2025b may protect the second solder 2035B and the second terminal 2164-2 from external shock and may prevent deterioration in reliability of conductive connection between the second solder 2035B and the second terminal 2164-2.

The housing 2140 is disposed in the cover member 2300. The housing 2140 supports the magnet 2130. The housing 2140 may generally have a hollow pillar shape.

The housing 2140 may be provided with an opening (or a hollow) in which the bobbin 2110 is received, and the opening of the housing 2140 may be a through-hole formed through the housing 2140 in the optical-axis direction.

For example, a seating portion 2141a, in which the magnet 2130 is seated, disposed, or fixed, may be provided at a side portion of the housing 2140. The seating portion 2141a may be an opening or a through-hole formed through the side portion of the housing 2140; however, the disclosure is not limited thereto. In another embodiment, the seating portion may be a recess or a concave recess.

In addition, a guide recess 2148, into which a boss 2216 of the base 210 is inserted or to which the boss of the base is fastened or coupled, may be provided in a lower portion of an outer surface of a corner portion of the housing 2140.

The magnet 2130 may be disposed on the side portion (i.e. the seating portion 2141a) of the housing 2140. The magnet 2130 may include a plurality of magnets 2130-1 to 2130-4, and the magnet 2130 disposed on the housing 2140 may correspond to, may be opposite to, or may overlap the coil 2120 in a direction perpendicular to the optical axis OA.

The bobbin 2110 and the lens module 2400 coupled thereto may be moved in the optical-axis direction due to interaction between the magnet 2130 and the coil 2120 having the driving signal provided thereto, whereby displacement of the bobbin 2110 in the optical-axis direction may be controlled, and therefore AF driving may be implemented.

Also, in order to perform AF feedback driving, the lens moving apparatus 2100 of the camera module 2200 may further include a sensing magnet (not shown) disposed on the bobbin 2110 and an AF position sensor (e.g. a Hall sensor) (not shown) disposed on the housing 2140 and/or the base 2210 so as to correspond to, to be opposite to, or to overlap the sensing magnet.

In addition, the lens moving apparatus 2100 may further include an AF circuit board disposed on the housing 2140, the AF circuit board being configured to allow the AF position sensor to be mounted thereon. At this time, the circuit board may be conductively connected to the coil 2120 and the AF position sensor, and a driving signal may be provided to each of the coil 2120 and the AF position sensor through the circuit board. For example, the circuit board may include terminals conductively connected to the coil 2120 and the AF position sensor.

When the AF position sensor is implemented by a Hall sensor alone, a driving signal from the outside may be provided to the circuit board, and the driving signal may be provided to the coil 2120 through the circuit board and the two elastic members 2160-1 and 2160-2 connected to the circuit board.

When the AF position sensor is a driver IC including a Hall sensor, a driving signal is provided from the AF position sensor to the circuit board, and the driving signal may be provided to the coil 2120 through the two elastic members 2160-1 and 2160-2 connected to the circuit board.

The AF position sensor may output an output signal based on the result of the sensing magnet sensing a magnetic field due to movement of the bobbin 2110. The output of the AF position sensor may be transmitted to the circuit board, and may be output to the outside through the circuit board.

In another embodiment, the AF position sensor may be disposed on the bobbin, and the sensing magnet may be disposed on the housing. In addition, the lens moving apparatus 2100 may further include a balancing magnet disposed on the bobbin 2110 and disposed at an opposite side of the sensing magnet.

A camera module according to another embodiment includes a housing coupled to the lens module 2400, the housing being configured to fix the lens module 2400, instead of the lens moving apparatus 2100 of FIG. 25. The housing may be coupled or attached to an upper surface of the holder 2600. The housing attached or fixed to the holder 1600 may not be moved, and the position of the housing may be stationary in a state of being attached to the holder 2600.

An OIS lens moving apparatus according to another embodiment includes an OIS coil disposed so as to correspond to, to be opposite to, or to overlap the magnet 2130 in the optical-axis direction, a printed circuit board disposed on the base 2210, and a supporting member having one end coupled to the upper elastic member 2150 and the other end conductively connected to the printed circuit board, in addition to the AF lens moving apparatus. In addition, the OIS lens moving apparatus may further include an OIS position sensor conductively connected to the printed circuit board and disposed on the base 2210.

The cover member 2300 may be formed in the shape of a box, a lower portion of which is open and which includes an upper plate 2301 and a side plate 2302 connected to the upper plate 2301. The housing 2140 may be disposed in the cover member 2300.

A lower end of the side plate 2302 of the cover member 2300 may be coupled to a stair 2211 of the base 2210 via an adhesive member or a sealing member. The cover member 2300 may be provided in the upper plate 2301 thereof with an opening, hole, or hollow 2303, through which the lens module 2400 coupled to the bobbin 2110 is exposed to external light.

The base 2210 may be disposed under the housing 2140. The base 2210 may be disposed under the lower elastic member 2160.

The base 2210 may be coupled to the housing 2140, and may define a receiving space configured to receive the bobbin 2110 and the housing 2140 together with the cover member 2300. The base 2210 may be provided with an opening corresponding to the opening of the bobbin 2110 and/or the opening of the housing 2140, and may be configured in a shape coinciding with or corresponding to the shape of the cover member 2300, such as a quadrangular shape.

A boss 2216 protruding toward the housing 2140 may be formed on the upper surface of the base 2210. The base 2210 may be provided with bosses 2216 protruding from four corners or corner portions thereof by a predetermined height in the upward direction. Here, the bosses 2216 of the base 2210 may be referred to as "pillar portions."

The bosses 2216 of the base 2210 may be inserted into, fastened to, or coupled to the guide recesses 2148 of the housing 2140 by an adhesive member, such as epoxy or silicone.

The image sensor unit 2350 may include a holder 2600, a filter 2610 disposed on the holder 2600, a foreign matter adsorption portion 2310 disposed on the filter 2610, and an image sensor 2810.

The image sensor unit 2350 may further include a circuit board 2190 conductively connected to the lens moving apparatus 2100.

In addition, the image sensor unit 2350 may include an adhesive member 2612 disposed between the lens moving apparatus 2100 and the holder 2600, the adhesive member being configured to couple or attach the lens moving apparatus 2100 (e.g. the base 2210) and the holder 2600 to each other.

In addition, the image sensor unit 2350 may include an adhesive member 2611 disposed between the filter 2610 and the holder 2600, the adhesive member being configured to couple or attach the filter 2610 and the holder 2600 to each other.

In addition, the image sensor unit 2350 may include a circuit element (or an electronic element) 2095 disposed or mounted on the circuit board 2190.

Referring to FIGs. 25, 27, and 29 to 32, the holder 2600 may be disposed under the base 2210 of the lens moving apparatus 2100, and may be disposed on the circuit board 2190.

For example, the holder 2600 may be disposed under the lens module 2400.

For example, the holder 2600 may be disposed on the circuit board 2190, and may receive the filter 2610.

The holder 2600 may support the lens moving apparatus 2100 located thereabove.

A lower surface of the base 2210 of the lens moving apparatus 2100 may be opposite to an upper surface 505 of the holder 2500. For example, the lower surface of the base 2210 of the lens moving apparatus 2100 may be supported by the upper surface 2051a of the holder 2500.

The holder 2600 may include an opening 2501 or a hollow corresponding to the image sensor 2810. The opening 2501 of the holder 2600 may be formed through the holder 2600 in the optical-axis direction, and may be referred to as a "hole" or a "through-hole."

For example, the opening 2501 may be formed through the center of the holder 2600, and may be disposed so as to correspond to or to be opposite to the image sensor 2810 (e.g. an active region of the image sensor 2810).

The holder 2600 may include a seating portion 2500 depressed from the upper surface 2051a.

The seating portion 2500 may include a bottom surface 2011 and an inner surface 2012.

At least a part of the inner surface 2012 of the seating portion 2500 may be opposite to a side surface of the filter 2610.

The inner surface 2012 of the seating portion 2500 may include a first inner surface 2012A, a second inner surface 2012B opposite to the first inner surface 2012A, and a third inner surface 2012C and a fourth inner surface 2012D located between the first inner surface 2012A and the second inner surface 2012B so as to be opposite to each other.

The holder 2600 may include a foreign matter collection portion 2506 depressed from the upper surface 2051a. The foreign matter collection portion 2506 may be recess-shaped.

The foreign matter collection portion 2506 may be disposed adjacent to the seating portion 2500; however, the disclosure is not limited thereto. The foreign matter collection portion 2506 may collect foreign matter introduced from the lens moving apparatus 2100. The foreign matter collection portion 2506 may be referred to as a dust trap.

For example, the foreign matter collection portion 2506 may include a first foreign matter collection portion 2006A formed adjacent to the first inner surface 2012A of the seating portion 2500, a second foreign matter collection portion 2006B formed adjacent to the second inner surface 2012B of the seating portion 2500, a third foreign matter collection portion 2006C formed adjacent to the third inner surface 2012C of the seating portion 2500, and a fourth foreign matter collection portion 2006D formed adjacent to the fourth inner surface 2012D of the seating portion 2500.

In addition, the holder 2600 may include a depressed portion 2508 disposed in a corner region of the inner surface 2012 of the seating portion 2500.

The depressed portion 2508 may be depressed in a direction from the center of the opening 2501 of the seating portion 2500 to the corner region of the inner surface 2012 of the seating portion 2500. The depressed portion 2508 may prevent the adhesive member 2611 configured to attach the filter 2610 to the seating portion 2500, such as UV epoxy, from overflowing out of the seating portion 2500.

For example, the depressed portion 2508 may include a plurality of (e.g. four) depressed portions 2005A to 2005D formed in a plurality of (e.g. four) corner regions of the seating portion 2500; however, the disclosure is not limited thereto. In another embodiment, the depressed portion may be formed on at least one of a plurality of corners of the seating portion 2500.

The opening 2501 of the holder 2600 may be formed in the bottom surface 2011 of the seating portion 2500.

The holder 2600 may be provided in an outer surface 2052 thereof with at least one recessed portion 2024a and 2024b depressed from the outer surface 2052. Here, the recessed portion 2024a and 2024b may be referred to as a "depressed portion" or a "recess."

For example, the holder 2600 may include four outer surfaces, and may include a first recessed portion 2024a and a second recessed portion 2024b formed in any one of the outer surfaces so as to be spaced apart from each other.

The first and second recessed portions 2024a and 2024b may correspond to or may be opposite to the terminals 2164-1 and 2164-2 of the first and second elastic members 2160-1 and 2160-2 of the lower elastic member 2160.

Each of the first and second depressed portions 2024a and 2024b may include an upper opening that is open to the upper surface 2051a of the holder 2600 and a lower opening that is open to the lower surface 2051b of the holder 2600.

The first and second depressed portions 2024a and 2024b of the holder 2600 may correspond to or may be opposite to the recesses 2022A and 2022B formed in the outer surface of the base 2210 of the lens moving apparatus 2100.

The holder 2600 may include a boss 2604 protruding from the lower surface 2051b thereof.

For example, the lower surface 2051b of the holder 2600 may be a surface located at an opposite side of the upper surface 2051a of the holder 2600.

The boss 2604 of the holder 2600 may be located so as to be connected to or to abut an edge of the lower surface 2051b of the holder 2600, and may abut the outer surface of the holder 2600.

When viewed from below, the shape of the boss 2604 may be a polygonal shape (e.g. a quadrangular shape).

An adhesive member configured to couple the holder 2600 and the circuit board 2190 may be disposed between a lower surface 2051c of the boss 2604 of the holder 2600 and an upper surface of the circuit board 1800. For example, the adhesive member may be a thermo-hardening adhesive member, such as thermo-hardening epoxy.

A protrusion 2048 configured to be coupled to a recess or a hole 2093 (see FIG. 29) formed in the circuit board 2190 may be formed on the lower surface 2051c of the boss 2604 of the holder 2600.

In another embodiment, the holder 1600, 1600A or 1600B, the adhesive member 1310, and the filter 1610 described with reference to FIGs. 16A to 24 may be applied, instead of the holder 2600, the adhesive member 2611, and the filter 2610.

The filter 2610 may be disposed in the seating portion 2500 of the holder 2600.

For example, the filter 2610 may be disposed or seated on the bottom surface 2011 of the seating portion 2500. For example, a lower surface of the filter 2610 may abut or may be attached to the bottom surface 2011 of the seating portion 2500.

For example, the adhesive member 2611 may be disposed on the bottom surface 2011 of the seating portion 2500, and an edge of the lower surface of the filter 2610 may be attached or fixed to the bottom surface 2011 of the seating portion 2500 by the adhesive member 2611.

For example, the adhesive member 2611 may be epoxy, a thermo-hardening adhesive (e.g. thermo-hardening epoxy), or an ultraviolet-hardening adhesive (e.g. ultraviolet-hardening epoxy).

In another embodiment, the holder 1600, 1600A or 1600B, the adhesive member 1310 or 1310A, and the filter 1610 described with reference to FIGs. 16A to 24 may be applied or may be applied with necessary modifications, instead of the holder 2600 and the adhesive member 2611 of FIGs. 29 and 30

The filter 2610 may have a plate shape, a flat quadrangular shape, or a polyhedral shape (e.g. a hexahedral shape); however, the disclosure is not limited thereto.

When viewed from above, the shape of the seating portion 2500 may coincide with the shape of the filter 2610, or may have a shape appropriate to receive the filter 2610. For example, when viewed from above, the shape of the seating portion 2500 may be a polygon (e.g. a quadrangle), a circle, or an oval; however, the disclosure is not limited thereto.

For example, the shape of the opening 2501 of the holder 2600 may coincide with the shape of the filter 2610 or the image sensor 2810; however, the disclosure is not limited thereto.

Light that has passed through the lens module 2400 may be incident on the image sensor 2810 via the filter 2610.

The filter 2610 may function to prevent a specific-frequency-band component of light that has passed through the lens module 2400 from being incident on the image sensor 2810. For example, the filter 2610 may be an infrared cutoff filter; however, the disclosure is not limited thereto. In another embodiment, the filter may be an infrared pass filter. For example, the filter 2610 may be disposed parallel to the x-y plane perpendicular to the optical axis OA.

The adhesive member 2612 may couple or attach the base 2210 of the lens moving apparatus 2100 to the holder 2600. For example, the second adhesive member 2612 may be disposed between a lower surface of the base 2210 and the upper surface 2051a of the holder 2600, and may attach both to each other.

The adhesive member 2612 may serve to prevent introduction of foreign matter into the lens moving apparatus 2100 in addition to the adhesion function thereof. For example, the adhesive member 2612 may be epoxy, a thermo-hardening adhesive, or an ultraviolet-hardening adhesive.

For example, the adhesive member 2612 may be disposed on the upper surface of the holder 2600 so as to have a ring shape wrapping the circumference of the opening 2501 of the holder 2600; however, the disclosure is not limited thereto.

The holder 2600 may be disposed on the circuit board 2190, and may support the lens moving apparatus 2100. For example, the lower surface of the base 2210 of the lens moving apparatus 2100 and the upper surface of the holder 2600 may be opposite to each other in the optical-axis direction, and both may be attached to each other by the adhesive member 2612.

The circuit board 2190 may be a printed circuit board (PCB).

The circuit board 2190 may be disposed under the holder 2600, and may include a first board 2191, a second board 2192, a third board 2193 configured to connect the first board 2191 and the second board 2192 to each other, and a connector 2194 connected to the third board 2193.

The holder 2600 may be attached or fixed to an upper surface of the circuit board 2190 by an adhesive member (not shown), such as epoxy, a thermo-hardening adhesive, or an ultraviolet-hardening adhesive. At this time, the adhesive member may be disposed between the lower surface of the holder 2600 and the upper surface of the circuit board 2190.

The image sensor 2810 and the circuit element 2095 may be disposed or mounted on the circuit board 2190.

For example, the circuit element 2095 may be disposed on or mounted to the first board 2191. In addition, the circuit board 2190 may include at least one terminal disposed or formed on the first board 2191.

For example, the number of terminals of the circuit board 2190 may be plural, and the plurality of terminals of the circuit board 2190 may be conductively connected to the image sensor 2810 and the circuit element 2095.

The sensor base 2600, the image sensor 2810, and the circuit element 2095 may be disposed on the first board 2191. For example, each of the first board 2191 and the second board 2192 may be a rigid printed circuit board, and the third board 2193 may be a flexible printed circuit board configured to conductively connect the first board 2191 and the second board 2192 to each other; however, the disclosure is not limited thereto. In another embodiment, at least one of the first to third boards may be a rigid printed circuit board or a flexible printed circuit board. In a further embodiment, the first to third boards may be integrated into a single board.

The image sensor 2810 may be mounted on the circuit board 2190 and may be conductively connected to the circuit board 2190. At this time, the image sensor 2810 may include an active area (or an effective image area or an imaging area) 2811 (see FIG. 34B) on which light that has passed through the filter 2610 is incident such that an image included in the light is formed.

The image sensor 2810 may convert light radiated to the active area into an electrical signal, and may output the converted electrical signal.

An optical axis of the image sensor 2810 and an optical axis of the lens module 2400 may be aligned with each other.

For example, the filter 2610 and the active area 2811 of the image sensor 2810 may be disposed spaced apart from each other while being opposite to each other in the optical-axis (OA) direction.

The circuit element 2095 may be conductively connected to the first board 2191, and may include a controller configured to control the image sensor 2810 and the lens moving apparatus 2100. For example, the circuit element 2095 may include at least one of at least one capacitor, a memory, a controller, a sensor (e.g. a motion sensor), and an integrated circuit (IC).

The circuit board 2190 may be conductively connected to the lens moving apparatus 2100.

For example, the circuit board 2190 may be conductively connected to the first and second elastic members 2160-1 and 2160-2 of the lens moving apparatus 2100. For example, the circuit board 2190 may include terminals 2019A and 2019B conductively connected to the first and second elastic members 2160-1 and 2160-2 of the lens moving apparatus 2100 by the solders 2035A and 2035B.

Alternatively, in another embodiment, the circuit board 2190 may be conductively connected to a circuit board of the lens moving apparatus.

For example, a driving signal may be provided to the coil 2120 of the lens moving apparatus 2100 through the circuit board 2190. Alternatively, in another embodiment, a driving signal may be provided to the AF position sensor (or the OIS position sensor) through the circuit board 2190. In addition, output of the AF position sensor (and/or the OIS position sensor) may be transmitted to the circuit board 2190.

The connector 2194 may be conductively connected to the circuit board 2190, e.g. the second board 2192, and may be provided with a port for conductive connection with an external device.

Although not shown in FIG. 25, another embodiment may further include a reinforcement member disposed under the circuit board 2190 and attached to a lower surface of the circuit board 2190 and a lower surface of the image sensor. Here, the reinforcement member, which is a plate member having a predetermined thickness and hardness, may hermetically seal a through-hole of the circuit board 2190, may stably support the circuit board and the image sensor, and may inhibit damage to the circuit board due to shock or contact from the outside. In addition, the reinforcement member may improve a heat dissipation effect of dissipating heat generated from the image sensor to the outside.

For example, the reinforcement member may be made of a metal material that exhibits high thermal conductivity, such as SUS or aluminum; however, the disclosure is not limited thereto. In another embodiment, the reinforcement member may be made of glass epoxy, plastic, or a synthetic resin.

In an embodiment provided with the reinforcement member, the circuit board 2190 may include an opening or a through-hole, the image sensor may be disposed in the opening or the through-hole of the circuit board, and the image sensor 2810 may be disposed on an upper surface of the reinforcement member.

In addition, the reinforcement member may be conductively connected to a ground terminal of the circuit board 2190, whereby the reinforcement member may serve as a ground configured to protect the camera module from electrostatic discharge(ESD).

The foreign matter adsorption portion 2310 may be disposed on or coupled to an upper surface of the filter 2610. Here, the upper surface of the filter 2610 may be a surface opposite to the lens module 2400 in the optical-axis direction. The foreign matter adsorption portion 2310 may be referred to as an "adsorption portion," a "foreign matter adhesion portion," or a dust trap.

The foreign matter adsorption portion 2310 may be provided at a position thereof corresponding to the image sensor 2810 with an opening, e.g. a through-hole.

The foreign matter adsorption portion 2310 may be disposed in an edge region of the upper surface 2062 of the filter 2610. For example, the foreign matter adsorption portion 2310 may be coupled or attached to the edge region of the upper surface 2062 of the filter 2610.

For example, the filter 2610 may be formed in a polygonal shape, e.g. a quadrangular shape, when viewed in the optical-axis direction.

For example, the foreign matter adsorption portion 2310 may have a polygonal shape, e.g. a quadrangular shape. The foreign matter adsorption portion 2310 may have a closed-loop or ring shape; however, the disclosure is not limited thereto. For example, the foreign matter adsorption portion 2310 may have a closed-loop shape with an opening formed in polygonal shape, e.g. a quadrangular shape; however, the disclosure is not limited thereto.

The foreign matter adsorption portion 2310 may be formed in symmetry with respect to the filter 2610 along each side of the upper surface of the filter 2610. For example, the foreign matter adsorption portion 2310 may be formed in left-right symmetry or up-down symmetry with respect to the filter 2610.

For example, the foreign matter adsorption portion 2310 may be formed so as to have a fixed width at each side of the upper surface of the filter 2610; however, the disclosure is not limited thereto.

In FIGs. 34A and 34B, the foreign matter adsorption portion 2310 may be disposed on the upper surface of the filter 2610; however, the disclosure is not limited thereto. In another embodiment, the foreign matter adsorption portion may also be disposed on the upper surface of the filter 2610 and a side surface of the filter 2610. For example, in another embodiment, the foreign matter adsorption portion may be disposed between the side surface of the filter 2610 and the inner surface 2012 of the seating portion 2500 of the holder 2600, whereby a foreign matter adsorption effect and a light blocking effect may be improved.

Referring to FIGs. 34A and 34B, for example, the side surface 2061 of the filter 2610 may be spaced apart from the inner surface 2012 of the seating portion 2500 of the holder 2600.

For example, the upper surface 2062 of the filter 2610 may be located lower than the upper surface 2051a of the holder 2600 in the optical-axis direction. Alternatively, the upper surface 2062 of the filter 2610 may be located lower than a bottom surface of the foreign matter collection portion 2506. The reason for this is that it is necessary to avoid spatial interference between the lens module 2400 and the filter 2610.

For example, the upper surface of the foreign matter adsorption portion 2310 may be located lower than the upper surface 2051a of the holder 2600 and/or the bottom surface of the foreign matter collection portion 2506 based on the bottom surface 2011 of the seating portion 2500; however, the disclosure is not limited thereto. In another embodiment, the former may be located higher than or at the same height as the latter.

The holder 2600 may include a first inclined surface 2607 and a second inclined surface 2609 located between the lower surface 2051b and the bottom surface 2011 of the seating portion 2500.

The first inclined surface 2607 may abut the bottom surface 2011 of the seating portion 2500, and may be an inclined surface inclined from the bottom surface 2011 in the downward direction. For example, the interior angle between the first inclined surface 2607 of the holder 2600 and the bottom surface 2011 may be an obtuse angle. For example, the first inclined surface 2607 may be a tapered surface. It is possible to inhibit occurrence of cracks due to collision between the lower surface of the filter 2610 and the seating portion 2500 of the holder 2600 by the first inclined surface 2607.

The second inclined surface 2609 may abut the lower surface 2051b of the holder 2600, and may be an inclined surface inclined from the lower surface 2051b of the holder 2600 in the upward direction. For example, the interior angle between the second inclined surface 2609 of the holder 2600 and the lower surface 2051b of the holder 2600 may be an obtuse angle.

In addition, the holder 2600 may further include a third inclined surface 2608 configured to connect the first inclined surface 2607 and the second inclined surface 2609 to each other. For example, the third inclined surface 2608 may be at a right angle to the bottom surface 2011; however, the disclosure is not limited thereto. In another embodiment, the inclination angle of the third inclined surface 2608 relative to the bottom surface 2011 may be an obtuse angle or an acute angle.

A side surface or an outer surface of the foreign matter adsorption portion 2310 may be the same plane as the side surface 2061 of the filter 2610. For example, the side surface or the outer surface of the foreign matter adsorption portion 2310 may abut the side surface of the filter 2610; however, the disclosure is not limited thereto. In another embodiment, the side surface of the foreign matter adsorption portion 2310 may not be the same plane as the side surface 2061 of the filter 2610, and the side surface of the foreign matter adsorption portion 2310 may be spaced apart from the side surface 2061 of the filter 2610 or a corner at which the side surface of the filter 2610 and the upper surface abut each other.

For example, the foreign matter adsorption portion 2310 may be spaced apart from the inner surface 2012 of the seating portion 2500 of the holder 2600.

At least a part of the foreign matter adsorption portion 2310 may overlap the bottom surface 2011 of the seating portion 2500 when viewed from above or in the optical-axis direction.

In addition, the foreign matter adsorption portion 2310 may overlap the adhesive member 2612 when viewed from above or in the optical-axis direction.

For example, the width of the foreign matter adsorption portion 2310 may be greater than the width of the bottom surface 2011 of the seating portion 2500. Alternatively, in another embodiment, for example, the width of the foreign matter adsorption portion 2310 may be equal to or less than the width of the bottom surface 2011 of the seating portion 2500.

Also, for example, the width of the foreign matter adsorption portion 2310 may be greater than the width of the adhesive member 2612. Alternatively, in another embodiment, for example, the width of the foreign matter adsorption portion 2310 may be equal to or less than the width of the adhesive member 2612.

In addition, the foreign matter adsorption portion 2310 may overlap at least a part of the image sensor 2810 when viewed from above or in the optical-axis direction.

In addition, the foreign matter adsorption portion 2310 may not overlap the active area 2811 of the image sensor 2810 when viewed from above or in the optical-axis direction; however, the disclosure is not limited thereto. In another embodiment, the foreign matter adsorption portion 2310 may overlap the active area 2811 of the image sensor 2810 when viewed from above or in the optical-axis direction.

The foreign matter adsorption portion 2310 may be made of a sticky material or an adhesive material. For example, a sticky material to which foreign matter sticks may be coated on or attached to one region of the upper surface 2062 of the filter 2610, whereby the foreign matter adsorption portion 2310 may be formed.

For example, the sticky material may be a dust trap agent, sticky silicone, or a sticky resin; however, the disclosure is not limited thereto.

For example, the foreign matter adsorption portion 2310 may be attached or fixed to the filter in the form of a film or a double-sided tape.

For example, the sticky material used to form the foreign matter adsorption portion 2310 may be a material whose stickiness is not remarkably reduced over time.

At the time of assembling the camera module, a lot of foreign matter generated in the lens moving apparatus or introduced from the outside may naturally stick to the image sensor. If such foreign matter, such as dust, spreads to pixels of the active area of the image sensor, defects, such as stains, may occur on the final screen of a device including the camera module.

The foreign matter collection portion of the holder 2600 may remove such foreign matter, but the size of the holder may be increased in order to secure the area necessary to form the foreign matter collection portion. If the size of the foreign matter collection portion is increased, on the other hand, the area of the upper surface of the holder excluding the foreign matter collection portion may be relatively reduced. A decrease in area of the upper surface of the holder may cause a decrease in coating area of the adhesive member, whereby the force of adhesion between the holder and the base of the lens moving apparatus may be reduced.

In addition, since the foreign matter collection portion is provided at the holder, it may be difficult for the foreign matter collection portion to collect foreign matter introduced into the filter or the image sensor from above the filter.

Since the foreign matter adsorption portion 2310 is separately disposed on the upper surface of the filter 2610, the embodiment may have the following effects.

First, the foreign matter adsorption portion may be adjacent to the active area 2811 of the image sensor 2810 so as to collect foreign matter, whereby it is possible to reduce a defect rate of the image sensor 2810 due to stains caused by foreign matter.

Next, the area of the foreign matter collection portion formed at the holder 2600 may be reduced or no foreign matter collection portion may be formed at the holder 2600, as needed. As a result, the degree of freedom in design of the holder 2600 may be improved.

In addition, it is possible to sufficiently secure the area of the upper surface of the holder 2600 on which the adhesive member is coated, whereby it is possible to prevent a decrease in force of coupling between the holder and the base.

The foreign matter adsorption portion 2310 may be made of a light-transmissive material; however, the disclosure is not limited thereto. In another embodiment, the foreign matter adsorption portion may be made of a light-impermeable material.

For example, the foreign matter adsorption portion 2310 may be disposed in an edge region of the upper surface of the filter 2610, and may be a light blocking member configured to block at least a part of light that has passed through the lens module 2400 from passing through the edge region of the filter 2610.

For example, the foreign matter adsorption portion 2310 may be made of a light-impermeable material; however, the disclosure is not limited thereto. In another embodiment, the foreign matter adsorption portion 2310 may be constituted by a light-impermeable adhesive material coated on the filter 2610.

For example, the foreign matter adsorption portion 2310 may be made of a mixture of black ink for light blocking and an adhesive material, and may be referred to as a "light-blocking adsorption portion," an "adsorption mask," or an "adsorption black mask" in terms thereof.

The circuit board 2190 may be provided with a terminal 2814 conductively connected to a terminal 2813 of the image sensor 2810 via a wire 2815.

The terminal 2814 of the circuit board 2190 may be disposed in one region of the circuit board 2190 adjacent to the image sensor 1810. For example, the terminal 2814 of the circuit board 2190 may include a plurality of terminals disposed in one region of the circuit board 2190 located around the image sensor 2810.

The filter 2610 and the image sensor 2810 may be disposed opposite to each other in the optical-axis direction, and the foreign matter adsorption portion 2310 may overlap at least one of the terminal 2813 of the image sensor 2810, the terminal 2814 of the circuit board 2190, and/or the wire 2814 in the optical-axis direction.

The foreign matter adsorption portion 2310 disposed in an edge region of the upper surface 2062 of the filter 2610 may serve to block an unnecessary portion of light incident on the image sensor 2810 after passing through the lens module 2400 (e.g. reflected light) from being incident on the image sensor 2810.

Each of the wire 2815 and the terminals 2813 and 2814 may be made of a conductive material, such as gold, silver, copper, or a copper alloy, and such a conductive material may have light reflection characteristics.

That is, light that has passed through the filter 2610 may be reflected by the image sensor 2810, the terminal 2814 of the circuit board 2190, and/or the wire 2815, momentary flash, i.e. a flare phenomenon, may occur due to the reflected light, and the flare phenomenon may distort an image formed on the image sensor 2810 or may deteriorate image quality.

Since at least a part of the foreign matter adsorption portion 2310 overlaps the terminals 2813 and 2814 and/or the wire 2815 in the optical-axis direction, it is possible to block light directed to the terminal 2813 of the image sensor 2810, the terminal 2814 of the circuit board 2190, and/or the wire 2815, among light that has passed through the lens module 2400. As a result, it is possible to prevent the occurrence of the flare phenomenon and to prevent distortion of an image formed on the image sensor 2810 or deterioration in image quality.

A depressed portion 2021A or a recess may be provided in an inner corner of the foreign matter adsorption portion 2310 corresponding to a corner of the filter 2610.

The depressed portion 2021A may be formed in a corner of an inner circumferential surface of an inner end of the foreign matter adsorption portion 2310. Depressed portions 2021A may be formed in at least two of four inner corners of the foreign matter adsorption portion 2310.

When viewed in the optical-axis direction or from above, the depressed portion 2021A may be formed so as to avoid a corner of the active area of the image sensor 2810. For example, when viewed in the first direction or from above, the depressed portion 2021A may have an arc, curved, or polygonal shape.

In order to align the lens module 2400 and the active area of the image sensor 2810 with each other, an automatic active alignment apparatus must detect the position (or coordinates) in the x-y plane of the active area 2811 of the image sensor 2810. For example, the automatic active alignment apparatus may recognize four corners of the active area 2811 of the image sensor 2810, whereby it is possible to check the position (or coordinates) in the x-y plane of the active area 2811 of the image sensor 2810.

When the foreign matter adsorption portion 2310 has a light blocking function, the depressed portion 2021A may be provided in the foreign matter adsorption portion 2310 such that the automatic active alignment apparatus can accurately, easily, and smoothly detect the four corners of the active area 2811 of the image sensor 2810.

When the foreign matter adsorption portion 2310 has no light blocking function, the foreign matter adsorption portion 2310 may be provided with no depressed portion 2021A.

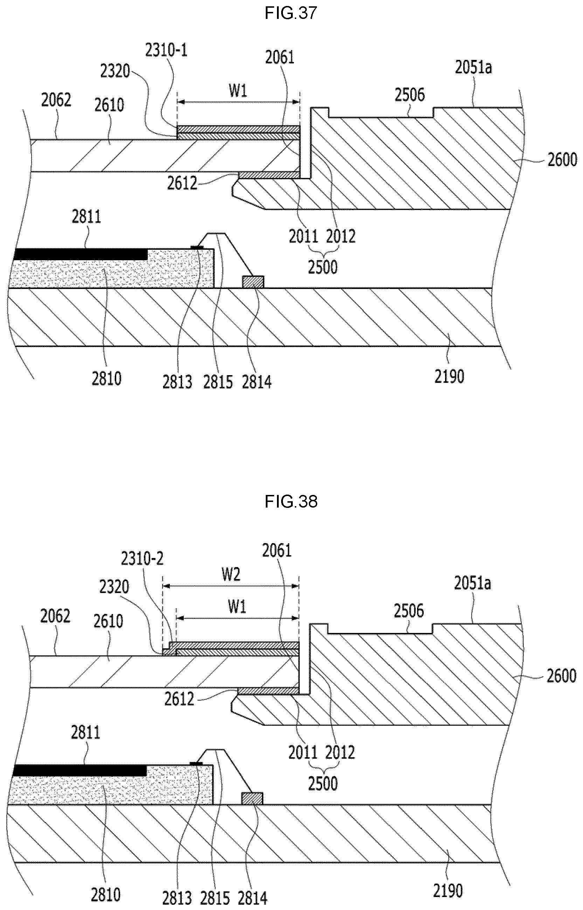

FIG. 36 is a separated perspective view of an image sensor unit 2350-1 according to another embodiment, and FIG. 37 is a partial enlarged view of the sectional view of the image sensor unit 2350-1 of FIG. 36.

Referring to FIGs. 36 and 37, the image sensor unit 2350-1 may further include a light blocking member 2320 disposed between a foreign matter adsorption portion 2310-1 and the filter 2610.

In FIG. 29, the foreign matter adsorption portion 2310 is disposed on or attached to the upper surface of the filter, whereas the light blocking member 2320 may be disposed on or attached to the upper surface of the filter 2610 in FIG. 36.

The light blocking member 2320 may have the same shape as the foreign matter adsorption portion 2310 described with reference to FIG. 29, and a description of the disposition and shape of the foreign matter adsorption portion 2310 may be equally applied to the light blocking member 2320.

For example, the light blocking member 2320 may be provided in a position thereof corresponding to the image sensor with an opening, e.g. a through-hole.

The light blocking member 2320 may be disposed in the edge region of the upper surface 2062 of the filter 2610. For example, the light blocking member 2320 may be coupled or attached to the edge region of the upper surface 2062 of the filter 2610.

For example, the light blocking member 2320 may be formed in a polygonal shape, e.g. a quadrangular shape. For example, the light blocking member 2320 may have a closed-loop or ring shape; however, the disclosure is not limited thereto. For example, the light blocking member 2320 may have a closed-loop shape with an opening formed in polygonal shape, e.g. a quadrangular shape; however, the disclosure is not limited thereto.

The light blocking member 2320 may be formed in symmetry with respect to the filter 2610 along each side of the upper surface 2062 of the filter 2610. For example, the light blocking member 2320 may be formed in left-right symmetry or up-down symmetry with respect to the filter 2610.

For example, the light blocking member 2320 may be formed so as to have a fixed width at each side of the upper surface of the filter 2610; however, the disclosure is not limited thereto.

A side surface or an outer surface of the light blocking member 2320 may be the same plane as the side surface 2061 of the filter 2610 and/or a side surface of the foreign matter adsorption portion 2310-1. For example, the side surface or the outer surface of the light blocking member 2320 may abut the side surface of the filter 2610 and/or the side surface of the foreign matter adsorption portion 2310-1; however, the disclosure is not limited thereto. In another embodiment, the side surface of the light blocking member 2320 may not be the same plane as the side surface 2061 of the filter 2610 and/or the side surface of the foreign matter adsorption portion 2310-1, and the side surface of the light blocking member 2320 may be spaced apart from the side surface 2061 of the filter 2610 (or the side surface of the foreign matter adsorption portion 2310-1) or a corner at which the side surface of the filter 2610 and the upper surface of the filter 2610 abut each other.

For example, the light blocking member 2320 may be spaced apart from the inner surface 2012 of the seating portion 2500 of the holder 2600.

At least a part of the light blocking member 2320 may overlap the bottom surface 2011 of the seating portion 2500 in the optical-axis direction.

In addition, the light blocking member 2320 may overlap at least a part of the image sensor 2810 in the optical-axis direction. In addition, the light blocking member 2320 may not overlap the active area 2811 of the image sensor 2810 in the optical-axis direction. For example, the light blocking member 2320 may be attached or fixed to the filter in the form of a film or a double-sided tape.

The light blocking member 2320 may serve to block light. The light blocking member 2320 may serve to block an unnecessary portion of light incident on the image sensor 2810 after passing through the lens module 2400 (e.g. reflected light) from being incident on the image sensor 2810. As a result, it is possible to prevent a flare phenomenon and to prevent distortion of an image formed on the image sensor 2810 or deterioration in image quality. The reflected light may be the same as what has been described in connection with the foreign matter adsorption portion 2310 of FIG. 34B.

The light blocking member 2320 may be made of a light blocking material. For example, the light blocking member may include black ink.

The light blocking member 2320 may be provided with a depressed portion 2031. A description of the depressed portion 2031A of the foreign matter adsorption portion 2310 may be applied or applied with necessary modifications to the depressed portion 2031A of the light blocking member 2320.

The foreign matter adsorption portion 2310-1 may be disposed on the light blocking member 2320.

A description of the foreign matter adsorption portion 2310 according to the embodiment of FIGs. 25 to 34B may be applied or applied with necessary modifications to the foreign matter adsorption portion 2310-1 of FIGs. 36 and 37.

For example, the foreign matter adsorption portion 2310 of FIGs. 36 and 37 may have only an adsorption function without a light blocking function; however, the disclosure is not limited thereto. In another embodiment, the foreign matter adsorption portion may have a light blocking function.

The light blocking member 2320 may overlap the foreign matter adsorption portion 2310-1 in the optical-axis direction.

The width W1 of the light blocking member 2320 may be equal to the width of the foreign matter adsorption portion 2310-1.

At this time, the width W1 of the light blocking member 2320 may be the length of the light blocking member 2320 from an inner circumferential surface (or an inner surface) to an outer circumferential surface (or an outer surface) thereof. In addition, the width of the foreign matter adsorption portion 2310-1 may be the length of the light blocking member 2320 from an inner circumferential surface (or an inner surface) to an outer circumferential surface (or an outer surface) thereof.

FIG. 38 shows another embodiment 310-2 of the foreign matter adsorption portion 2310-1 of FIG. 37.

Referring to FIG. 38, at least a part of the foreign matter adsorption portion 2310-2 may be disposed on the upper surface of the filter 2610 adjacent to the inner circumferential surface (or the inner surface) of the light blocking member 2320.

The width W1 of the foreign matter adsorption portion 2310-2 may be greater than the width W1 of the light blocking member 2320. Since W2>W1, the embodiment is capable of improving foreign matter adsorption performance.

For example, the foreign matter adsorption portion 2310-2 may include a first portion that overlaps the light blocking member 2320 in the optical-axis direction and a second portion that does not overlap the light blocking member 2320 in the optical-axis direction.

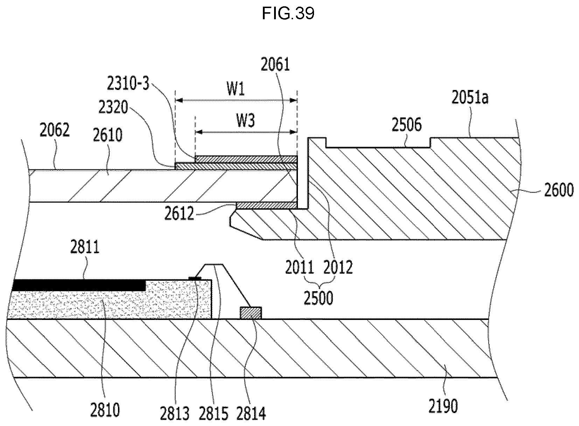

FIG. 39 shows a further embodiment 2310-3 of the foreign matter adsorption portion 2310-1 of FIG. 37.

Referring to FIG. 39, the foreign matter adsorption portion 2310-3 may expose a part of the upper surface of the light blocking member 2320. For example, a part of the upper surface of the light blocking member 2320 adjacent to the inner circumferential surface (or the inner surface) of the light blocking member 2320 may be exposed from the foreign matter adsorption portion 2310-3.

The width W3 of the foreign matter adsorption portion 2310-2 may be less than the width W1 of the light blocking member 2320 (W3<W1).

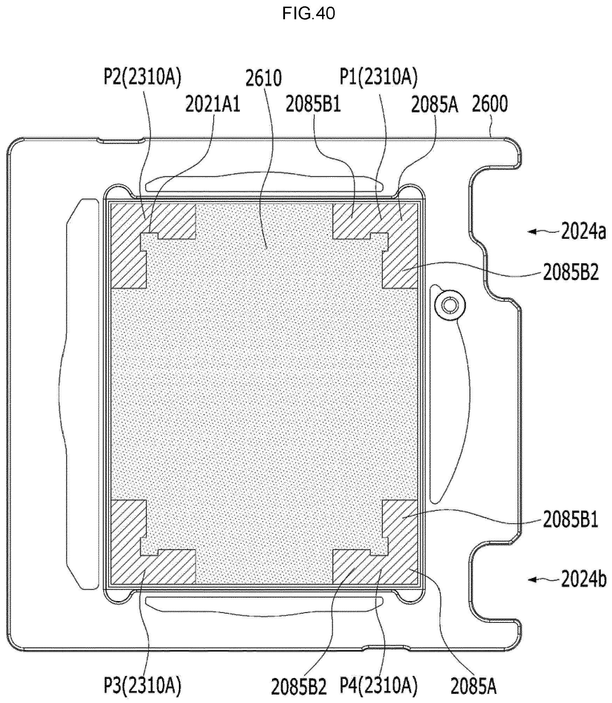

FIG. 40 shows another embodiment 2310A of the foreign matter adsorption portion 2310 of FIG. 8.

Referring to FIG. 40, the foreign matter adsorption portion 2310A may include a plurality of adsorption portions P1 to P4 disposed on the upper surface of the filter 2610 so as to be spaced apart from each other.

Each of the plurality of adsorption portions P1 to P4 may be disposed on a corresponding one of corners of the upper surface of the filter 2610.

For example, each of the adsorption portions P1 to P4 may include a first portion 2085A disposed on one corner of the upper surface of the filter 2610.

In addition, each of the adsorption portions P1 to P4 may include a second portion 2085B1 extending to one of two different corners of the upper surface of the filter 2610 neighboring the one corner of the upper surface of the filter 2610.

In addition, each of the adsorption portions P1 to P4 may include a third portion 2085B2 extending to the other of the two different corners of the upper surface of the filter 2610 neighboring the one corner of the upper surface of the filter 2610.

For example, each of the adsorption portions P1 to P4 may include at least one bent portion. For example, each of the adsorption portions P1 to P4 may have a " 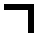 " shape; however, the disclosure is not limited thereto.

Each of the adsorption portions P1 to P4 may be provided with a depressed portion 21A1. The depressed portion 2021A may be formed in an inner corner of each of the adsorption portions P1 to P4. The function of the depressed portion 2021 may be applied or applied with necessary modifications to the depressed portion 2021A of FIG. 40.

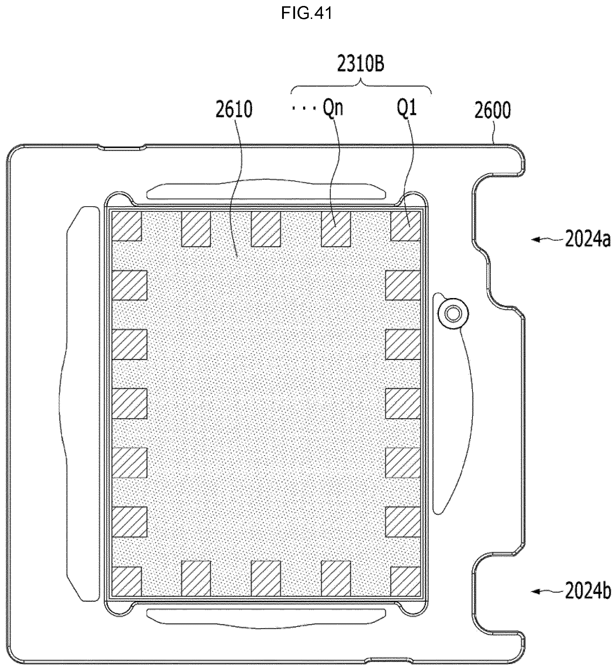

FIG. 41 shows a further embodiment 2310B of the foreign matter adsorption portion 2310 of FIG. 8.

Referring to FIG. 41, the foreign matter adsorption portion 2310B may include a plurality of adsorption portions Q1 to Qn (n being a natural number greater than 1) disposed in an edge region of the upper surface of the filter 2610 so as to be spaced apart from each other. At this time, the edge region of the upper surface of the filter 2610 may be a region within a predetermined range from each side of the upper surface of the filter 2610.

When viewed from above, each of the plurality of adsorption portions Q1 to Qn may have a polygonal, circular, or oval dot shape.

For example, the foreign matter adsorption portion 310B may include first adsorption portions Q1 disposed on the corners of the upper surface of the filter 2610 and second adsorption portions Qn disposed on the corners of the upper surface of the filter 2610.

For example, the area (or the size) of each of the first adsorption portions Q1 may be less than the area (or the size) of each of the second adsorption portions Qn. The reason for this is that it is possible to perform the function of each of the depressed portions 21A1.

In another embodiment, the area (or the size) of each of the first adsorption portions may be equal to the area (or the size) of each of the second adsorption portions Qn.

Since the foreign matter adsorption portions 2310A and 2310B of FIGs. 40 and 41, which are modifications of the foreign matter adsorption portions 2310, are different in only shape therefrom, a description of the foreign matter adsorption portions 2310 excluding the shape thereof may be applied or applied with necessary modifications to the foreign matter adsorption portions 2310A and 2310B of FIGs. 40 and 41.

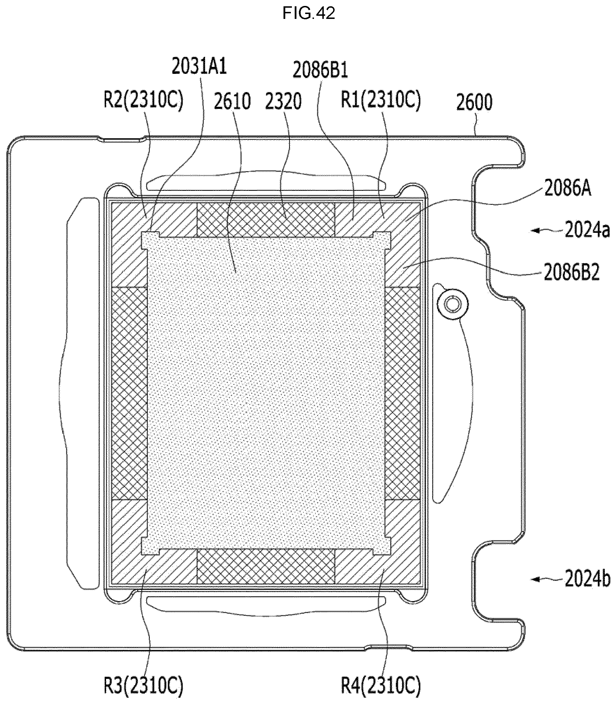

FIG. 42 shows another embodiment 2310C of the foreign matter adsorption portion 2310-1 of FIGs. 36 and 37.

Referring to FIG. 42, the foreign matter adsorption portion 2310C may include a plurality of adsorption portions R1 to R4 disposed on the upper surface of the light blocking member 2320 so as to be spaced apart from each other.

Each of the plurality of adsorption portions R1 to R4 may be disposed on a corresponding one of corners of the upper surface of the light blocking member 2320.

For example, each of the adsorption portions R1 to R4 may include a first portion 2086A disposed on one corner of the upper surface of the light blocking member 2320.

In addition, each of the adsorption portions R1 to R4 may include a second portion 2086B1 extending to one of two different corners of the upper surface of the light blocking member 2320 neighboring the one corner of the upper surface of the light blocking member 2320.

In addition, each of the adsorption portions R1 to R4 may include a third portion 2086B2 extending to the other of the two different corners of the upper surface of the light blocking member 2320 neighboring the one corner of the upper surface of the light blocking member 2320.

For example, each of the adsorption portions R1 to R4 may include at least one bent portion. For example, each of the adsorption portions R1 to R4 may have a " 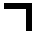 " shape; however, the disclosure is not limited thereto.

Each of the adsorption portions R1 to R4 may be provided with a depressed portion 2031A1. The depressed portion 2031A1 may be formed in an inner corner of each of the adsorption portions R1 to R4. The function of the depressed portion 2031A may be applied or applied with necessary modifications to the depressed portion 2031A1 of FIG. 42.

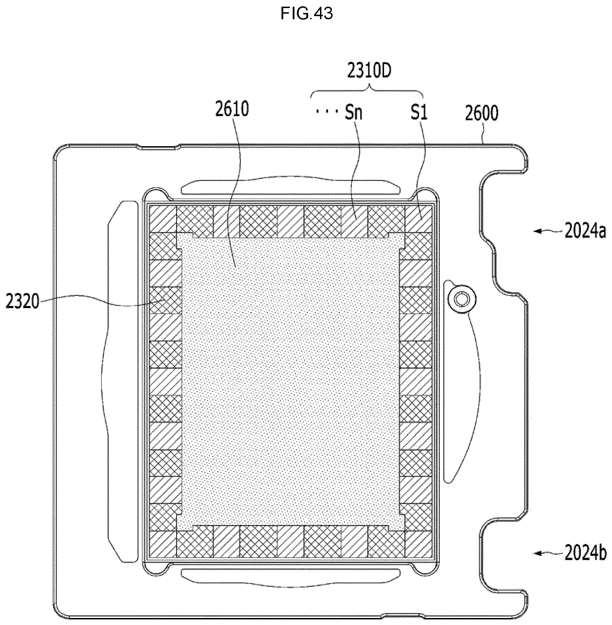

FIG. 43 shows a further embodiment 2310D of the foreign matter adsorption portion 2310-1 of FIGs. 36 and 37.

Referring to FIG. 43, the foreign matter adsorption portion 2310D may include a plurality of adsorption portions S1 to Sn (n being a natural number greater than 1) disposed on the light blocking member 2320 so as to be spaced apart from each other.

When viewed from above, each of the plurality of adsorption portions S1 to Sn may have a polygonal, circular, or oval dot shape.

For example, the foreign matter adsorption portion 2310D may include first adsorption portions S1 disposed so as to correspond to the corners of the upper surface of the light blocking member 2320 and second adsorption portions Sn disposed so as to correspond to the sides of the upper surface of the light blocking member 2320.

For example, the area (or the size) of each of the first adsorption portions S1 may be less than the area (or the size) of each of the second adsorption portions Sn. The reason for this is that it is possible to perform the function of each of the depressed portions 31A.

In another embodiment, the area (or the size) of each of the first adsorption portions S1 may be equal to the area (or the size) of each of the second adsorption portions Sn.

Since the foreign matter adsorption portions 2310C and 2310D of FIGs. 42 and 43, which are modifications of the foreign matter adsorption portions 2310-1, are different therefrom only in shape, a description of the foreign matter adsorption portions 2310-1 excluding the shape thereof may be applied or applied with necessary modifications to the foreign matter adsorption portions 2310C and 2310D of FIGs. 42 and 43.

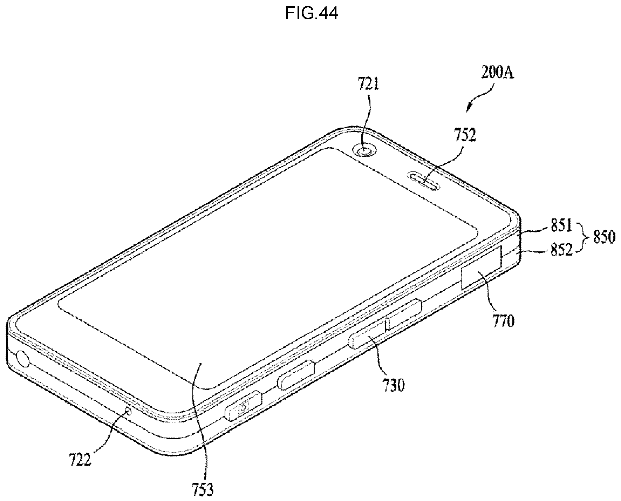

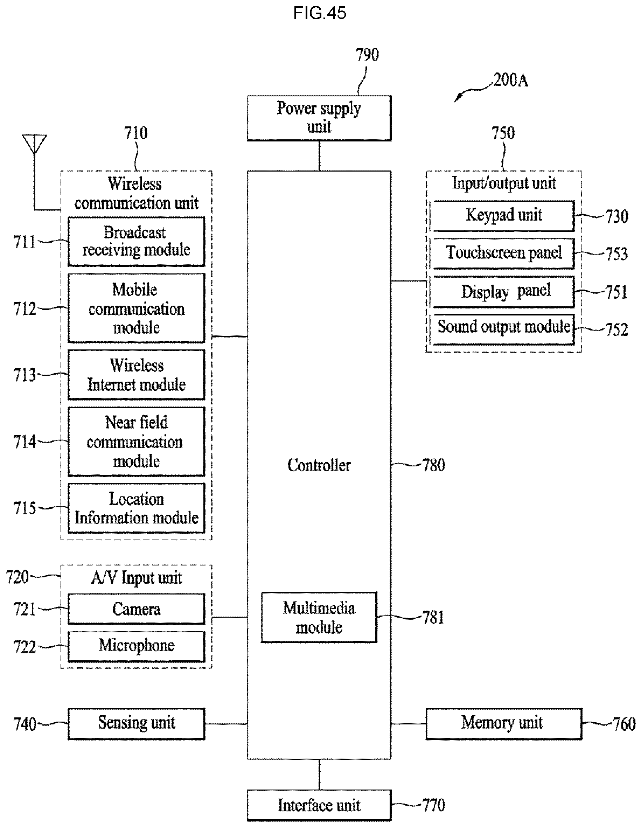

FIG. 44 is a perspective view of a portable terminal 200A according to an embodiment, and FIG. 45 is a view showing the construction of the portable terminal shown in FIG. 44.

Referring to FIGs. 44 and 45, the portable terminal 200A (hereinafter referred to as a "terminal") may include a body 850, a wireless communication unit 710, an A/V input unit 720, a sensing unit 740, an input/output unit 750, a memory unit 760, an interface unit 770, a controller 780, and a power supply unit 790.

The body 850 shown in FIG. 44 has a bar shape; however, the disclosure is not limited thereto. The body may have any of various structures, such as a slide type structure, a folding type structure, a swing type structure, and a swivel type structure, in which two or more sub-bodies are coupled so as to be movable relative to each other.

The body 850 may include a case (casing, housing, cover, etc.) that defines the external appearance thereof. For example, the body 850 may be divided into a front case 851 and a rear case 852. Various electronic parts of the terminal may be mounted in a space defined between the front case 851 and the rear case 852.

The wireless communication unit 710 may include one or more modules that enable wireless communication between the terminal 200A and a wireless communication system or between the terminal 200A and a network in which the terminal 200A is located. For example, the wireless communication unit 710 may include a broadcast receiving module 711, a mobile communication module 712, a wireless Internet module 713, a nearfield communication module 714, and a location information module 715.

The A/V (audio/video) input unit 720, which is provided to input an audio signal or a video signal, may include a camera 721 and a microphone 722.

The camera 721 may include the camera module 200 according to the embodiment.

The sensing unit 740 may sense the current state of the terminal 200A, such as the opening and closing state of the terminal 200A, the position of the terminal 200A, whether a user contacts the terminal, the orientation of the terminal 200A, or acceleration/deceleration of the terminal 200A, in order to generate a sensing signal for controlling the operation of the terminal 200A. For example, in the case in which the terminal 200A is a slide phone, the sensing unit may sense whether the slide phone is open or closed. In addition, the sensing unit senses whether power is supplied from the power supply unit 790 and whether the interface unit 770 is coupled to an external instrument.

The input/output unit 750 is provided to generate input or output related to visual sensation, audible sensation, or tactile sensation. The input/output unit 750 may generate input data for controlling the operation of the terminal 200A, and may display information processed by the terminal 200A.

The input/output unit 750 may include a keypad 730, a display module 751, a sound output module 752, and a touchscreen panel 753. The keypad 730 may generate input data through keypad input.

The display module 751 may include a plurality of pixels, the color of which is changed according to an electrical signal. For example, the display module 751 may include at least one of a liquid crystal display, a thin film transistor-liquid crystal display, an organic light-emitting diode, a flexible display, or a three-dimensional (3D) display.

The sound output module 752 may output audio data received from the wireless communication unit 710 in a call signal reception mode, a telephone communication mode, a recording mode, a voice recognition mode, or a broadcast reception mode, or may output audio data stored in the memory unit 760.

The touchscreen panel 753 may convert a change in capacitance due to a user's touch on a specific region of the touchscreen into an electrical input signal.

The memory unit 760 may store a program for processing and control of the controller 780, and may temporarily store input/output data (for example, a telephone directory, messages, audio, still images, photographs, and video). For example, the memory unit 760 may store images, such as photographs or video, captured by the camera 721.

The interface unit 770 functions as a path for connection between the terminal 200A and an external instrument. The interface unit 770 may receive data from the external instrument, may receive electric power and transmit the received electric power to internal components of the terminal 200A, or may transfer data in the terminal 200A to the external instrument. For example, the interface unit 770 may include a wired/wireless headset port, an external charger port, a wired/wireless data port, a memory card port, a port for connection with an apparatus having an identification module, an audio input/output (I/O) port, a video input/output (I/O) port, and an earphone port.

The controller 780 may control the overall operation of the terminal 200A. For example, the controller 780 may perform related control and processing for voice communication, data communication, and video communication.

The controller 780 may have a multimedia module 781 for multimedia reproduction. The multimedia module 781 may be realized in the controller 780 or may be realized separately from the controller 780.

The controller 780 may perform pattern recognition processing to recognize writing input or drawing input performed on the touchscreen as text or an image, respectively.

The power supply unit 790 may receive external power and internal power and supply required power to respective components under control of the controller 780.

The features, structures, and effects described in the above embodiments are included in at least one embodiment, but are not limited only to one embodiment. The invention is defined by the appended claims.

### [Industrial Applicability]

Embodiments may be used in a lens moving apparatus capable of preventing damage to a bobbin, a cover member, and a base due to shock and inhibiting fluctuation in stroke range of the bobbin in the optical-axis direction, and a camera module and an optical instrument including the same.

## Claims

1. A lens moving apparatus comprising:
a cover member (300) comprising an upper plate (301) and a side plate (302) connected to the upper plate (301);
a housing (140) disposed in the cover member (300);
a bobbin (110) disposed in the housing (140);
an upper elastic member (150) comprising a first inner frame (151) coupled to an upper portion of the bobbin (110), a first outer frame (152) coupled to an upper portion of the housing (140), and a first frame connection portion (153) connecting the first inner frame (151) and the first outer frame (152);
a coil (120) coupled to the bobbin (110);
a magnet (130) disposed on the housing (140), the magnet (130) being opposite to the coil (120);
a base (210) disposed under the bobbin (110); and
a first buffer (31) disposed on an upper surface of the bobbin (110) corresponding to or opposite to the upper plate (301) of the cover member (300),
wherein the bobbin (110) comprises an escape recess (112a) formed in one region of the upper surface of the bobbin (110) which corresponds to the first frame connection portion (153) in an optical-axis direction,
wherein the first buffer (31) is disposed in the escape recess (112a),
wherein the first buffer (31) is not overlapped with the first frame connection portion (153) in the optical-axis direction, and spaced apart from the first frame connection portion (153),
wherein the cover member (300) comprises a boss (303) extending in a direction from the upper plate (301) to the bobbin (110), and
a distance between the boss (303) and the upper surface of the bobbin (110) in an optical-axis direction is equal to or less than a distance between the first buffer (31) and an inner surface of the upper plate (301) of the cover member (300) in the optical-axis direction.

2. The lens moving apparatus according to claim 1, wherein the upper surface of the bobbin (110) comprises:
a first surface (10a); and
a second surface (11a) having a stair formed together with the first surface (10a) in the optical-axis direction, the second surface (11a) being located lower than the first surface (10a), and
the first buffer (31) is disposed on the second surface (11a).

3. The lens moving apparatus according to any one of claims 1 to 2, wherein the bobbin (110) is provided in the upper surface thereof with a recess (119), at least a part of the boss (303) is disposed in the recess (119), and a distance (d1) between a bottom of the recess (119) and the at least a part of the boss (303) in the optical-axis direction is equal to or less than a distance between the first buffer (31) and the inner surface of the upper plate (301) of the cover member (300) in the optical-axis direction.

4. The lens moving apparatus according to claim 2, wherein the second surface (11a) is provided with a recess (119), at least a part of the boss (303) is disposed in the recess (119), and a distance (d1) between a bottom of the recess (119) and the at least a part of the boss (303) in the optical-axis direction is equal to or less than a distance between the first buffer (31) and the inner surface of the upper plate (301) of the cover member (300) in the optical-axis direction.

5. The lens moving apparatus according to any one of claims 1 to 4, wherein stiffness of the first buffer (31) is less than stiffness of the cover member (300) and stiffness of the bobbin (110).

6. The lens moving apparatus according to any one of claims 1 to 5, comprising a second buffer (32) disposed on an upper surface of the base (210),
wherein a first stopper (15A) is provided on a lower surface of the bobbin (110),
wherein a second stopper (23) is provided on the upper surface of the base (210) so as to correspond to or to be opposite to the first stopper (15A) in the optical-axis direction, and
wherein a distance (d3) between the first stopper (15A) and the second stopper (23) in the optical-axis direction is equal to or less than a distance (d2) between the second buffer (32) and the lower surface of the bobbin (110) in the optical-axis direction.

7. The lens moving apparatus according to claim 6, wherein the upper surface of the base (210) comprises a first surface (42A) and a second surface (42B) having a stair formed together with the first surface (42A) in the optical-axis direction, the second surface (42B) being located lower than the first surface (42A), and
the second stopper (23) and the second buffer (32) are disposed on the second surface (42B).

8. The lens moving apparatus according to claim 6, wherein stiffness of the second buffer (32) is less than stiffness of the base (210) and stiffness of the bobbin (110).

9. The lens moving apparatus according to any one of claims 1 to 8, wherein the first buffer (31) is not overlapped with the boss (303) of the cover member (300) in the optical-axis direction.

10. The lens moving apparatus according to claim 2, wherein the upper surface of the bobbin (110) comprises a third surface (12a) connecting the first surface (10a) and the second surface (11a), and
wherein the first buffer (31) contacts the second and third surfaces (11a, 12a) of the bobbin (110).

11. The lens moving apparatus according to claim 7, wherein the upper surface of the base (210) comprises a surface (42D) connecting the first surface (42A) and the second surface (42B), and
wherein the second buffer (32) contacts the second surface (42B) and the surface(42D) of the base (210).

12. The lens moving apparatus according to claim 7, wherein the second buffer (32) is spaced apart from the second stopper (23).

13. The lens moving apparatus according to any one of claims 1 to 5, comprising:
a second buffer (32) disposed on an upper surface of the base (210), and
a lower elastic member (160) comprising a second inner frame (161) coupled to a lower portion of the bobbin (110), a second outer frame (162) coupled to a lower portion of the housing (140), and a second frame connection portion (163) connecting the second inner frame (161) and the second outer frame (162),
wherein the second buffer (32) is not overlapped with the second frame connection portion (163) in the optical axis direction.

14. The lens moving apparatus according to any one of claims 1 to 13, wherein the first buffer (31) is made of rubber, silicone, foam rubber, polyacetal or polyoxymethylene, or urethane.

15. A camera module comprising:
a lens;
the lens moving apparatus (100) according to claim 1 to 14; and
an image sensor (810).

## Patentansprüche

1. Linsenbewegungsvorrichtung, umfassend:
Ein Abdeckelement (300), umfassend eine obere Platte (301) und eine Seitenplatte (302), die mit der oberen Platte (301) verbunden ist;
ein Gehäuse (140), das in dem Abdeckelement (300) angeordnet ist;
einen Spulenkörper (110), der in dem Gehäuse (140) angeordnet ist;
ein oberes elastisches Element (150), umfassend einen ersten inneren Rahmen (151), der mit einem oberen Abschnitt des Spulenkörpers (110) gekoppelt ist, einen ersten äußeren Rahmen (152), der mit einem oberen Abschnitt des Gehäuses (140) gekoppelt ist, und einen ersten Rahmenverbindungsabschnitt (153), der den ersten inneren Rahmen (151) und den ersten äußeren Rahmen (152) verbindet;
eine Spule (120), die mit dem Spulenkörper (110) gekoppelt ist;
einen Magneten (130), der auf dem Gehäuse (140) angeordnet ist, wobei der Magnet (130) der Spule (120) gegenüber liegt;
eine Basis (210), die unter dem Spulenkörper (110) angeordnet ist; und
einen ersten Puffer (31), der auf einer oberen Oberfläche des Spulenkörpers (110) angeordnet ist, die der oberen Platte (301) des Abdeckelements (300) entspricht oder dieser gegenüberliegt,
wobei der Spulenkörper (110) eine Fluchtvertiefung (112a) umfasst, die in einer Region der oberen Oberfläche des Spulenkörpers (110) ausgebildet ist, die dem ersten Rahmenverbindungsabschnitt (153) in einer optischen Achsenrichtung entspricht,
wobei der erste Puffer (31) in der Fluchtvertiefung (112a) angeordnet ist,
wobei der erste Puffer (31) nicht mit dem ersten Rahmenverbindungsabschnitt (153) in der Richtung der optischen Achse überlappt und von dem ersten Rahmenverbindungsabschnitt (153) beabstandet ist,
wobei das Abdeckelement (300) einen Vorsprung (303) umfasst, der sich in einer Richtung von der oberen Platte (301) zu dem Spulenkörper (110) erstreckt, und
ein Abstand zwischen dem Vorsprung (303) und der oberen Oberfläche des Spulenkörpers (110) in einer Richtung der optischen Achse gleich oder kleiner ist als ein Abstand zwischen dem ersten Puffer (31) und einer inneren Oberfläche der oberen Platte (301) des Abdeckelements (300) in der Richtung der optischen Achse.

2. Linsenbewegungsvorrichtung nach Anspruch 1, wobei die obere Oberfläche des Spulenkörpers (110) Folgendes umfasst:
eine erste Oberfläche (10a), und
eine zweite Oberfläche (11a), die eine zusammen mit der ersten Oberfläche (10a) in Richtung der optischen Achse gebildete Stufe aufweist, wobei die zweite Oberfläche (11a) niedriger als die erste Oberfläche (10a) angeordnet ist, und
der erste Puffer (31) auf der zweiten Oberfläche (11a) angeordnet ist.

3. Linsenbewegungsvorrichtung nach einem der Ansprüche 1 bis 2, wobei der Spulenkörper (110) in seiner oberen Oberfläche mit einer Vertiefung (119) bereitgestellt ist, mindestens ein Teil des Vorsprungs (303) in der Vertiefung (119) angeordnet ist, und ein Abstand (d1) zwischen einem Boden der Vertiefung (119) und mindestens einem Teil des Vorsprungs (303) in der Richtung der optischen Achse gleich oder kleiner ist als ein Abstand zwischen dem ersten Puffer (31) und der inneren Oberfläche der oberen Platte (301) des Abdeckelements (300) in der Richtung der optischen Achse.

4. Linsenbewegungsvorrichtung nach Anspruch 2, wobei die zweite Oberfläche (11a) mit einer Vertiefung (119) bereitgestellt ist, mindestens ein Teil des Vorsprungs (303) in der Vertiefung (119) angeordnet ist und ein Abstand (d1) zwischen einem Boden der Vertiefung (119) und dem mindestens einen Teil des Vorsprungs (303) in der Richtung der optischen Achse gleich oder kleiner ist als ein Abstand zwischen dem ersten Puffer (31) und der inneren Oberfläche der oberen Platte (301) des Abdeckelements (300) in der Richtung der optischen Achse.

5. Linsenbewegungsvorrichtung nach einem der Ansprüche 1 bis 4, wobei die Steifigkeit des ersten Puffers (31) geringer ist als die Steifigkeit des Abdeckelements (300) und die Steifigkeit des Spulenkörpers (110).

6. Linsenbewegungsvorrichtung nach einem der Ansprüche 1 bis 5, umfassend einen zweiten Puffer (32), der auf einer oberen Oberfläche der Basis (210) angeordnet ist,
wobei ein erster Stopper (15A) an einer unteren Oberfläche des Spulenkörpers (110) bereitgestellt ist,
wobei ein zweiter Stopper (23) auf der oberen Oberfläche der Basis (210) bereitgestellt wird, sodass er dem ersten Stopper (15A) in Richtung der optischen Achse entspricht oder diesem gegenüberliegt, und
wobei ein Abstand (d3) zwischen dem ersten Stopper (15A) und dem zweiten Stopper (23) in der Richtung der optischen Achse gleich oder kleiner ist als ein Abstand (d2) zwischen dem zweiten Puffer (32) und der unteren Oberfläche des Spulenkörpers (110) in der Richtung der optischen Achse.

7. Linsenbewegungsvorrichtung nach Anspruch 6, wobei die obere Oberfläche der Basis (210) eine erste Oberfläche (42A) und eine zweite Oberfläche (42B) mit einer zusammen mit der ersten Oberfläche (42A) in Richtung der optischen Achse gebildeten Stufe aufweist, wobei die zweite Oberfläche (42B) niedriger als die erste Oberfläche (42A) angeordnet ist, und
der zweite Stopper (23) und der zweite Puffer (32) auf der zweiten Oberfläche (42B) angeordnet sind.

8. Linsenbewegungsvorrichtung nach Anspruch 6, wobei die Steifigkeit des zweiten Puffers (32) geringer ist als die Steifigkeit der Basis (210) und die Steifigkeit des Spulenkörpers (110).

9. Linsenbewegungsvorrichtung nach einem der Ansprüche 1 bis 8, wobei der erste Puffer (31) nicht mit dem Vorsprung (303) des Abdeckelements (300) in der Richtung der optischen Achse überlappt wird.

10. Linsenbewegungsvorrichtung nach Anspruch 2, wobei die obere Oberfläche des Spulenkörpers (110) eine dritte Oberfläche (12a) umfasst, die die erste Oberfläche (10a) und die zweite Oberfläche (11a) verbindet, und
wobei der erste Puffer (31) die zweite und dritte Oberfläche (11a, 12a) des Spulenkörpers (110) berührt.

11. Linsenbewegungsvorrichtung nach Anspruch 7, wobei die obere Oberfläche der Basis (210) eine Oberfläche (42D) umfasst, die die erste Oberfläche (42A) und die zweite Oberfläche (42B) verbindet, und
wobei der zweite Puffer (32) die zweite Oberfläche (42B) und die Oberfläche (42D) der Basis (210) berührt.

12. Linsenbewegungsvorrichtung nach Anspruch 7, wobei der zweite Puffer (32) von dem zweiten Stopper (23) beabstandet ist.

13. Linsenbewegungsvorrichtung nach einem der Ansprüche 1 bis 5, umfassend:
einen zweiten Puffer (32), der auf einer oberen Oberfläche der Basis (210) angeordnet ist, und
ein unteres elastisches Element (160), das einen zweiten inneren Rahmen (161) umfasst, der mit einem unteren Abschnitt des Spulenkörpers (110) gekoppelt ist, einen zweiten äußeren Rahmen (162), der mit einem unteren Abschnitt des Gehäuses (140) gekoppelt ist, und einen zweiten Rahmenverbindungsabschnitt (163), der den zweiten inneren Rahmen (161) und den zweiten äußeren Rahmen (162) verbindet,
wobei der zweite Puffer (32) nicht mit dem zweiten Rahmenverbindungsabschnitt (163) in der Richtung der optischen Achse überlappt wird.

14. Linsenbewegungsvorrichtung nach einem der Ansprüche 1 bis 13, wobei der erste Puffer (31) aus Gummi, Silikon, Schaumgummi, Polyacetal oder Polyoxymethylen oder Urethan hergestellt ist.

15. Kameramodul, umfassend:
eine Linse;
Linsenbewegungsvorrichtung (100) nach einem der Ansprüche 1 bis 14; und
einen Bildsensor (810).

## Revendications

1. Appareil de déplacement de lentille comprenant :
un élément de recouvrement (300) comprenant une plaque supérieure (301) et une plaque latérale (302) reliée à la plaque supérieure (301) ;
un boîtier (140) disposé dans l'élément de recouvrement (300) ;
une bobine (110) disposée dans le boîtier (140) ;
un élément élastique supérieur (150) comprenant un premier cadre intérieur (151) accouplé à une partie supérieure de la bobine (110), un premier cadre extérieur (152) accouplé à une partie supérieure du boîtier (140), et une première partie de liaison de cadre (153) reliant le premier cadre intérieur (151) et le premier cadre extérieur (152) ;
un enroulement (120) accouplé à la bobine (110) ;
un aimant (130) disposé sur le boîtier (140), l'aimant (130) étant opposé à l'enroulement (120) ;
une base (210) disposée sous la bobine (110) ; et
un premier tampon (31) disposé sur une surface supérieure de la bobine (110) correspondant ou opposé à la plaque supérieure (301) de l'élément de recouvrement (300),
dans lequel la bobine (110) comprend un renfoncement d'échappement (112a) formé dans une région de la surface supérieure de la bobine (110) qui correspond à la première partie de liaison de cadre (153) dans une direction d'axe optique,
dans lequel le premier tampon (31) est disposé dans le renfoncement d'échappement (112a),
dans lequel le premier tampon (31) ne chevauche pas la première partie de liaison de cadre (153) dans la direction d'axe optique, et est espacé de la première partie de liaison de cadre (153),
dans lequel l'élément de recouvrement (300) comprend un bossage (303) s'étendant dans une direction allant de la plaque supérieure (301) à la bobine (110), et
une distance entre le bossage (303) et la surface supérieure de la bobine (110) dans la direction d'axe optique est égale ou inférieure à une distance entre le premier tampon (31) et une surface intérieure de la plaque supérieure (301) de l'élément de recouvrement (300) dans la direction d'axe optique.

2. Appareil de déplacement de lentille selon la revendication 1, dans lequel la surface supérieure de la bobine (110) comprend :
une première surface (10a) ; et
une deuxième surface (11a) ayant une marche formée avec la première surface (10a) dans la direction d'axe optique, la deuxième surface (11a) étant située plus bas que la première surface (10a), et
le premier tampon (31) est disposé sur la deuxième surface (11a).

3. Appareil de déplacement de lentille selon l'une quelconque des revendications 1 à 2, dans lequel la bobine (110) est pourvue, dans sa surface supérieure, d'un renfoncement (119), au moins une partie du bossage (303) est disposée dans le renfoncement (119), et une distance (d1) entre le fond du renfoncement (119) et l'au moins une partie du bossage (303) dans la direction d'axe optique est égale ou inférieure à une distance entre le premier tampon (31) et la surface intérieure de la plaque supérieure (301) de l'élément de recouvrement (300) dans la direction d'axe optique.

4. Appareil de déplacement de lentille selon la revendication 2, dans lequel la deuxième surface (11a) est pourvue d'un renfoncement (119), au moins une partie du bossage (303) est disposée dans le renfoncement (119), et une distance (d1) entre un fond du renfoncement (119) et l'au moins une partie du bossage (303) dans la direction d'axe optique est égale ou inférieure à une distance entre le premier tampon (31) et la surface intérieure de la plaque supérieure (301) de l'élément de recouvrement (300) dans la direction d'axe optique.

5. Appareil de déplacement de lentille selon l'une quelconque des revendications 1 à 4, dans lequel une rigidité du premier tampon (31) est inférieure à une rigidité de l'élément de recouvrement (300) et à une rigidité de la bobine (110).

6. Appareil de déplacement de lentille selon l'une quelconque des revendications 1 à 5, comprenant un second tampon (32) disposé sur une surface supérieure de la base (210),
dans lequel une première butée (15A) est prévue sur une surface inférieure de la bobine (110),
dans lequel une seconde butée (23) est prévue sur la surface supérieure de la base (210) de manière à correspondre ou à être opposée à la première butée (15A) dans la direction d'axe optique, et
dans lequel une distance (d3) entre la première butée (15A) et la seconde butée (23) dans la direction d'axe optique est égale ou inférieure à une distance (d2) entre le second tampon (32) et la surface inférieure de la bobine (110) dans la direction d'axe optique.

7. Appareil de déplacement de lentille selon la revendication 6, dans lequel la surface supérieure de la base (210) comprend une première surface (42A) et une deuxième surface (42B) ayant une marche formée avec la première surface (42A) dans la direction d'axe optique, la deuxième surface (42B) étant située plus bas que la première surface (42A), et
la seconde butée (23) et le second tampon (32) sont disposés sur la deuxième surface (42B).

8. Appareil de déplacement de lentille selon la revendication 6, dans lequel une rigidité du second tampon (32) est inférieure à une rigidité de la base (210) et à une rigidité de la bobine (110).

9. Appareil de déplacement de lentille selon l'une quelconque des revendications 1 à 8, dans lequel le premier tampon (31) ne chevauche pas le bossage (303) de l'élément de recouvrement (300) dans la direction d'axe optique.

10. Appareil de déplacement de lentille selon la revendication 2, dans lequel la surface supérieure de la bobine (110) comprend une troisième surface (12a) reliant la première surface (10a) et la deuxième surface (11a), et
dans lequel le premier tampon (31) entre en contact avec les deuxième et troisième surfaces (11a, 12a) de la bobine (110).

11. Appareil de déplacement de lentille selon la revendication 7, dans lequel la surface supérieure de la base (210) comprend une surface (42D) reliant la première surface (42A) et la deuxième surface (42B), et
dans lequel le second tampon (32) entre en contact avec la deuxième surface (42B) et la surface (42D) de la base (210).

12. Appareil de déplacement de lentille selon la revendication 7, dans lequel le second tampon (32) est espacé de la seconde butée (23).

13. Appareil de déplacement de lentille selon l'une quelconque des revendications 1 à 5, comprenant :
un second tampon (32) disposé sur une surface supérieure de la base (210), et
un élément élastique inférieur (160) comprenant un second cadre intérieur (161) accouplé à une partie inférieure de la bobine (110), un second cadre extérieur (162) accouplé à une partie inférieure du boîtier (140), et une seconde partie de liaison de cadre (163) reliant le second cadre intérieur (161) et le second cadre extérieur (162),
dans lequel le second tampon (32) ne chevauche pas la seconde partie de liaison de cadre (163) dans la direction d'axe optique.

14. Appareil de déplacement de lentille selon l'une quelconque des revendications 1 à 13, dans lequel le premier tampon (31) est en caoutchouc, en silicone, en caoutchouc mousse, en polyacétal ou en polyoxyméthylène, ou en uréthane.

15. Module de caméra comprenant :
une lentille ;
un appareil de déplacement de lentille (100) selon les revendications 1 à 14 ;
et
un capteur d'image (810).
